(19) Europäisches Patentamt
European Patent Office
Office européen des brevets

(11) **EP 4 709 003 A1**

(12) **EUROPEAN PATENT APPLICATION**
published in accordance with Art. 153(4) EPC

(43) Date of publication:
**11.03.2026 Bulletin 2026/11**

(21) Application number: **24809925.1**

(22) Date of filing: **12.01.2024**

(51) International Patent Classification (IPC):
***H04W 72/0453*** *(2023.01)*

(52) Cooperative Patent Classification (CPC):
**H04L 5/00; H04W 72/0453**

(86) International application number:
**PCT/CN2024/072122**

(87) International publication number:
**WO 2024/239674 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.05.2023 CN 202310608839**

(71) Applicant: **Huawei Technologies Co., Ltd.
Shenzhen, Guangdong 518129 (CN)**

(72) Inventors:
• **LI, Ying
Shenzhen, Guangdong 518129 (CN)**
• **HU, Mengshi
Shenzhen, Guangdong 518129 (CN)**
• **GAN, Ming
Shenzhen, Guangdong 518129 (CN)**
• **YU, Jian
Shenzhen, Guangdong 518129 (CN)**
• **MAO, Zhi
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD, APPARATUS AND SYSTEM**

(57) This application relates to a communication method, apparatus, and system. An access point device sends a trigger frame, where a first uplink resource allocated to a first station device by using the trigger frame is located on a first channel, the first channel includes a primary 320 MHz channel and a secondary 320 MHz channel, and when a number of subcarriers occupied by the first uplink resource is less than or equal to $4\times996$, a first field included in the trigger frame indicates that the first uplink resource is located on the primary 320 MHz channel or the secondary 320 MHz channel. This application may be applied to a wireless local area network system that supports 802.11 series protocols such as a next-generation Wi-Fi protocol of IEEE 802.11ax like 802.11be, Wi-Fi 7, or EHT, a next generation of 802.1 The like Wi-Fi 8 or UHR, and Wi-Fi AI, and may be further applied to a UWB-based wireless personal area network system or a sensing system.

FIG. 5

EP 4 709 003 A1

EP 4 709 003 A1

**Description**

CROSS-REFERENCE TO RELATED APPLICATIONS

This application claims priority to Chinese Patent Application No. 202310608839.2, filed with the China National Intellectual Property Administration on May 25, 2023 and entitled "COMMUNICATION METHOD, APPARATUS, AND SYSTEM", which is incorporated herein by reference in its entirety.

TECHNICAL FIELD

This application relates to the field of communication technologies, and in particular, to a communication method, apparatus, and system.

BACKGROUND

Usually, a station (station, STA) performs uplink data transmission after obtaining sending permission through channel contention, for example, preempting a channel in an enhanced distributed channel access (enhanced distributed channel access, EDCA) manner. In a trigger frame-based scheduled uplink transmission method introduced in a communication protocol, an access point (access point, AP) first sends a trigger frame, where the trigger frame indicates a resource unit (resource unit, RU) or a multiple resource unit (multiple resource unit, MRU) allocated to the STA. The STA indicates, in the trigger frame, the RU or the MRU to send uplink data.

Currently, the trigger frame can indicate only an RU or an MRU in a 320 MHz channel bandwidth. If the RU or the MRU is located on a channel of a larger bandwidth, the trigger frame cannot indicate the RU or the MRU.

SUMMARY

Embodiments of this application provide a communication method, apparatus, and system, to indicate a resource in a larger channel bandwidth.

According to a first aspect, a first communication method is provided. The method may be performed by an access point device (for example, an AP) or a chip system. The chip system can implement a function of the access point device. The method includes: sending a trigger frame, where the trigger frame is used to allocate an uplink resource to at least one station device, a first uplink resource allocated to a first station device in the at least one station device is located on a first channel, a bandwidth of the first channel is greater than 320 MHz, the trigger frame includes a first field, and when a number of subcarriers occupied by the first uplink resource is less than (or less than or equal to) $4 \times 996$, the first field indicates that the first uplink resource is located on a first subchannel or a second subchannel included in the first channel, or when a number of subcarriers occupied by the first uplink resource is greater than or equal to (or greater than) $4 \times 996$, the first field indicates a subcarrier that is not occupied by the first uplink resource on the first channel; and receiving uplink data from the first station device on the first uplink resource.

In this embodiment of this application, the first field is introduced into the trigger frame. The first field may indicate the subcarrier that is not occupied by the first uplink resource on the first channel, or indicate that the allocated uplink resource is located on the first subchannel or the second subchannel. For example, a bandwidth of the first subchannel is 320 MHz, and a bandwidth of the second subchannel is 320 MHz or 160 MHz. This is equivalent to that a resource in a channel bandwidth of 480 MHz, 640 MHz, or larger can be indicated. In this way, a format of the trigger frame can be adapted to a communication scenario with a larger channel bandwidth.

In an optional implementation, the bandwidth of the first channel is 640 MHz, the first subchannel is a primary 320 MHz channel, and the second subchannel is a secondary 320 MHz channel. In this embodiment of this application, the first field is introduced into the trigger frame, and the first field may indicate that the allocated uplink resource is located on the primary 320 MHz channel or the secondary 320 MHz channel. This is equivalent to that a resource in a 640 MHz channel bandwidth can be indicated. In this way, the format of the trigger frame can be adapted to the communication scenario with a larger channel bandwidth.

In an optional implementation, the trigger frame further includes a PS160 field, the primary 320 MHz channel includes a primary 160 MHz channel and a secondary 160 MHz channel, the secondary 320 MHz channel includes a first 160 MHz channel and a second 160 MHz channel, and when the number of subcarriers occupied by the first uplink resource is less than or equal to $2 \times 996$, the first field and the PS160 field jointly indicate that the first uplink resource is located on one of the following channels: the primary 160 MHz channel, the secondary 160 MHz channel, the first 160 MHz channel, or the second 160 MHz channel. If the number of subcarriers occupied by the first uplink resource is less than or equal to $2 \times 996$, it indicates that the bandwidth of the first uplink resource is less than or equal to 160 MHz. The primary 320 MHz channel and the secondary 320 MHz channel each may be further divided into two 160 MHz bandwidth channels, and

2

a 160 MHz channel on which the first uplink resource is located may be indicated by the PS160 field, so that the first uplink resource is indicated more accurately.

In an optional implementation, the trigger frame further includes a resource unit allocation field, the primary 160 MHz channel includes a primary 80 MHz channel and a secondary 80 MHz channel, the secondary 160 MHz channel includes a first 80 MHz channel and a second 80 MHz channel, the first 160 MHz channel includes a third 80 MHz channel and a fourth 80 MHz channel, the second 160 MHz channel includes a fifth 80 MHz channel and a sixth 80 MHz channel, and when the number of subcarriers occupied by the first uplink resource is less than or equal to 996, the first field, the PS160 field, and the resource unit allocation field jointly indicate that the first uplink resource is located on one of the following channels: the primary 80 MHz channel, the secondary 80 MHz channel, the first 80 MHz channel, the second 80 MHz channel, the third 80 MHz channel, the fourth 80 MHz channel, the fifth 80 MHz channel, or the sixth 80 MHz channel. If the number of subcarriers occupied by the first uplink resource is less than or equal to 996, it indicates that the bandwidth of the first uplink resource is less than or equal to 80 MHz. In this case, the 160 MHz channel may be further divided into two 80 MHz bandwidth channels, and an 80 MHz channel on which the first uplink resource is located may be indicated by the resource unit allocation field, so that the first uplink resource is indicated more accurately.

In an optional implementation, the bandwidth of the first channel is 480 MHz, the first subchannel is a primary 320 MHz channel, the second subchannel is a first secondary 160 MHz channel, the primary 320 MHz channel includes a primary 160 MHz channel and a second secondary 160 MHz channel, the trigger frame further includes a PS160 field, and when the number of subcarriers occupied by the first uplink resource is less than or equal to $2 \times 996$, the first field and the PS160 field jointly indicate that the first uplink resource is located on the primary 160 MHz channel or the second secondary 160 MHz channel. In this embodiment of this application, the first field is introduced into the trigger frame, and the first field and the PS160 field may indicate that the uplink resource allocated to the station device is located on the primary 160 MHz channel, the first secondary 160 MHz channel, or the second secondary 160 MHz channel. This is equivalent to that a resource in a 480 MHz channel bandwidth can be indicated. In this way, the format of the trigger frame can be adapted to the communication scenario with a larger channel bandwidth.

In an optional implementation, the trigger frame further includes a resource unit allocation field, the primary 160 MHz channel includes a primary 80 MHz channel and a secondary 80 MHz channel, the second secondary 160 MHz channel includes a first 80 MHz channel and a second 80 MHz channel, the first secondary 160 MHz channel includes a third 80 MHz channel and a fourth 80 MHz channel, and when the number of subcarriers occupied by the first uplink resource is less than or equal to 996, the first field, the PS160 field, and the resource unit allocation field jointly indicate that the first uplink resource is located on one of the following channels: the primary 80 MHz channel, the secondary 80 MHz channel, the first 80 MHz channel, the second 80 MHz channel, the third 80 MHz channel, or the fourth 80 MHz channel. If the number of subcarriers occupied by the first uplink resource is less than or equal to 996, it indicates that the bandwidth of the first uplink resource is less than or equal to 80 MHz. In this case, the 160 MHz channel may be further divided into two 80 MHz bandwidth channels, and an 80 MHz channel on which the first uplink resource is located may be indicated by the resource unit allocation field, so that the first uplink resource is indicated more accurately.

In an optional implementation, the trigger frame further includes a resource unit allocation field and a PS160 field, and that the first field indicates the resource that is not occupied by the first uplink resource on the first channel includes: The first field, the resource unit allocation field, and the PS160 field indicate the resource that is not occupied by the first uplink resource on the first channel. In this embodiment of this application, the first field is introduced into the trigger frame. The first field, the resource unit allocation field, and the PS160 field may indicate a position of the uplink resource allocated to the station device. This is equivalent to that a resource in a channel bandwidth greater than 320 MHz can be indicated. In this way, the format of the trigger frame can be adapted to the communication scenario with a larger channel bandwidth.

In an optional implementation, the first field, the resource unit allocation field, and the PS160 field indicate a first index corresponding to the first uplink resource, and a resource distribution manner corresponding to the first index is used to determine the position of the first uplink resource on the first channel. The first index may uniquely indicate one resource distribution manner, and the resource distribution manner indicates the position of the first uplink resource.

In an optional implementation, the bandwidth of the first channel is 640 MHz.

In an optional implementation, the first uplink resource is an MRU occupying $4 \times 996 + 484$ subcarriers, the first uplink resource does not occupy $2 \times 996$ consecutive subcarriers, 996 consecutive subcarriers, or 484 consecutive subcarriers on the first channel, the first field indicates that the $2 \times 996$ subcarriers are located in a low-frequency 320 MHz area or a high-frequency 320 MHz area of the first channel, the PS160 field indicates that the 996 subcarriers are located in a low-frequency 240 MHz area or a high-frequency 240 MHz area of the first channel excluding a position in which the $2 \times 996$ subcarriers are located, and a first subfield included in the resource unit allocation field indicates that the 484 subcarriers are located in a low-frequency 200 MHz area or a high-frequency 200 MHz area of the first channel excluding positions in which the $2 \times 996$ subcarriers and the 996 subcarriers are located. In this embodiment of this application, a "puncturing" manner is used, which is equivalent to puncturing three holes from the first channel, and the three holes respectively occupy $2 \times 996$ subcarriers, 996 subcarriers, and 484 subcarriers. In this case, the first field, the PS160 field, and the resource unit allocation field may indicate positions of the three holes, so that the first station device can determine the position of the first uplink resource. Compared with the first uplink resource, resources occupied by the punctured holes are fewer, and indicating the positions of the punctured holes can simplify indication content, and reduce a number of bits used for resource indicating.

In an optional implementation, the first uplink resource is an MRU occupying 5×996 subcarriers, an MRU occupying 5×996+484 subcarriers, or an MRU occupying 6×996+484 subcarriers, the first uplink resource does not occupy a first number of consecutive subcarriers and a second number of consecutive subcarriers on the first channel, the first field indicates that the first number of subcarriers are located in a low-frequency 320 MHz area or a high-frequency 320 MHz area of the first channel, the PS160 field and a first subfield included in the resource unit allocation field jointly indicate a first frequency domain unit in which the second number of subcarriers are located on the first channel, or the PS160 field and a first subfield included in the resource unit allocation field jointly indicate a first frequency domain unit in which the second number of subcarriers are located in a remaining area other than a position in which the first number of subcarriers are located on the first channel, the first channel includes four first frequency domain units, and the first frequency domain unit occupies 2×996 consecutive subcarriers. This case is equivalent to puncturing two holes on the first channel, and the two holes respectively occupy the first number of subcarriers and the second number of subcarriers. The first field, the PS160 field, and the resource unit allocation field may indicate positions of the two holes, so that the first station device can determine the position of the first uplink resource.

In an optional implementation, the first uplink resource is the MRU occupying 5×996 subcarriers, the first number is 2×996, and the second number is 996; the first uplink resource is the MRU occupying 5×996+484 subcarriers, the first number is 2×996, and the second number is 484; or the first uplink resource is the MRU occupying 6×996+484 subcarriers, the first number is 996, and the second number is 484.

In an optional implementation, the first uplink resource is an MRU occupying 6×996 subcarriers, an MRU occupying 7×996 subcarriers, or an MRU occupying 7×996+484 subcarriers, the first uplink resource does not occupy a third number of consecutive subcarriers on the first channel, and at least two of the first field, a first subfield in the resource allocation resource, or the PS160 field jointly indicate a first frequency domain unit in which the third number of subcarriers are located, where the first channel includes four first frequency domain units, and the first frequency domain unit occupies 2×996 consecutive subcarriers. This case is equivalent to puncturing one hole on the first channel, and the hole occupies the third number of subcarriers. The first field, the PS160 field, and the resource unit allocation field may indicate a position of the hole, so that the first station device can determine the position of the first uplink resource.

In an optional implementation, the first uplink resource is the MRU occupying 6×996 subcarriers, and the third number is 2×996; the first uplink resource is the MRU occupying 7×996 subcarriers, and the third number is 996; or the first uplink resource is the MRU occupying 7×996+484 subcarriers, and the third number is 484.

In an optional implementation, the first uplink resource is an MRU occupying 8×996 subcarriers, and the first field, a first subfield in the resource allocation resource, and the PS160 field jointly indicate a position of the first uplink resource on the first channel. The first uplink resource occupies 8×996 subcarriers, which is equivalent to that the first uplink resource occupies a full bandwidth of 640 MHz. In this case, puncturing does not need to be performed on the first channel. The first field, the first subfield in the resource allocation resource, and the PS160 field may jointly indicate the position of the first uplink resource.

In an optional implementation, the bandwidth of the first channel is 480 MHz.

In an optional implementation, the first uplink resource is an MRU occupying 2×996+484 subcarriers, the first uplink resource does not occupy 2×996 consecutive subcarriers, 996 consecutive subcarriers, or 484 consecutive subcarriers on the first channel, the first field indicates that the 2×996 subcarriers are located in a low-frequency 240 MHz area or a high-frequency 240 MHz area of the first channel, the PS160 field indicates that the 996 subcarriers are located in a low-frequency 160 MHz area or a high-frequency 160 MHz area of the first channel excluding a position in which the 2×996 subcarriers are located, and a first subfield included in the resource unit allocation field indicates that the 484 subcarriers are located in a low-frequency 120 MHz area or a high-frequency 120 MHz area of the first channel excluding positions in which the 2×996 subcarriers and the 996 subcarriers are located. In this embodiment of this application, a "puncturing" manner is used, which is equivalent to puncturing three holes from the first channel, and the three holes respectively occupy 2×996 subcarriers, 996 subcarriers, and 484 subcarriers. In this case, the first field, the PS160 field, and the resource unit allocation field may indicate positions of the three holes, so that the first station device can determine the position of the first uplink resource. Compared with the first uplink resource, resources occupied by the punctured holes are fewer, and indicating the positions of the punctured holes can simplify indication content, and reduce a number of bits used for resource indicating.

In an optional implementation, the first uplink resource is an MRU occupying 3×996 subcarriers or an MRU occupying 3×996+484 subcarriers, the first uplink resource does not occupy a fourth number of consecutive subcarriers and a fifth number of consecutive subcarriers on the first channel, the first field indicates that the fourth number of subcarriers are located in a low-frequency 240 MHz area or a high-frequency 240 MHz area of the first channel, and the PS160 field and a first subfield included in the resource unit allocation field jointly indicate a second frequency domain unit in which the fifth number of subcarriers are located in a remaining area other than a position in which the fourth number of

**EP 4 709 003 A1**

subcarriers are located on the first channel, where the first channel includes six second frequency domain units, and the second frequency domain unit occupies 996 consecutive subcarriers. This case is equivalent to puncturing two holes on the first channel, and the two holes respectively occupy the third number of subcarriers and the fourth number of subcarriers. The first field, the PS160 field, and the resource unit allocation field may indicate positions of the two holes, so that the first station device can determine the position of the first uplink resource.

In an optional implementation, the first uplink resource is the MRU occupying 3×996 subcarriers, the fourth number is 2×996, and the fifth number is 996; or the first uplink resource is the MRU occupying 3×996+484 subcarriers, the fourth number is 2×996, and the fifth number is 484.

In an optional implementation, the first uplink resource is an MRU occupying 4×996+484 subcarriers, the first uplink resource does not occupy 996 consecutive subcarriers or 484 consecutive subcarriers on the first channel, the first field indicates that the 996 subcarriers are located in a low-frequency 240 MHz area or a high-frequency 240 MHz area of the first channel, and the PS160 field and a first subfield included in the resource unit allocation field jointly indicate a first frequency domain unit in which the 484 subcarriers are located on the first channel, or the PS160 field and a first subfield included in the resource unit allocation field jointly indicate a third frequency domain unit in which the 484 subcarriers are located in a remaining area other than a position of the 996 subcarriers on the first channel, where the first frequency domain unit occupies 2×996 consecutive subcarriers, and/or the third frequency domain unit occupies 3×484 consecutive subcarriers, and the first channel includes four third frequency domain units. This case is equivalent to puncturing two holes on the first channel, and the two holes respectively occupy 996 subcarriers and 484 subcarriers. The first field, the PS160 field, and the resource unit allocation field may indicate positions of the two holes, so that the first station device can determine the position of the first uplink resource.

In an optional implementation, the first uplink resource is an MRU occupying 4×996 subcarriers, an RU occupying 4×996 subcarriers, an MRU occupying 5×996 subcarriers, or an MRU occupying 5×996+484 subcarriers, the first uplink resource does not occupy a sixth number of consecutive subcarriers on the first channel, and the first field, a first subfield in the resource allocation resource, and the PS160 field jointly indicate a position of the sixth number of subcarriers on the first channel. This case is equivalent to puncturing one hole on the first channel, and the hole occupies the fifth number of subcarriers. The first field, the PS160 field, and the resource unit allocation field may indicate a position of the hole, so that the first station device can determine the position of the first uplink resource.

In an optional implementation, the first uplink resource is an MRU occupying 5×996 subcarriers or an MRU occupying 5×996+484 subcarriers, the first uplink resource does not occupy a sixth number of consecutive subcarriers on the first channel, the first field indicates that the 996 subcarriers are located in a low-frequency 240 MHz area or a high-frequency 240 MHz area of the first channel, and a first subfield in the resource allocation resource and the PS160 field jointly indicate a second frequency domain unit in which the sixth number of subcarriers are located in an eighth area, where the first channel includes six second frequency domain units, and the second frequency domain unit occupies 996 consecutive subcarriers. This case is equivalent to puncturing one hole on the first channel, and the hole occupies the sixth number of subcarriers. The first field, the PS160 field, and the resource unit allocation field may indicate a position of the hole, so that the first station device can determine the position of the first uplink resource.

In an optional implementation, the frequency domain unit occupies 996 consecutive subcarriers.

In an optional implementation, the first uplink resource is the MRU occupying 4×996 subcarriers or the RU occupying 4×996 subcarriers, and the sixth number is 2×996; the first uplink resource is the MRU occupying 5×996 subcarriers, and the sixth number is 996; or the first uplink resource is the MRU occupying 5×996+484 subcarriers, and the sixth number is 484.

In an optional implementation, the first uplink resource is an MRU occupying 6×996 subcarriers, and the first field, a first subfield in the resource allocation resource, and the PS160 field jointly indicate a position of the first uplink resource on the first channel. The first uplink resource occupies 8×996 subcarriers, which is equivalent to that the first uplink resource occupies a full bandwidth of 480 MHz. In this case, puncturing does not need to be performed on the first channel. The first field, the first subfield in the resource allocation resource, and the PS160 field may jointly indicate the position of the first uplink resource.

In an optional implementation, the first field is included in a first user information field in the trigger frame, and the first user information field further includes an association identifier of the first station device. The first field indicates the uplink resource allocated to the first station device, and the first user information field is a field associated with the first station device. Therefore, the first field may be included in the first user information field, so that the first station device can determine the first uplink resource based on the first field.

In an optional implementation, the first field occupies a reserved bit in the first user information field, or the first field is located in a spatial stream allocation/random access resource unit information field included in the first user information field. The first field may exist in the first user information field in different forms, and this is flexible. In addition, the first field occupies an original bit in the first user information field, and a new bit may not be added to the first user information field. This facilitates compatibility between the solution in embodiments of this application and the conventional technology.

5

In an optional implementation, the reserved bit includes a 26th bit in the first user information field.

According to a second aspect, a second communication method is provided. The method may be performed by a station device (for example, a STA) or a chip system. The chip system can implement a function of the station device. The station device is, for example, a first station device. The method includes: receiving a trigger frame from an access point device; determining, based on a first field included in the trigger frame, a first uplink resource used to send uplink data, where the first uplink resource is located on a first channel, a bandwidth of the first channel is greater than 320 MHz, and when a number of subcarriers occupied by the first uplink resource is less than (or less than or equal to) $4 \times 996$, the first field indicates that the first uplink resource is located on a first subchannel or a second subchannel included in the first channel, or when a number of subcarriers occupied by the first uplink resource is greater than or equal to (or greater than) $4 \times 996$, the first field indicates a subcarrier that is not occupied by the first uplink resource on the first channel; and sending the uplink data to the access point device on the first uplink resource.

In an optional implementation, the bandwidth of the first channel is 640 MHz, the first subchannel is a primary 320 MHz channel, and the second subchannel is a secondary 320 MHz channel.

In an optional implementation, the trigger frame further includes a PS160 field, the primary 320 MHz channel includes a primary 160 MHz channel and a secondary 160 MHz channel, the secondary 320 MHz channel includes a first 160 MHz channel and a second 160 MHz channel, and determining, based on the first field included in the trigger frame, the first uplink resource used to send the uplink data includes: determining the first uplink resource based on the first field and the PS160 field, where when the number of subcarriers occupied by the first uplink resource is less than or equal to $2 \times 996$, the first field and the PS160 field jointly indicate that the first uplink resource is located on one of the following channels: the primary 160 MHz channel, the secondary 160 MHz channel, the first 160 MHz channel, or the second 160 MHz channel.

In an optional implementation, the trigger frame further includes a resource unit allocation field, the primary 160 MHz channel includes a primary 80 MHz channel and a secondary 80 MHz channel, the secondary 160 MHz channel includes a first 80 MHz channel and a second 80 MHz channel, the first 160 MHz channel includes a third 80 MHz channel and a fourth 80 MHz channel, the second 160 MHz channel includes a fifth 80 MHz channel and a sixth 80 MHz channel, and determining the first uplink resource based on the first field and the PS160 field includes: determining the first uplink resource based on the first field, the PS160 field, and the resource unit allocation field, where when the number of subcarriers occupied by the first uplink resource is less than or equal to 996, the first field, the PS160 field, and the resource unit allocation field jointly indicate that the first uplink resource is located on one of the following channels: the primary 80 MHz channel, the secondary 80 MHz channel, the first 80 MHz channel, the second 80 MHz channel, the third 80 MHz channel, the fourth 80 MHz channel, the fifth 80 MHz channel, or the sixth 80 MHz channel.

In an optional implementation, determining the first uplink resource based on the first field, the resource unit allocation field, and the PS160 field includes: determining a fourth parameter, a third parameter, a second parameter, and a first parameter based on the first field, the resource unit allocation field, and the PS160 field, where the fourth parameter indicates an index of an 80 MHz channel on which the first uplink resource is located, the third parameter indicates that the first uplink resource is located on a first 320 MHz channel or a second 320 MHz channel, the third parameter and the second parameter jointly indicate that the first uplink resource is located on one of the following channels: the first 160 MHz channel, the second 160 MHz channel, a third 160 MHz channel, or a fourth 160 MHz channel, the third parameter, the second parameter, and the first parameter jointly indicate that the first uplink resource is located on one of the following channels: the first 80 MHz channel, the second 80 MHz channel, the third 80 MHz channel, the fourth 80 MHz channel, the fifth 80 MHz channel, the sixth 80 MHz channel, a seventh 80 MHz channel, or an eighth 80 MHz channel, the first 320 MHz channel and the primary 320 MHz channel are a same channel, the second 320 MHz channel and the secondary 320 MHz channel are a same channel, the third 160 MHz channel and the primary 160 MHz channel are a same channel, the fourth 160 MHz channel and the secondary 160 MHz channel are a same channel, the seventh 80 MHz channel and the primary 80 MHz channel are a same channel, and the eighth 80 MHz channel and the secondary 80 MHz channel are a same channel; and determining the first uplink resource based on the fourth parameter, the third parameter, the second parameter, and the first parameter. The first station device may determine corresponding parameters based on the first field, the resource unit allocation field, and the PS160 field that are included in the trigger frame, to determine the first uplink resource based on these parameters.

In an optional implementation, determining the fourth parameter, the third parameter, the second parameter, and the first parameter based on the first field, the resource unit allocation field, and the PS160 field includes: determining the fourth parameter, the third parameter, the second parameter, and the first parameter based on a first mapping relationship, the first field, the resource unit allocation field, and the PS160 field, where the first mapping relationship includes a mapping relationship between the first field, the resource unit allocation field, the PS160 field, the fourth parameter, the third parameter, the second parameter, and the first parameter. For example, the first mapping relationship is predefined in a protocol, or is pre-configured in the first station device and the access point device, or may be configured by the access point device for the first station device. It is simple for the first station device to determine a corresponding parameter by using the first mapping relationship.

In an optional implementation, determining the fourth parameter, the third parameter, the second parameter, and the first parameter based on the first field, the resource unit allocation field, and the PS160 field includes: the fourth parameter satisfies the following relationship: $N=4\times X2+2\times X1+X0$; the third parameter satisfies the following relationship: $X2=C320 \oplus PS320$; the second parameter satisfies the following relationship: $X1= \overline{C160} \cdot PS160 + C160 \cdot (C160\odot PS320)$; and the first parameter satisfies the following relationship: $X0=\overline{C80} \cdot B0 + C80 \cdot [\overline{B0} \cdot (PS20\&PS160) + B0 \cdot (PS320||PS160)]$, where N indicates the fourth parameter, X2 indicates the third parameter, X1 indicates the second parameter, X0 indicates the first parameter, C320 indicates a relationship of the primary 320 MHz channel and the secondary 320 MHz channel with the first 320 MHz channel and the second 320 MHz channel, C160 indicates a relationship of the primary 160 MHz channel and the secondary 160 MHz channel with the third 160 MHz channel and the fourth 160 MHz channel, C80 indicates a relationship of the primary 80 MHz channel and the secondary 80 MHz channel with the seventh 80 MHz channel and the eighth 80 MHz channel, PS320 indicates a value of the first field, B0 indicates a value of a first subfield included in the resource unit allocation field, $\overline{Z}$ indicates performing a logical NOT operation on Z, $\oplus$ indicates an exclusive OR operation, $\odot$ indicates an exclusive NOR operation, & indicates a logical AND operation, and || indicates a logical OR operation. In this manner, the first station device may not need to obtain the first mapping relationship, but may calculate the corresponding parameters according to the foregoing formulas. This can reduce a process in which the first station device obtains the first mapping relationship, and can also save space for storing the first mapping relationship.

In an optional implementation, the method further includes: determining, based on a second mapping relationship, the fourth parameter, the third parameter, the second parameter, and the first parameter, a resource unit index corresponding to the first uplink resource. The second mapping relationship may include a mapping relationship between the first parameter, the second parameter, the third parameter, the fourth parameter, and the resource unit index. For example, the second mapping relationship is predefined in a protocol, or is pre-configured in the first station device and the access point device, or may be configured by the access point device for the first station device. A first index may be directly determined by using the second mapping relationship and the corresponding parameters, and the first uplink resource may be determined based on the first index. This is simple for the first station device. Alternatively, if the bandwidth of the first uplink resource is less than 80 MHz, the first station device may directly determine the first index corresponding to the first uplink resource (in addition, the fourth parameter, the third parameter, the second parameter, the first parameter, and the fourth parameter can also be determined) based on the first mapping relationship, the first field, the resource unit allocation field, and the PS160 field, to directly determine the first uplink resource.

In an optional implementation, the trigger frame further includes a PS160 field, and determining, based on the first field included in the trigger frame, the first uplink resource used to send the uplink data includes: determining, based on the first field and the PS160 field, the first uplink resource used to send the uplink data, where a bandwidth of the first channel is 480 MHz, a first subchannel is a primary 320 MHz channel, a second subchannel is a first secondary 160 MHz channel, the primary 320 MHz channel includes a primary 160 MHz channel and a second secondary 160 MHz channel, and when a number of subcarriers occupied by the first uplink resource is less than or equal to $2\times996$, the first field and the PS160 field jointly indicate that the first uplink resource is located on the primary 160 MHz channel or the second secondary 160 MHz channel.

In an optional implementation, the trigger frame further includes a resource unit allocation field, the primary 160 MHz channel includes a primary 80 MHz channel and a secondary 80 MHz channel, the second secondary 160 MHz channel includes a first 80 MHz channel and a second 80 MHz channel, the first secondary 160 MHz channel includes a third 80 MHz channel and a fourth 80 MHz channel, and determining, based on the first field and the PS160 field, the first uplink resource used to send the uplink data includes: determining the first uplink resource based on the first field, the PS160 field, and the resource unit allocation field, where when the number of subcarriers occupied by the first uplink resource is less than or equal to 996, the first field, the PS160 field, and the resource unit allocation field jointly indicate that the first uplink resource is located on one of the following channels: the primary 80 MHz channel, the secondary 80 MHz channel, the first 80 MHz channel, the second 80 MHz channel, the third 80 MHz channel, or the fourth 80 MHz channel.

In an optional implementation, determining the first uplink resource based on the first field, the resource unit allocation field, and the PS160 field includes: determining a fourth parameter, a third parameter, a second parameter, and a first parameter based on the first field, the resource unit allocation field, and the PS160 field, where the fourth parameter indicates an index of an 80 MHz channel on which the first uplink resource is located, the third parameter and the second parameter jointly indicate that the first uplink resource is located on one of the following channels: a first 160 MHz channel, a second 160 MHz channel, or a third 160 MHz channel, the third parameter, the second parameter, and the first parameter jointly indicate that the first uplink resource is located on one of the following channels: the first 80 MHz channel, the second 80 MHz channel, the third 80 MHz channel, the fourth 80 MHz channel, a fifth 80 MHz channel, or a sixth 80 MHz channel, the first 160 MHz channel and the primary 160 MHz channel are a same channel, the second 160 MHz channel and the second secondary 160 MHz channel are a same channel, the third 160 MHz channel and the first secondary 160 MHz channel are a same channel, the fifth 80 MHz channel and the primary 80 MHz channel are a same channel, and the sixth 80 MHz channel and the secondary 80 MHz channel are a same channel; and determining the first uplink resource based on the fourth parameter, the third parameter, the second parameter, and the first parameter. The first station device may determine corresponding parameters based on the first field, the resource unit allocation field, and the PS160 field that are included in the trigger frame, to determine the first uplink resource based on these parameters.

In an optional implementation, determining the fourth parameter, the third parameter, the second parameter, and the first parameter based on the first field, the resource unit allocation field, and the PS160 field includes: determining the fourth parameter, the third parameter, the second parameter, and the first parameter based on a first mapping relationship, the first field, the resource unit allocation field, and the PS160 field, where the first mapping relationship includes a mapping relationship between the first field, the resource unit allocation field, the PS160 field, the fourth parameter, the third parameter, the second parameter, and the first parameter. For example, the first mapping relationship is predefined in a protocol, or is pre-configured in the first station device and the access point device, or may be configured by the access point device for the first station device. It is simple for the first station device to determine a corresponding parameter by using the first mapping relationship.

In an optional implementation, determining the fourth parameter, the third parameter, the second parameter, and the first parameter based on the first field, the resource unit allocation field, and the PS160 field includes: the fourth parameter satisfies the following relationship: $N = 4 \times X2 + 2 \times X1 + X0$; the third parameter satisfies the following relationship: $X2 = \overline{C1} \cdot P320 + C1 \cdot [\overline{C2} \cdot (\overline{P320 \& PS160}) + C2 \cdot PS160]$; the second parameter satisfies the following relationship: $X1 = \overline{C2} \cdot PS160 + C2 \cdot (\overline{P320 \& PS160})$; and the first parameter satisfies the following relationship: $X0 = \overline{C80} \cdot B0 + C80 \cdot [\overline{B0} \cdot (\overline{P320 \& PS160}) + B0 \cdot (P320 || PS160)]$, where N indicates the fourth parameter, X2 indicates the third parameter, X1 indicates the second parameter, X0 indicates the first parameter, C1 and C2 jointly indicate a relationship of the primary 160 MHz channel, the second secondary 160 MHz channel, and the first secondary 160 MHz channel with the first 160 MHz channel, the second 160 MHz channel, and the third 160 MHz channel, C80 indicates a relationship of the primary 80 MHz channel and the secondary 80 MHz channel with the fifth 80 MHz channel and the sixth 80 MHz channel, P320 indicates a value of the first field, B0 indicates a value of a first subfield included in the resource unit allocation field, $\overline{Z}$ indicates performing a logical NOT operation on Z, $\oplus$ indicates an exclusive OR operation, $\odot$ indicates an exclusive NOR operation, & indicates a logical AND operation, and || indicates a logical OR operation. In this manner, the first station device may not need to obtain the first mapping relationship, but may calculate the corresponding parameters according to the foregoing formulas. This can reduce a process in which the first station device obtains the first mapping relationship, and can also save space for storing the first mapping relationship.

In an optional implementation, the method further includes: determining, based on a second mapping relationship, the fourth parameter, the third parameter, the second parameter, and the first parameter, a resource unit index corresponding to the first uplink resource. For example, the second mapping relationship is predefined in a protocol, or is pre-configured in the first station device and the access point device, or may be configured by the access point device for the first station device. A first index may be directly determined by using the second mapping relationship and the corresponding parameters, and the first uplink resource may be determined based on the first index. This is simple for the first station device. Alternatively, if the bandwidth of the first uplink resource is less than 80 MHz, the first station device may directly determine the first index corresponding to the first uplink resource (in addition, the third parameter, the second parameter, the first parameter, and the fourth parameter can also be determined) based on the first mapping relationship, the first field, the resource unit allocation field, and the PS160 field, to directly determine the first uplink resource.

In an optional implementation, the trigger frame further includes a resource unit allocation field and a PS160 field, and determining, based on the first field included in the trigger frame, the first uplink resource used to send the uplink data includes: determining the first uplink resource based on the first field, the resource unit allocation field, and the PS160 field, where the first field, the resource unit allocation field, and the PS160 field indicate a resource that is not occupied by the first uplink resource on the first channel.

In an optional implementation, determining the first uplink resource based on the first field, the resource unit allocation field, and the PS160 field includes: determining a first index corresponding to the first uplink resource based on the first field, the resource unit allocation field, and the PS160 field; and determining a position of the first uplink resource on the first channel based on a resource distribution manner corresponding to the first index.

In an optional implementation, determining the first index corresponding to the first uplink resource based on the first field, the resource unit allocation field, and the PS160 field includes: determining the first index corresponding to the first uplink resource based on a third mapping relationship, the first field, the resource unit allocation field, and the PS160 field, where the third mapping relationship includes a mapping relationship between the first field, the resource unit allocation field, the PS160 field, and a resource distribution manner index. For example, the third mapping relationship is predefined in a protocol, or is pre-configured in the first station device and the access point device, or may be configured by the access point device for the first station device. It is simple for the first station device to determine the first index by using the third mapping relationship.

In an optional implementation, the bandwidth of the first channel is 640 MHz.

In an optional implementation, determining the first index corresponding to the first uplink resource based on the first field, the resource unit allocation field, and the PS160 field includes: The first index satisfies the following relationship: $20 \times PS320 + 10 \times PS160 + 5 \times B0 + K - Y1 + 1$, $6 \times PS320 + 4 \times PS160 + 2 \times B0 + K - Y6 + 1$, $12 \times PS320 + 8 \times PS160 + 4 \times B0 + K-$

Y8+1, 14×PS320+8×PS160+4×B0+K-Y13+1, 2xPS320+PS160+K-Y12+1, 4×PS320+2×PS160+B0+K-Y17+1, 8×PS320+4×PS160+2×B0+K-Y18+1, or K-Y20+1, where PS320 indicates a value of the first field, B0 indicates a value of a first subfield included in the resource unit allocation field, K indicates a value of a second subfield included in the resource unit allocation unit, Y1, Y6, Y8, Y13, Y12, Y17, Y18, and Y20 all indicate preset values of the second subfield, and the values indicated by Y1, Y6, Y8, Y13, Y12, Y17, Y18 and Y20 are all integers greater than 106 and less than or equal to 127. For example, the first station device may not need to obtain the third mapping relationship, but can determine the first index based on the foregoing relationship. This can reduce steps of obtaining the third mapping relationship by the first station device, and can also save space for storing the third mapping relationship.

In an optional implementation, the bandwidth of the first channel is 480 MHz.

In an optional implementation, determining the first index corresponding to the first uplink resource based on the first field, the resource unit allocation field, and the PS160 field includes: The first index satisfies the following relationship: 12×P320+4×PS160+4×B0+K-100+1, 4×P320+2×PS160+B0+K-104+1, 8×P320+4×PS160+2×B0+K-105+1, 10×P320+6×PS160+3×B0+K-Y1+1, 10×P320+8×PS160+4×B0+K-Y0+1, 2×P320+PS160+K-69, 4×P320+2×PS160+B0+K-Y4+1, 3×P320+2×PS160+B0+K-Y4+1, 8×P320+4×PS160+2×B0+K-Y5+1, or 6×P320+4×PS160+2×B0+K-Y5+1, where P320 indicates a value of the first field, B0 indicates a value of a first subfield included in the resource unit allocation field, K indicates a value of a second subfield included in the resource unit allocation unit, Y1, Y0, Y4, and Y5 all indicate preset values of the second subfield, and the values indicated by Y1, Y0, Y4 and Y5 are all integers greater than 106 and less than or equal to 127. For example, the first station device may not need to obtain the third mapping relationship, but can determine the first index based on the foregoing relationship. This can reduce steps of obtaining the third mapping relationship by the first station device, and can also save space for storing the third mapping relationship.

In an optional implementation, the first field is included in a first user information field in the trigger frame, and the first user information field further includes an association identifier of the first station device.

In an optional implementation, the first field occupies a reserved bit in the first user information field, or the first field is located in a spatial stream allocation/random access resource unit information field included in the first user information field.

In an optional implementation, the reserved bit includes a 26th bit in the first user information field.

For technical effect of the second aspect or the optional implementations, refer to the descriptions of technical effect of the first aspect or the corresponding implementations.

According to a third aspect, a communication apparatus is provided. The communication apparatus has a function of implementing behavior in the method embodiments in the first aspect. For beneficial effect, refer to the foregoing descriptions. Details are not described herein again.

The communication apparatus may be the access point device according to the first aspect, or an electronic device (for example, a chip system) configured in the access point device, or a larger device including the access point device. The access point device includes a corresponding means (means) or module for performing the foregoing method. For example, the communication apparatus includes a processing unit (or referred to as a processing module) and a transceiver unit (or referred to as a transceiver module).

For example, the transceiver unit is configured to send a trigger frame, where the trigger frame is used to allocate an uplink resource to at least one station device, a first uplink resource allocated to a first station device in the at least one station device is located on a first channel, a bandwidth of the first channel is greater than 320 MHz, the trigger frame includes a first field, and when a number of subcarriers occupied by the first uplink resource is less than (or less than or equal to) 4×996, the first field indicates that the first uplink resource is located on a first subchannel or a second subchannel included in the first channel, or when a number of subcarriers occupied by the first uplink resource is greater than or equal to (or greater than) 4×996, the first field indicates a subcarrier that is not occupied by the first uplink resource on the first channel; and the transceiver unit is further configured to receive uplink data from the first station device on the first uplink resource.

For another example, the transceiver unit is configured to send a trigger frame, where the trigger frame is used to allocate an uplink resource to at least one station device, a first uplink resource allocated to a first station device in the at least one station device is located on a first channel, a bandwidth of the first channel is 640 MHz, the first channel includes a primary 320 MHz channel and a secondary 320 MHz channel, the trigger frame includes a first field, and when a number of subcarriers occupied by the first uplink resource is less than or equal to 4×996, the first field indicates that the first uplink resource is located on the primary 320 MHz channel or the secondary 320 MHz channel; and the transceiver unit is further configured to receive uplink data from the first station device on the first uplink resource.

For another example, the transceiver unit is configured to send a trigger frame, where the trigger frame is used to allocate an uplink resource to at least one station device, a first uplink resource allocated to a first station device in the at least one station device is located on a first channel, a bandwidth of the first channel is 480 MHz, the first channel includes a primary 320 MHz channel and a first secondary 160 MHz channel, the primary 320 MHz channel includes a primary 160 MHz channel and a second secondary 160 MHz channel, the trigger frame includes a first field and a PS160 field, and when a number of subcarriers occupied by the first uplink resource is less than or equal to 2×996, the first field indicates that the first uplink resource is located on the primary 320 MHz channel or the first secondary 160 MHz channel, and the PS160 field indicates that the first uplink resource is located on the primary 160 MHz channel or the second secondary 160 MHz channel; and the transceiver unit is further configured to receive uplink data from the first station device on the first uplink resource.

For another example, the transceiver unit is configured to send a trigger frame, where the trigger frame is used to allocate an uplink resource to at least one station device, a first uplink resource allocated to a first station device in the at least one station device is located on a first channel, a bandwidth of the first channel is greater than 320 MHz, the trigger frame includes a first field, a resource unit allocation field, and a PS160 field, and the first field, the resource unit allocation field, and the PS160 field indicate a resource that is not occupied by the first uplink resource on the first channel, to determine a position of the first uplink resource on the first channel.

In an optional implementation, the communication apparatus includes a storage unit. The processing unit can be coupled to the storage unit, and execute a program or instructions in the storage unit, to enable the communication apparatus to perform a function of the access point device.

In an optional implementation, the communication apparatus includes a processor, coupled to a memory and configured to execute instructions in the memory, to implement the method performed by the access point device according to the first aspect. Optionally, the communication apparatus further includes other components, for example, an antenna, an input/output module, and an interface. Such components may be hardware, software, or a combination of software and hardware.

According to a fourth aspect, a communication apparatus is provided. The communication apparatus has a function of implementing behavior in the method embodiments in the second aspect. For beneficial effect, refer to the foregoing descriptions. Details are not described herein again.

The communication apparatus may be the station device according to the second aspect, or an electronic device (for example, a chip system) configured in the station device, or a larger device including the station device. The station device includes a corresponding means (means) or module for performing the foregoing method. For example, the communication apparatus includes a processing unit (or referred to as a processing module) and a transceiver unit (or referred to as a transceiver module).

For example, the transceiver unit is configured to: receive a trigger frame from an access point device; and determine, based on a first field included in the trigger frame, a first uplink resource used to send uplink data, where the first uplink resource is located on a first channel, a bandwidth of the first channel is greater than 320 MHz, and when a number of subcarriers occupied by the first uplink resource is less than (or less than or equal to) 4×996, the first field indicates that the first uplink resource is located on a first subchannel or a second subchannel included in the first channel, or when a number of subcarriers occupied by the first uplink resource is greater than or equal to (or greater than) 4×996, the first field indicates a subcarrier that is not occupied by the first uplink resource on the first channel; and the transceiver unit is further configured to send the uplink data to the access point device on the first uplink resource.

For another example, the transceiver unit is configured to receive a trigger frame from an access point device; the processing unit is configured to determine, based on a first field included in the trigger frame, a first uplink resource used to send uplink data, where the first uplink resource is located on a first channel, a bandwidth of the first channel is 640 MHz, the first channel includes a primary 320 MHz channel and a secondary 320 MHz channel, the trigger frame includes the first field, and when a number of subcarriers occupied by the first uplink resource is less than or equal to 4×996, the first field indicates that the first uplink resource is located on the primary 320 MHz channel or the secondary 320 MHz channel; and the transceiver unit is further configured to send the uplink data on the first uplink resource.

For another example, the transceiver unit is configured to receive a trigger frame from an access point device; the processing unit is configured to determine, based on a first field and a PS160 field that are included in the trigger frame, a first uplink resource used to send uplink data, where the first uplink resource is located on a first channel, a bandwidth of the first channel is 480 MHz, the first channel includes a primary 320 MHz channel and a first secondary 160 MHz channel, the primary 320 MHz channel includes a primary 160 MHz channel and a second secondary 160 MHz channel, the trigger frame includes the first field and the PS160 field, and when a number of subcarriers occupied by the first uplink resource is less than or equal to 2×996, the first field indicates that the first uplink resource is located on the primary 320 MHz channel or the first secondary 160 MHz channel, and the PS160 field indicates that the first uplink resource is located on the primary 160 MHz channel or the second secondary 160 MHz channel; and the transceiver unit is further configured to send the uplink data on the first uplink resource.

For another example, the transceiver unit is configured to receive a trigger frame from an access point device; the processing unit is configured to determine, based on a first field, a resource unit allocation field, and a PS160 field that are included in the trigger frame, a first uplink resource used to send uplink data, where the first field, the resource unit allocation field, and the PS160 field indicate a resource that is not occupied by the first uplink resource on a first channel, and a bandwidth of the first channel is greater than 320 MHz; and the transceiver unit is further configured to send the uplink data on the first uplink resource.

In an optional implementation, the communication apparatus includes a storage unit. The processing unit can be coupled to the storage unit, and execute a program or instructions in the storage unit, to enable the communication apparatus to perform a function of the station device.

In an optional implementation, the communication apparatus includes a processor, coupled to a memory and configured to execute instructions in the memory, to implement the method performed by the station device according to the second aspect. Optionally, the communication apparatus further includes other components, for example, an antenna, an input/output module, and an interface. Such components may be hardware, software, or a combination of software and hardware.

According to a fifth aspect, a communication apparatus is provided. The communication apparatus may be an access point device or a chip or a chip system used in an access point device. The communication apparatus includes a communication interface and a processor, and optionally, further includes a memory. The memory is configured to store a computer program. The processor is coupled to the memory and the communication interface. When the processor reads the computer program or instructions, the communication apparatus performs the method performed by the access point device in the first aspect.

According to a sixth aspect, a communication apparatus is provided. The communication apparatus may be a station device or a chip or a chip system used in a station device. The communication apparatus includes a communication interface and a processor, and optionally, further includes a memory. The memory is configured to store a computer program. The processor is coupled to the memory and the communication interface. When the processor reads the computer program or instructions, the communication apparatus performs the method performed by the station device in the second aspect.

According to a seventh aspect, a communication system is provided. The system may include an access point device and a station device. The access point device may perform the method performed by the access point device in the first aspect, and the station device may perform the method performed by the station device in the second aspect. Optionally, the access point device may be implemented by the communication apparatus according to the third aspect or the fifth aspect, and the station device may be implemented by the communication apparatus according to the fourth aspect or the sixth aspect.

According to an eighth aspect, a computer-readable storage medium is provided. The computer-readable storage medium is configured to store a computer program, and when the computer program is run on a computer, the computer is enabled to perform the method according to the first aspect and/or the second aspect.

According to a ninth aspect, a computer program product is provided. The computer program product includes a computer program, and when the computer program is run on a computer, the computer is enabled to perform the method according to the first aspect and/or the second aspect.

According to a tenth aspect, a chip system is provided, including a processor and an interface. The processor is configured to invoke and run instructions from the interface, and when the processor executes the instructions, the method according to the first aspect and/or the method according to the second aspect are/is implemented.

BRIEF DESCRIPTION OF DRAWINGS

FIG. 1 is a diagram of a network architecture of a WLAN to which an embodiment of this application is applicable;
FIG. 2 is a diagram of a format of a trigger frame;
FIG. 3 is a diagram of a common information field and a user information field included in a trigger frame;
FIG. 4 is a diagram of another format of a trigger frame;
FIG. 5 to FIG. 7 are flowcharts of several communication methods according to embodiments of this application;
FIG. 8A-a, FIG. 8A-b, and FIG. 8B to FIG. 8O are diagrams of some resource distribution manners according to embodiments of this application;
FIG. 9 is a diagram of an apparatus according to an embodiment of this application; and
FIG. 10 is a diagram of another apparatus according to an embodiment of this application.

DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a number of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally represents an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, and are not used to limit sizes, content, sequences, time sequences, priorities, importance, or the like of the plurality of objects. For example, a third parameter and a second parameter may be a same parameter, or may be different parameters. In addition, this name does not indicate different content, application scenarios, priorities, importance, or the like of the two parameters. In addition, step numbers in embodiments described in this application are merely intended to distinguish between different steps, but are not intended to limit a sequence of the steps.

Embodiments of this application are applicable to a local area network (local area network, LAN), and in particular, to a wireless local area network (wireless local area network, WLAN), for example, a WLAN that uses any one of institute of electrical and electronics engineers (institute of electrical and electronics engineers, IEEE) 802.11 series protocols. The WLAN may include one or more basic service sets (basic service sets, BSSs), and network nodes in the basic service set include an AP and a STA. Embodiments of this application may be further applied to a wireless local area network system that supports 802.11 series protocols such as a next-generation Wi-Fi protocol of IEEE 802.11ax like 802.11be, Wi-Fi 7, or EHT, a next-generation protocol of 802.11be like Wi-Fi 8 or UHR, and Wi-Fi AI, and may be further applied to an ultra-wideband (UWB)-based wireless personal area network system or a sensing (sensing) system.

Embodiments of this application are also applicable to a wireless local area network like an internet of things (internet of things, IoT) network or a vehicle-to-everything (vehicle to X, V2X) network. Certainly, embodiments of this application are further applicable to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future evolved communication system.

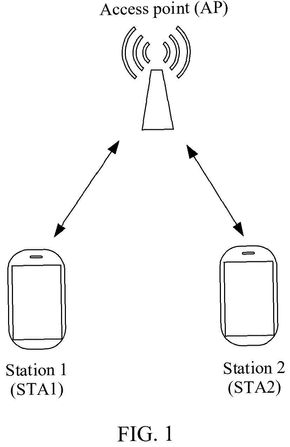

The following uses an example in which embodiments of this application are applicable to the WLAN. FIG. 1 is a diagram of a network architecture of a WLAN to which an embodiment of this application is applicable. In FIG. 1, for example, the WLAN includes one AP and two STAs, and the STAs are mobile phones. A STA associated with the AP can receive a frame (for example, a trigger frame) sent by the AP, and can also send a frame (for example, uplink data) to the AP. In embodiments of this application, communication between an AP and a STA is used as an example for description. It may be understood that embodiments of this application are also applicable to communication between APs. For example, the APs may communicate with each other through a distributed system (distributed system, DS). Alternatively, embodiments of this application are applicable to communication between STAs. For example, the STAs directly communicate with each other without using an AP.

The AP may be an access point for a terminal device to join a wired (or wireless) network. The AP is equivalent to a bridge that connects the wired network and the wireless network, and a main function is to connect various wireless network clients together and then connect the wireless network to the Ethernet. For example, the AP may be a terminal device (like a mobile phone) or a network device (like a router) having a mobile hotspot (Wi-Fi) chip. In embodiments of this application, the AP may be a device that supports the 802.11be standard, or may be a device that supports a plurality of WLAN standards of the 802.11 series, such as 802.11ax, 802.11ay, 802.11ac, 802.11n, 802.11g, 802.11b, 802.11a, and a next generation of 802.11be.

The STA may be a wireless communication chip, a wireless sensor, a wireless communication terminal, or the like, and may also be referred to as a user. For example, the STA may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Optionally, the STA may support the 802.11be standard, or may support the plurality of WLAN standards of the 802.11 series, such as 802.11ax, 802.11ay, 802.11ac, 802.11n, 802.11g, 802.11b, 802.11a, and the next generation of 802.11be.

Numbers of APs and STAs shown in FIG. 1 are merely examples, and may be smaller or larger.

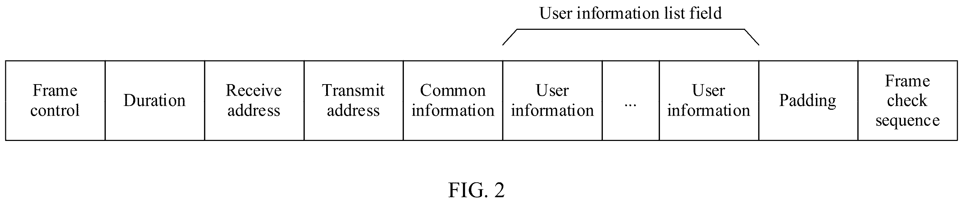

Generally, the STA performs uplink data transmission after obtaining sending permission through channel contention, for example, preempting a channel in an EDCA manner. In a trigger frame-based scheduled uplink transmission method introduced in a communication protocol, the AP first sends a trigger frame. For a format of the trigger frame, refer to FIG. 2. The trigger frame includes a frame control (frame control) field, a duration (duration) field, a receive address (receive address, RA) field, a transmit address (TA) field, a common information (common information) field, a user information list (user information list) field, a padding (padding) field, a frame check sequence (frame check sequence, FCS) field, and the like. The user information list field includes one or more user information (user information) fields, the user information field is in a one-to-one correspondence with the STA, and one user information field includes information that needs to be read by a corresponding STA.

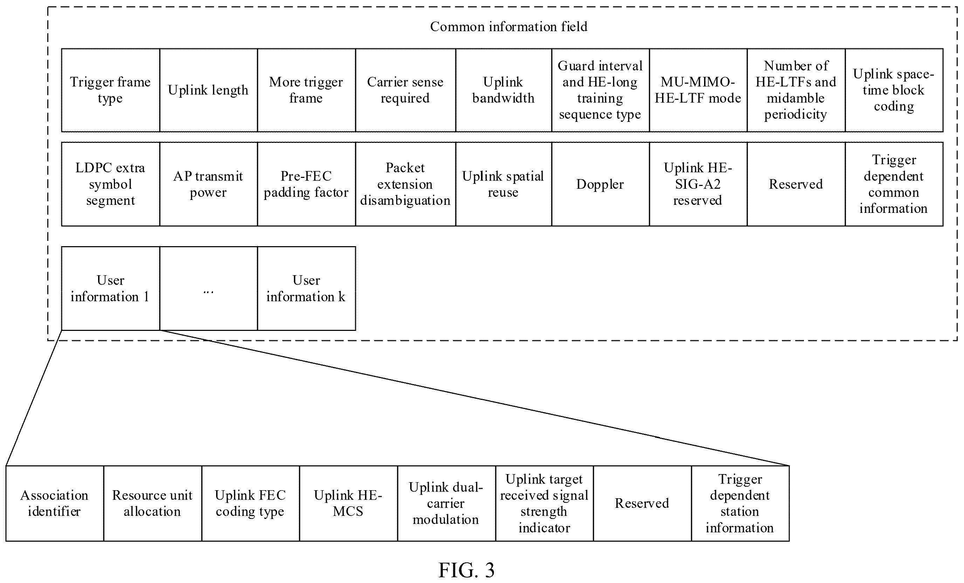

For content of the common information field and the user information field, refer to FIG. 3. The common information field may include a trigger type (trigger type) field, an uplink length (UL length) field, a more trigger frame (more TF) field, a carrier sense required (CS required) field, an uplink bandwidth (UL bandwidth) field, a guard interval and high efficient (high efficient, HE) long training sequence type (GI and HE-LTF type) field, a multi-user multiple-input multipleoutput HE-LTF mode (MU-MIMO HE-LTF mode) field, a number of HE-LTF symbols and midamble periodicity (number of HE-LTF symbols and midamble periodicity) field, an uplink space-time block coding (UL STBC) field, a low-density parity-check code extra symbol segment (LDPC extra symbol segment) field, an AP transmit power (AP TX power) field, a pre-forward error correction padding factor (pre-FEC padding factor) field, a packet extension disambiguation (PE disambiguation) field, an uplink spatial reuse (UL spatial reuse) field, a Doppler (Doppler) field, an uplink HE-signal (signal, SIG) A2 reserved (UL HE-SIG A2 reserved) field, a reserved (reserved) field, and a trigger dependent common information (trigger dependent common information) field. The user information field may include an association identifier (association identifier, AID) 12 field, an RU allocation (RU allocation) field, an uplink forward error correction coding type (UL FEC coding type) field, an uplink HE modulation and coding scheme (UL HE-MCS) field, an uplink dual-carrier modulation (UL HE-MCS) field, a spatial stream allocation/random access RU information (SS allocation/RA RU information) field, an uplink target received signal strength indicator (UL target-RSSI) field, a reserved field, and a trigger dependent station information (trigger dependent user information) field.

The association identifier field in the user information field may include an association identifier of a STA corresponding to the user information field, and the RU allocation field in the user information field may indicate an RU allocated to the STA. In other words, if the trigger frame indicates the RU or an MRU allocated to the STA, the STA may indicate, in the trigger frame, the RU or the MRU to send uplink data.

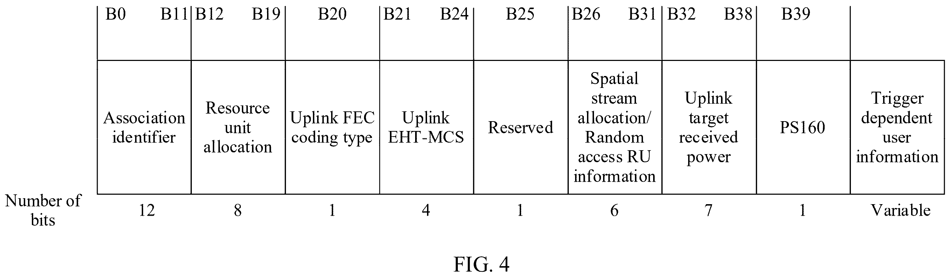

Currently, based on the format shown in FIG. 2, a special user information field is further introduced into the trigger frame in the protocol. The special user information field includes an uplink BW field, and the uplink BW field may indicate a channel bandwidth. In addition, based on the format shown in FIG. 3, a PS160 field is further introduced into the user information field in the protocol. For example, FIG. 4 is a diagram of content included in another user information field. The RU allocation field and the PS160 field in the user information field may jointly indicate an RU or an MRU, and may indicate an RU or an MRU in a maximum channel bandwidth of 320 MHz. "BXX" in a $1^{st}$ row in FIG. 4 indicates a start bit and an end bit occupied by a field in the user information field. For example, the association identifier field occupies B0 (a $1^{st}$ bit) to B11 (a $12^{th}$ bit) in the user information field.

Currently, another indication manner for the RU or the MRU is that values of 7 bits (for example, B1 to B7 in the user information field) included in the user information field in the trigger frame are associated with different distribution manners (also referred to as entries) of the RU or the MRU. B1 is a $2^{nd}$ bit (bit) in the user information field, and B7 is an $8^{th}$ bit in the user information field. For example, in Table 1, when the values of the 7 bits belong to 0 to 36, an RU or MRU size includes 26 subcarriers, and the RU or the MRU has 37 distribution manners on a channel. In this indication manner, only an RU or an MRU in a maximum channel bandwidth of 320 MHz can be indicated.

Table 1

| B7 to B1 | RU/MRU size (RU or MRU size) | Number of entries (number of entries) |
|---|---|---|
| 0 to 36 | 26 | 37 |
| 37 to 52 | 52 | 16 |
| 53 to 60 | 106 | 8 |
| 61 to 64 | 242 | 4 |
| 65 and 66 | 484 | 2 |
| 67 | 996 | 1 |
| 68 | 2×996 | 1 |
| 69 | 4×996 | 1 |
| 70 to 81 | 52+26 | 12 |
| 82 to 89 | 106+26 | 8 |
| 90 to 93 | 484+242 | 4 |
| 94 and 95 | 996+484 | 2 |

(continued)

| B7 to B1 | RU/MRU size (RU or MRU size) | Number of entries (number of entries) |
|---|---|---|
| 96 to 99 | 996+484+242 | 4 |
| 100 to 103 | 2×996+484 | 4 |
| 104 | 3×996 | 1 |
| 105 and 106 | 3×996+484 | 2 |

As a channel bandwidth increases, a data transmission rate accordingly increases. Therefore, in a next-generation standard, a larger channel bandwidth greater than 320 MHz is considered, but a current trigger frame cannot indicate an RU or an MRU in the larger channel bandwidth.

In view of this, in embodiments of this application, a first field is introduced into the trigger frame, and the first field may indicate that an allocated uplink resource is located on a primary 320 MHz channel or a secondary 320 MHz channel. This is equivalent to that a resource in a 640 MHz channel bandwidth can be indicated. In this way, the format of the trigger frame can be adapted to a communication scenario with a larger channel bandwidth.

To better describe embodiments of this application, the following describes, with reference to the accompanying drawings, methods provided in embodiments of this application. In method flowcharts corresponding to embodiments of this application, all steps indicated by dashed lines are optional steps. The methods provided in embodiments of this application may be applied to the network architecture shown in FIG. 1. For example, a first STA in embodiments of this application may be the STA 1 in FIG. 1, and an AP in embodiments of this application may be the AP in FIG. 1. Unless otherwise specified in the following, a resource described in embodiments of this application, for example, a first uplink resource, may include an RU or an MRU.

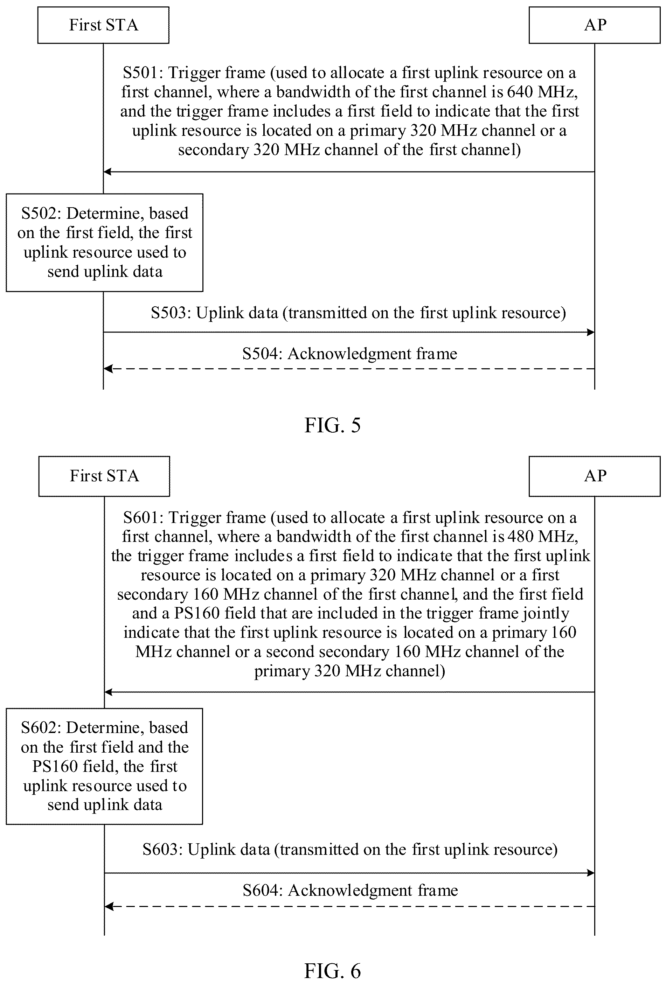

An embodiment of this application provides a first communication method. FIG. 5 is a flowchart of the method.

S501: An AP sends a trigger frame. Correspondingly, a first STA receives the trigger frame from the AP. The trigger frame may be used to allocate (or schedule) an uplink resource to one or more STAs. In this case, the one or more STAs can all receive the trigger frame. The first STA is any one of the one or more STAs. In this embodiment of this application, the first STA is used as an example for description.

An uplink resource allocated to the first STA by using the trigger frame is a first uplink resource, and the first uplink resource may be located on a first channel. In this embodiment of this application, a bandwidth of the first channel is greater than 320 MHz. For example, the bandwidth of the first channel is 640 MHz. The first channel may include two channels: a primary 320 MHz channel and a secondary 320 MHz channel. In other words, one of the two channels is a primary channel and the other is a secondary channel, and bandwidths of the two channels are both 320 MHz. If a bandwidth of the first uplink resource is greater than 320 MHz (for example, a number of subcarriers occupied by the first uplink resource is greater than 4×996), the trigger frame may not need to indicate a channel on which the first uplink resource is located on the two 320 MHz channels. Alternatively, if a bandwidth of the first uplink resource is less than or equal to 320 MHz (for example, a number of subcarriers occupied by the first uplink resource is less than or equal to 4×996), the trigger frame may indicate a channel on which the first uplink resource is located on the two 320 MHz channels.

To indicate the channel on which the first uplink resource is located on the two 320 MHz channels, the trigger frame may include a first field, and the first field may indicate whether the first uplink resource is located on the primary 320 MHz channel or the secondary 320 MHz channel. For example, the first field is represented as PS320, or the first field may be represented in another manner. For example, the first field may occupy 1 bit. When a value of the bit is "0", it indicates that the first uplink resource is located on the primary 320 MHz channel. When a value of the bit is "1", it indicates that the first uplink resource is located on the secondary 320 MHz channel.

Optionally, the first field may be included in a first user information field in the trigger frame, and the first user information field is a user information field that is in the trigger frame and that corresponds to the first STA. For example, the first user information field includes an association identifier of the first STA. For example, each of some or all user information fields in the trigger frame may include the first field.

For example, the first field may occupy a reserved bit in the first user information field. For example, in FIG. 4, if the reserved bit occupies a 26th bit (referred to as B25) in the user information field, the first field may occupy B25. It can be learned from FIG. 3 or FIG. 4 that the user information field may include the reserved bit, and a part or all of the reserved bit may be used as the first field. Alternatively, the first field may be located in an SS allocation/RA RU information field included in the first user information field. Because only eight streams are supported in 802.11be, and 4 bits are allocated to a starting spatial stream (Starting Spatial Stream) of SS Allocation in 802.11be, a part or all of the 4 bits in the SS allocation/RA RU information field may be used as the first field. In the foregoing two manners, there may be no need to add a new bit to the user information field as the first field, so that the solution in embodiments of this application can be better compatible with the conventional technology. Alternatively, one or more bits may be added to the first user information field as the first field, so that the first field does not need to be confused with another field in the first user information field, and an indication is clearer.

Optionally, the primary 320 MHz channel further includes two channels: a primary 160 MHz channel and a secondary 160 MHz channel. In other words, one of the two channels is a primary channel and the other is a secondary channel, and bandwidths of the two channels are both 160 MHz. The secondary 320 MHz channel also includes two channels: a first 160 MHz channel and a second 160 MHz channel. In other words, there is no primary-secondary relationship between the two channels, and bandwidths of the two channels are both 160 MHz. If the bandwidth of the first uplink resource is greater than 160 MHz (for example, the number of subcarriers occupied by the first uplink resource is greater than $2\times996$), the trigger frame may not need to indicate a channel on which the first uplink resource is located on the four 160 MHz channels. Alternatively, if the bandwidth of the first uplink resource is less than or equal to 160 MHz (for example, the number of subcarriers occupied by the first uplink resource is less than or equal to $2\times996$), the trigger frame may indicate a channel on which the first uplink resource is located on the four 160 MHz channels.

To indicate the channel on which the first uplink resource is located on the four 160 MHz channels, the trigger frame may include a PS160 field shown in FIG. 4. The first field and the PS160 field may jointly indicate that the first uplink resource is located on the primary 160 MHz channel, the secondary 160 MHz channel, the first 160 MHz channel, or the second 160 MHz channel. For example, the first field occupies 1 bit, and the PS160 field occupies 1 bit. When a value of the first field is "0", if a value of the PS160 field is "0", it indicates that the first uplink resource is located on the primary 160 MHz channel, or if a value of the PS160 field is "1", it indicates that the first uplink resource is located on the secondary 160 MHz channel. Alternatively, when a value of the first field is "1", if a value of the PS160 field is "0", it indicates that the first uplink resource is located on the first 160 MHz channel, or if a value of the PS160 field is "1", it indicates that the first uplink resource is located on the second 160 MHz channel.

Optionally, the primary 160 MHz channel further includes two channels: a primary 80 MHz channel and a secondary 80 MHz channel. In other words, one of the two channels is a primary channel and the other is a secondary channel, and bandwidths of the two channels are both 80 MHz. The secondary 160 MHz channel further includes two channels: a first 80 MHz channel and a second 80 MHz channel. In other words, there is no primary-secondary relationship between the two channels, and bandwidths of the two channels are both 80 MHz. In addition, the first 160 MHz channel further includes two channels: a third 80 MHz channel and a fourth 80 MHz channel. In other words, there is no primary-secondary relationship between the two channels, and bandwidths of the two channels are both 80 MHz. The second 160 MHz channel further includes two channels: a fifth 80 MHz channel and a sixth 80 MHz channel. In other words, there is no primary-secondary relationship between the two channels, and bandwidths of the two channels are both 80 MHz. If the bandwidth of the first uplink resource is greater than 80 MHz (for example, the number of subcarriers occupied by the first uplink resource is greater than 996), the trigger frame may not need to indicate a channel on which the first uplink resource is located on the eight 80 MHz channels. Alternatively, if the bandwidth of the first uplink resource is less than or equal to 80 MHz (for example, the number of subcarriers occupied by the first uplink resource is less than or equal to 996), the trigger frame may indicate a channel on which the first uplink resource is located on the eight 80 MHz channels.

To indicate the channel on which the first uplink resource is located on the eight 80 MHz channels, the trigger frame may include an RU allocation field shown in FIG. 4 or FIG. 3. The first field, the PS160 field, and the RU allocation field may jointly indicate that the first uplink resource is located on the primary 80 MHz channel, the secondary 80 MHz channel, the first 80 MHz channel, the second 80 MHz channel, the third 80 MHz channel, the fourth 80 MHz channel, the fifth 80 MHz channel, or the sixth 80 MHz channel. Optionally, a first subfield in the RU allocation field may indicate the channel on which the first uplink resource is located. For example, the first subfield occupies a $1^{st}$ bit in the RU allocation field, and is represented as B0. Refer to Table 2. For example, the first field occupies 1 bit, the PS160 field occupies 1 bit, and B0 also occupies 1 bit. When a value of the first field is "0" and a value of the PS160 field is "0", if a value of B0 is "0", it indicates that the first uplink resource is located on the primary 80 MHz channel, or if a value of B0 is "1", it indicates that the first uplink resource is located on the secondary 80 MHz channel. Alternatively, when a value of the first field is "0" and a value of the PS160 field is "1", if a value of B0 is "0", it indicates that the first uplink resource is located on the first 80 MHz channel, or if a value of B0 is "1", it indicates that the first uplink resource is located on the second 80 MHz channel. Alternatively, when a value of the first field is "1" and a value of the PS160 field is "0", if a value of B0 is "0", it indicates that the first uplink resource is located on the third 80 MHz channel, or if a value of B0 is "1", it indicates that the first uplink resource is located on the fourth 80 MHz channel. Alternatively, when a value of the first field is "1" and a value of the PS160 field is "1", if a value of B0 is "0", it indicates that the first uplink resource is located on the fifth 80 MHz channel, or if a value of B0 is "1", it indicates that the first uplink resource is located on the sixth 80 MHz channel.

Table 2

| PS320 | PS160 | B0 |
|---|---|---|
| "0": primary 320 MHz channel | "0": primary 160 MHz channel | "0": primary 80 MHz channel |
| | | "1": secondary 80 MHz channel |
| | "1": secondary 160 MHz channel | "0": first 80 MHz channel |
| | | "1": second 80 MHz channel |
| "1": secondary 320 MHz channel | "0": first 160 MHz channel | "0": third 80 MHz channel |
| | | "1": fourth 80 MHz channel |
| | "0": second 160 MHz channel | "0": fifth 80 MHz channel |
| | | "1": sixth 80 MHz channel |

S502: The first STA determines, based on the first field included in the trigger frame, the first uplink resource used to send uplink data.

After receiving the trigger frame, the first STA parses out, from the trigger frame, the user information field that matches the association identifier of the first STA, for example, the first user information field, to determine the first uplink resource based on an indication of the first user information field. For example, the first uplink resource includes one or more RUs, or includes one or more MRUs.

When the number of subcarriers occupied by the first uplink resource is less than or equal to $4 \times 996$, the first STA may determine the first uplink resource based on the first field. For example, the first STA may determine a third parameter based on the first field, to determine the first uplink resource based on the third parameter.

Alternatively, when the number of subcarriers occupied by the first uplink resource is less than or equal to $2 \times 996$, the first STA may determine the first uplink resource based on the first field and the PS160 field. For example, the first STA may determine a third parameter and a second parameter based on the first field, to determine the first uplink resource based on the third parameter and the second parameter.

Alternatively, when the number of subcarriers occupied by the first uplink resource is less than or equal to 996, the first STA may determine the first uplink resource based on the first field, the RU allocation field (for example, B0), and the PS160 field. For example, the first STA may determine a fourth parameter, a third parameter, a second parameter, and a first parameter based on the first field, the RU allocation field, and the PS160 field, to determine the first uplink resource based on the fourth parameter, the third parameter, the second parameter, and the first parameter.

The fourth parameter may be represented by N, and may indicate an 80 MHz channel on which the first uplink resource is located. For example, N indicates an index of the 80 MHz channel on which the first uplink resource is located. The third parameter may be represented by X2, and may indicate that the first uplink resource is located on a first 320 MHz channel or a second 320 MHz channel. The second parameter may be represented by X1, and X2 and X1 may jointly indicate that the first uplink resource is located on the first 160 MHz channel, the second 160 MHz channel, a third 160 MHz channel, or a fourth 160 MHz channel. The first parameter may be represented by X0, and X2, X1, and X0 may jointly indicate that the first uplink resource is located on the first 80 MHz channel, the second 80 MHz channel, the third 80 MHz channel, the fourth 80 MHz channel, the fifth 80 MHz channel, the sixth 80 MHz channel, a seventh 80 MHz channel, or an eighth 80 MHz channel. The first 320 MHz channel and the primary 320 MHz channel are a same channel, the second 320 MHz channel and the secondary 320 MHz channel are a same channel, the third 160 MHz channel and the primary 160 MHz channel are a same channel, the fourth 160 MHz channel and the secondary 160 MHz channel are a same channel, the seventh 80 MHz channel and the primary 80 MHz channel are a same channel, and the eighth 80 MHz channel and the secondary 80 MHz channel are a same channel. It may be understood that, a "primary" channel and a "secondary" channel or a primary-secondary relationship between channels is a concept that can be learned by the AP. In other words, the AP can know which channel is a primary channel and which channel is a secondary channel. However, the STA may not know which channel is a primary channel and which channel is a secondary channel, but only know a specific channel position. Therefore, the parameter determined by the STA indicates a physical position of a channel rather than a primary-secondary relationship.

The first STA may determine any one or more of the first parameter, the second parameter, the third parameter, or the fourth parameter in different manners. For example, in an optional manner, the first STA may determine the foregoing one or more parameters based on the first field, the RU allocation field, the PS160 field, and a first mapping relationship. For example, the first STA determines the fourth parameter, the third parameter, the second parameter, and the first parameter based on the first mapping relationship, the first field, the RU allocation field, and the PS160 field. The first mapping relationship may include a mapping relationship between the first field, the RU allocation field, the PS160 field, the fourth parameter, the third parameter, the second parameter, and the first parameter. The first mapping relationship may be predefined in a protocol, pre-configured in the AP and the STA, or configured by the AP for the STA. For example, as shown in Table 3, the first mapping relationship may include one or more items in Table 3, where one row in Table 3 is considered as one item. PS320 indicates the first field.

Table 3

| Bandwidth (bandwidth) (MHz) | Input (input) | | | | Output (output) | | | |
|---|---|---|---|---|---|---|---|---|
| | Channel configuration (configuration) | PS320 | PS160 | B0 | X0 | X1 | X2 | N |
| 20/40/80 | [P80] | 0 | 0 | 0 | 0 | 0 | 0 | 0 |
| 160 | [P80 S80] | 0 | 0 | 0 | 0 | 0 | 0 | 0 |
| | | 0 | 0 | 1 | 1 | 0 | 0 | 1 |
| | [S80 P80] | 0 | 0 | 0 | 1 | 0 | 0 | 1 |
| | | 0 | 0 | 1 | 0 | 0 | 0 | 0 |
| 320 | [P80 S80 S160] | 0 | 0 | 0 | 0 | 0 | 0 | 0 |
| | | 0 | 0 | 1 | 1 | 0 | 0 | 1 |
| | | 0 | 1 | 0 | 0 | 1 | 0 | 2 |
| | | 0 | 1 | 1 | 1 | 1 | 0 | 3 |
| | [S80 P80 S160] | 0 | 0 | 0 | 1 | 0 | 0 | 1 |
| | | 0 | 0 | 1 | 0 | 0 | 0 | 0 |
| | | 0 | 1 | 0 | 0 | 1 | 0 | 2 |
| | | 0 | 1 | 1 | 1 | 1 | 0 | 3 |
| | [S160 P80 S80] | 0 | 0 | 0 | 0 | 1 | 0 | 2 |
| | | 0 | 0 | 1 | 1 | 1 | 0 | 3 |
| | | 0 | 1 | 0 | 0 | 0 | 0 | 0 |
| | | 0 | 1 | 1 | 1 | 0 | 0 | 1 |
| | [S160 S80 P80] | 0 | 0 | 0 | 1 | 1 | 0 | 3 |
| | | 0 | 0 | 1 | 0 | 1 | 0 | 2 |
| | | 0 | 1 | 0 | 0 | 0 | 0 | 0 |
| | | 0 | 1 | 1 | 1 | 0 | 0 | 1 |
| 640 | [P80 S80 S160 S320] | 0 | 0 | 0 | 0 | 0 | 0 | 0 |
| | | 0 | 0 | 1 | 1 | 0 | 0 | 1 |
| | | 0 | 1 | 0 | 0 | 1 | 0 | 2 |
| | | 0 | 1 | 1 | 1 | 1 | 0 | 3 |
| | | 1 | 0 | 0 | 0 | 0 | 1 | 4 |
| | | 1 | 0 | 1 | 1 | 0 | 1 | 5 |
| | | 1 | 1 | 0 | 0 | 1 | 1 | 6 |
| | | 1 | 1 | 1 | 1 | 1 | 1 | 7 |

(continued)

| Bandwidth (bandwidth) (MHz) | Input (input) | | | | Output (output) | | | |
|---|---|---|---|---|---|---|---|---|
| | Channel configuration (configuration) | PS320 | PS160 | B0 | X0 | X1 | X2 | N |
| | [S80 P80 S160 S320] | 0 | 0 | 0 | 1 | 0 | 0 | 1 |
| | | 0 | 0 | 1 | 0 | 0 | 0 | 0 |
| | | 0 | 1 | 0 | 0 | 1 | 0 | 2 |
| | | 0 | 1 | 1 | 1 | 1 | 0 | 3 |
| | | 1 | 0 | 0 | 0 | 0 | 1 | 4 |
| | | 1 | 0 | 1 | 1 | 0 | 1 | 5 |
| | | 1 | 1 | 0 | 0 | 1 | 1 | 6 |
| | | 1 | 1 | 1 | 1 | 1 | 1 | 7 |
| | [S160 P80 S80 S320] | 0 | 0 | 0 | 0 | 1 | 0 | 2 |
| | | 0 | 0 | 1 | 1 | 1 | 0 | 3 |
| | | 0 | 1 | 0 | 0 | 0 | 0 | 0 |
| | | 0 | 1 | 1 | 1 | 0 | 0 | 1 |
| | | 1 | 0 | 0 | 0 | 0 | 1 | 4 |
| | | 1 | 0 | 1 | 1 | 0 | 1 | 5 |
| | | 1 | 1 | 0 | 0 | 1 | 1 | 6 |
| | | 1 | 1 | 1 | 1 | 1 | 1 | 7 |
| | [S160 S80 P80 S320] | 0 | 0 | 0 | 1 | 1 | 0 | 3 |
| | | 0 | 0 | 1 | 0 | 1 | 0 | 2 |
| | | 0 | 1 | 0 | 0 | 0 | 0 | 0 |
| | | 0 | 1 | 1 | 1 | 0 | 0 | 1 |
| | | 1 | 0 | 0 | 0 | 0 | 1 | 4 |
| | | 1 | 0 | 1 | 1 | 0 | 1 | 5 |
| | | 1 | 1 | 0 | 0 | 1 | 1 | 6 |
| | | 1 | 1 | 1 | 1 | 1 | 1 | 7 |
| | [S320 S160 P80 S80] | 0 | 0 | 0 | 0 | 1 | 1 | 6 |
| | | 0 | 0 | 1 | 1 | 1 | 1 | 7 |
| | | 0 | 1 | 0 | 0 | 0 | 1 | 4 |

| Channel configuration (configuration) | PS320 | PS160 | B0 | X0 | X1 | | X2 | N |
|---|---|---|---|---|---|---|---|---|
| | | 0 | 1 | 1 | 1 | 0 | 1 | 5 |
| | | 1 | 0 | 0 | 0 | 0 | 0 | 0 |
| | | 1 | 0 | 1 | 1 | 0 | 0 | 1 |
| | | 1 | 1 | 0 | 0 | 1 | 0 | 2 |
| | | 1 | 1 | 1 | 1 | 1 | 0 | 3 |

(continued)

| Channel configuration (configuration) | PS320 | PS160 | B0 | X0 | | X1 | X2 | N |
|---|---|---|---|---|---|---|---|---|
| | [S320 S160 S80 P80] | 0 | 0 | 0 | 1 | 1 | 1 | 7 |
| | | 0 | 0 | 1 | 0 | 1 | 1 | 6 |
| | | 0 | 1 | 0 | 0 | 0 | 1 | 4 |
| | | 0 | 1 | 1 | 1 | 0 | 1 | 5 |
| | | 1 | 0 | 0 | 0 | 0 | 0 | 0 |
| | | 1 | 0 | 1 | 1 | 0 | 0 | 1 |
| | | 1 | 1 | 0 | 0 | 1 | 0 | 2 |
| | | 1 | 1 | 1 | 1 | 1 | 0 | 3 |
| | [S320 P80 S80 S160] | 0 | 0 | 0 | 0 | 0 | 1 | 4 |
| | | 0 | 0 | 1 | 1 | 0 | 1 | 5 |
| | | 0 | 1 | 0 | 0 | 1 | 1 | 6 |
| | | 0 | 1 | 1 | 1 | 1 | 1 | 7 |
| | | 1 | 0 | 0 | 0 | 0 | 0 | 0 |
| | | 1 | 0 | 1 | 1 | 0 | 0 | 1 |
| | | 1 | 1 | 0 | 0 | 1 | 0 | 2 |
| | | 1 | 1 | 1 | 1 | 1 | 0 | 3 |
| | [S320 S80 P80 S160] | 0 | 0 | 0 | 1 | 0 | 1 | 5 |
| | | 0 | 0 | 1 | 0 | 0 | 1 | 4 |
| | | 0 | 1 | 0 | 0 | 1 | 1 | 6 |
| | | 0 | 1 | 1 | 1 | 1 | 1 | 7 |
| | | 1 | 0 | 0 | 0 | 0 | 0 | 0 |
| | | 1 | 0 | 1 | 1 | 0 | 0 | 1 |
| | | 1 | 1 | 0 | 0 | 1 | 0 | 2 |
| | | 1 | 1 | 1 | 1 | 1 | 0 | 3 |

In Table 3, the channel configuration refers to channel bandwidths from a low frequency to a high frequency. For example, the channel configuration [S320 S80 P80 S160] means that channel bandwidths from a low frequency to a high frequency are sequentially 320 MHz, 80 MHz, 80 MHz, and 160 MHz. The channel bandwidth of 640 MHz and the channel configuration [P80 S80 S160 S320] are used as an example. Because a bandwidth of a channel is 640 MHz, the channel includes eight 80 MHz channels in total. For example, the first uplink resource is located on one of the eight 80 MHz channels. The trigger frame may indicate, by using the first field, the PS160 field, and the RU allocation field (for example, BO), the 80 MHz channel on which the first uplink resource is located. There are eight possible positions of the first uplink resource. Therefore, this channel configuration corresponds to eight parameter combinations (the channel configuration corresponds to eight rows of content), and each parameter combination indicates one 80 MHz channel. For example, PS320=0 indicates that the first uplink resource is located on the primary 320 MHz channel, that is, the first uplink resource is located on a [P80 S80 S160] part in the channel configuration [S320 S80 P80 S160]; PS160=0 indicates that the first uplink resource is located on the primary 160 MHz channel in the primary 320 MHz channel, that is, the first uplink resource is located on a [P80 S80] part in [P80 S80 S160]; and B0=0 indicates that the first uplink resource is located on the primary 80 MHz channel in the primary 160 MHz channel, that is, the first uplink resource is located on a [P80] part in [P80 S80]. For the first STA, values of fields such as the first field, PS160, and B0 can be obtained from the trigger frame, and the fourth parameter, the third parameter, the second parameter, and the first parameter can be determined by substituting the values into Table 3, so that the first uplink resource is determined. A corresponding parameter is determined by using the first mapping relationship, so that a parameter determining process can be simplified.

Alternatively, another optional manner in which the first STA determines any one or more of the first parameter, the second parameter, the third parameter, or the fourth parameter includes: determining the corresponding parameters based on relationships that are respectively satisfied by the one or more parameters.

For example, the fourth parameter satisfies the following relationship:

$$N=4\times X2+2\times X1+X0 \quad \text{(Formula 1a)}$$

The third parameter satisfies the following relationship:

$$X2=C320 \oplus PS320 \quad \text{(Formula 1b)}$$

The second parameter satisfies the following relationship:

$$X1=\overline{C160} \cdot PS160 + C160 \cdot (C160 \odot PS320) \quad \text{(Formula 2)}$$

The first parameter satisfies the following relationship:

$$X0=\overline{C80} \cdot B0 + C80 \cdot [\overline{B0} \cdot (\overline{PS20} \& \overline{PS160}) + B0 \cdot (PS320 || PS160)] \quad \text{(Formula 3)}$$

In the foregoing formulas, N indicates the fourth parameter, X2 indicates the third parameter, X1 indicates the second parameter, and X0 indicates the first parameter. C320 indicates a relationship of the primary 320 MHz channel and the secondary 320 MHz channel with the first 320 MHz channel and the second 320 MHz channel. For example, if C320=0, it indicates that channels from a low frequency to a high frequency are sequentially [primary 320, secondary 320]; or if C320=0, it indicates that channels from a low frequency to a high frequency are sequentially [secondary 320, primary 320]. C160 indicates a relationship of the primary 160 MHz channel and the secondary 160 MHz channel with the third 160 MHz channel and the fourth 160 MHz channel. For example, if C160=0, it indicates that channels from a low frequency to a high frequency are sequentially [primary 160, secondary 160]; or if C160=0, it indicates that channels from a low frequency to a high frequency are sequentially [secondary 160, primary 160]. C80 indicates a relationship of the primary 80 MHz channel and the secondary 80 MHz channel with the seventh 80 MHz channel and the eighth 80 MHz channel. For example, if C80=0, it indicates that channels from a low frequency to a high frequency are sequentially [primary 80, secondary 80]; or if C80=0, it indicates that channels from a low frequency to a high frequency are sequentially [secondary 80, primary 80]. PS320 indicates the first field, or indicates a value of the first field. B0 indicates a value of the first subfield (for example, B0) included in the RU allocation field. $\overline{Z}$ indicates performing a logical NOT operation on Z, $\oplus$ indicates an exclusive OR operation, $\odot$ indicates an exclusive NOR operation, & indicates a logical AND operation, || indicates a logical OR operation, and · indicates a multiplication operation. For example, "·" and "$\times$" may be interchanged. It can be learned that the first STA can determine the fourth parameter, the third parameter, the second parameter, and the first parameter according to the formula 1a, the formula 1b, the formula 2, and the formula 3. In this manner, the first mapping relationship does not need to be introduced, and storage space can be saved.

The first STA can determine, based on the fourth parameter, the third parameter, the second parameter, and the first parameter, the 80 MHz channel on which the first uplink resource is located. However, the bandwidth of the first uplink resource may be less than 80 MHz, and the first STA may further need to determine a specific position of the first uplink resource on the 80 MHz channel. Therefore, regardless of the foregoing manners of determining the parameters, the first STA may further determine a specific position of the first uplink resource on the first 80 MHz channel, the second 80 MHz channel, the third 80 MHz channel, the fourth 80 MHz channel, the fifth 80 MHz channel, the sixth 80 MHz channel, the seventh 80 MHz channel, or the eighth 80 MHz channel based on a second mapping relationship, the fourth parameter, the third parameter, the second parameter, and the first parameter.

An optional manner in which the first STA determines the specific position of the first uplink resource based on the second mapping relationship, the fourth parameter, the third parameter, the second parameter, and the first parameter includes: The first STA determines a resource unit index corresponding to the first uplink resource based on the second mapping relationship, the fourth parameter, the third parameter, the second parameter, and the first parameter, to determine the specific position of the first uplink resource on the first 80 MHz channel, the second 80 MHz channel, the third 80 MHz channel, the fourth 80 MHz channel, the fifth 80 MHz channel, the sixth 80 MHz channel, the seventh 80 MHz channel, or the eighth 80 MHz channel. The second mapping relationship may include a mapping relationship between the first field, the RU allocation field, the PS160 field, the fourth parameter, the third parameter, the second parameter, the first parameter, and a resource unit index. One resource unit index indicates one distribution position of the RU or the MRU on the 80 MHz channel. For example, as shown in Table 4, the second mapping relationship may include one or more items in Table 4, where one row in Table 4 is considered as one item.

Table 4

| PS320 | PS160 | B0 | B7 to B1 | Bandwidth (MHz) | RU or MRU size | RU or MRU index | Physical (PHY) RU or MRU index |
|---|---|---|---|---|---|---|---|
| 0 to 7: 80 MHz frequency subblock in which an RU is located (80 MHz frequency subblock where the RU is located) | | | 0 to 8 | 20, 40, 80, 160, 320, or 640 | 26 | RU1 to RU9 | 37×N+RU index |
| | | | 9 to 17 | 40, 80, 160, 320, or 640 | | RU10 to RU18 | |
| | | | 18 | 80, 160, 320, or 640 | | Reserved | |
| | | | 19 to 36 | 80, 160, 320, or 640 | | RU20 to RU37 | |
| | | | 37 to 40 | 20, 40, 80, 160, 320, or 640 | 52 | RU1 to RU4 | 16×N+RU index |
| | | | 41 to 44 | 40, 80, 160, 320, or 640 | | RU5 to RU8 | |
| | | | 45 to 52 | 80, 160, 320, or 640 | | RU9 to RU16 | |
| | | | 53 and 54 | 20, 40, 80, 160, 320, or 640 | 106 | RU1 and RU2 | 8×N+RU index |
| | | | 55 and 56 | 40, 80, 160, 320, or 640 | | RU3 and RU4 | |
| | | | 57 to 60 | 80, 160, 320, or 640 | | RU5 to RU8 | |
| | | | 61 | 20, 40, 80, 160, 320, or 640 | 242 | RU1 | 4×N+RU index |
| | | | 62 | 40, 80, 160, 320, or 640 | | RU2 | |
| | | | 63 and 64 | 80, 160, 320, or 640 | | RU3 and RU4 | |
| | | | 65 | 40, 80, 160, 320, or 640 | 484 | RU1 | 2×N+RU index |
| | | | 66 | 80, 160, 320, or 640 | | RU2 | |
| | | | 67 | 80, 160, 320, or 640 | 996 | RU1 | N+RU index |

(continued)

| PS320 | PS160 | B0 | B7 to B1 | Bandwidth (MHz) | RU or MRU size | RU or MRU index | Physical (PHY) RU or MRU index |
|---|---|---|---|---|---|---|---|
| 0 to 3: 160 MHz segment in which an RU is located (160 MHz segment where the RU is located) | | 0 | 68 | 20, 40, 80, 160, 320, or 640 | Reserved | Reserved | Reserved |
| | | 1 | | 160, 320, or 640 | 2×996 | RU1 | 2×2+X1+RU index |
| 0 and 1: 320 MHz segment in which an RU is located (320 MHz segment where the RU is located) | 0 | 0 | 69 | 20, 40, 80, 160, 320, or 640 | Reserved | Reserved | Reserved |
| | 0 | 1 | | | | | |
| | 1 | 0 | | | | | |
| | 1 | 1 | | 320 or 640 | 4×996 | RU1 | X1+RU index |
| 0 to 7: 80 MHz frequency subblock in which an MRU is located (80 MHz frequency subblock where the MRU is located) | | | 70 | 20 or 40 | 52+26 | MRU1 | 12×N+MRU index |
| | | | | 80, 160, 320, or 640 | Reserved | Reserved | |
| | | | 71 and 72 | 20, 40, 80, 160, 320, or 640 | 52+26 | MRU2 and MRU3 | |
| | | | 73 and 74 | 40, 80, 160, 320, or 640 | 52+26 | MRU4 and MRU5 | |
| | | | 75 | 40 | 52+26 | MRU6 | |
| | | | | 80, 160, 320, or 640 | Reserved | Reserved | |
| | | | 76 | 80, 160, 320, or 640 | Reserved | Reserved | |
| | | | 77 to 80 | 80, 160, 320, or 640 | 52+26 | MRU8 to MRU11 | |
| | | | 81 | 20, 40, 80, 160, 320, or 640 | Reserved | Reserved | |
| | | | 82 | 20, 40, 80, 160, 320, or 640 | 106+26 | MRU1 | 8×N+MRU index |
| | | | 83 | 20 or 40 | 106+26 | MRU2 | |
| | | | | 80, 160, 320, or 640 | Reserved | Reserved | |

(continued)

| PS320 | PS160 | B0 | | B7 to B1 | Bandwidth (MHz) | RU or MRU size | RU or MRU index | Physical (PHY) RU or MRU index |
|---|---|---|---|---|---|---|---|---|
| | | | | 84 | 40 | 106+26 | MRU3 | |
| | | | | | 80, 160, 320, or 640 | Reserved | Reserved | |
| | | | | 85 | 40, 80, 160, 320, or 640 | 106+26 | MRU4 | |
| | | | | 86 | 80, 160, 320, or 640 | 106+26 | MRU5 | |
| | | | | 87 and 88 | 20, 40, 80, 160, 320, or 640 | Reserved | Reserved | |
| | | | | 89 | 80, 160, 320, or 640 | 106+26 | MRU8 | |
| | | | | 90 to 93 | 80, 160, 320, or 640 | 484+242 | MRU1 to MRU4 | 4×N+MRU index |
| 0 to 3: 160 MHz segment in which an MRU is located (160 MHz segment where the MRU is located) | | 0 | | 94 and 95 | 160, 320, or 640 | 996+484 | MRU1 and MRU2 | 8×2+4X1+MRU index |
| | | 1 | | | | | MRU3 and MRU4 | |
| 0: An MRU is located in primary 320 MHz (MRU is located in the primary 320 MHz). | 0: An MRU is located in secondary 160 MHz (MRU is located in the primary 160 MHz). | 0 | | 96 to 99 | 160 | 996+484+242 | MRU1 to MRU4 | MRU index |
| | | 1 | | | | | MRU5 to MRU8 | |
| | 1 | Any (Any) | | | 20, 40, 80, 160, 320, or 640 | Reserved | Reserved | Reserved |
| 1 | Any | Any | | | | | | |

(continued)

| PS320 | PS160 | B0 | B7 to B1 | Bandwidth (MHz) | RU or MRU size | RU or MRU index | Physical (PHY) RU or MRU index |
|---|---|---|---|---|---|---|---|
| 0 and 1: 320 MHz segment in which an RU is located (320 MHz segment where the RU is located) | 0 | 0 | 100 to 103 | 320 or 640 | 2×996+484 | MRU1 to MRU4 | X2+MRU index |
| | 0 | 1 | 100 and 101 | | | MRU5 and MRU6 | |
| | 0 | 1 | 102 and 103 | 20, 40, 80, 160, 320, or 640 | Reserved | Reserved | |
| | 1 | 0 | 100 and 101 | 20, 40, 80, 160, 320, or 640 | Reserved | Reserved | |
| | 1 | 0 | 102 and 103 | 320 or 640 | 2×996+484 | MRU7 and MRU8 | |
| | 1 | 1 | 100 to 103 | | | MRU9 to MRU12 | |
| | 0 | 0 | 104 | 320 or 640 | 3×996 | MRU1 | X2+MRU index |
| | 0 | 1 | | | | MRU2 | |
| | 1 | 0 | | | | MRU3 | |
| | 1 | 1 | | | | MRU4 | |
| | 0 | 0 | 105 and 106 | 320 or 640 | 3×996+484 | MRU1 and MRU2 | X2+MRU index |
| | 0 | 1 | | | | MRU3 and MRU4 | |
| | 1 | 0 | | | | MRU5 and | |
| | | | | | | MRU6 | |
| | 1 | 1 | | | | MRU7 and MRU8 | |

A last column in Table 4 indicates a resource unit index. For example, the first STA may first determine the fourth parameter, the third parameter, the second parameter, and the first parameter based on the first mapping relationship and the corresponding fields in the trigger frame, and then determine, with reference to the second mapping relationship, the resource unit index corresponding to the first uplink resource. Alternatively, after receiving the trigger frame, the first STA may substitute values of the first field, the PS160 field, B0 in the RU allocation field, and a second subfield in the RU allocation field that are included in the trigger frame into the second mapping relationship (for example, Table 4), so that the resource unit index corresponding to the first uplink resource can be directly determined. In this way, the first uplink resource is determined, and the foregoing parameters do not need to be determined. Optionally, in embodiments of this application, the second subfield includes, for example, 7 bits B1 to B7 in the RU allocation field.

Optionally, if the bandwidth of the first uplink resource is equal to 80 MHz (for example, the first uplink resource occupies 996 subcarriers), the first STA may not need to consider the second mapping relationship, but can determine, based on the first parameter, the second parameter, the third parameter, and the fourth parameter, the 80 MHz channel on which the first uplink resource is located. Alternatively, because a size of an RU or an MRU corresponding to a resource unit index included in the second mapping relationship also includes 996 subcarriers, the first STA may refer to the second mapping relationship. In other words, the first STA may determine, based on the second mapping relationship, the first parameter, the second parameter, the third parameter, and the fourth parameter, the 80 MHz channel on which the first uplink resource is located.

S503: The first STA sends the uplink data on the first uplink resource. Correspondingly, the AP receives the uplink data from the first STA.

The first STA may send a physical layer protocol data unit (physical layer protocol data unit, PPDU) by using the first uplink resource. For example, the PPDU is an extremely high throughput trigger based PPDU (extremely high throughput trigger based physical layer protocol data unit, EHT TB PPDU). The PPDU may include the uplink data.

Table 5 shows names and functions of fields included in the PPDU.

Table 5

| Field | English name | Chinese name | Function |
|---|---|---|---|
| L-STF | Legacy short training field | Legacy short training field | Used for PPDU discovery, coarse synchronization, and automatic gain control |
| L-LTF | Legacy long training field | Legacy long training field | Used for precise synchronization and channel estimation |
| L-SIG | Legacy signal field | Legacy signal field | Used for carrying signaling information related to a PPDU length, to ensure coexistence |
| RL-SIG | Repeat legacy signal field | Repeat legacy signal field | Used for carrying signaling information related to a PPDU length, to ensure coexistence |
| U-SIG | Universal signal field | Universal signal field | Carrying signaling for demodulating subsequent data |
| EHT-STF | Extremely high throughput short training field | Extremely high throughput short training field | Used for automatic gain control of a subsequent field |
| EHT-LTF | Extremely high throughput long training field | Extremely high throughput long training field | Used for channel estimation |
| Data | | Data | Carrying data |

Optionally, the method further includes S504: The AP sends an acknowledgment frame, and correspondingly, the first STA receives the acknowledgment frame. After receiving an uplink multi-user PPDU formed by PPDUs from the one or more STAs, the AP may reply with an acknowledgment frame. The acknowledgment frame sent to the one or more STAs may be sent in a form of downlink orthogonal frequency division multiple access (orthogonal frequency division multiple access, OFDMA), or may be sent in a form of non-high throughput (non-high throughput, non-HT) duplicate transmission.

The acknowledgment frame may include an acknowledgment (ack) frame or a block acknowledgment (block ack) frame. The ack frame may indicate a receiving success or a receiving failure. The block ack frame may indicate a receiving success or a receiving failure. If the AP sends the acknowledgment frame each time receiving one frame (for example, receiving one PPDU), the AP may send the ack frame. Alternatively, if the AP sends the acknowledgment frame after receiving a plurality of frames (for example, receiving a plurality of PPDUs), the AP may send the block ack frame. The block ack frame may include a compressed block ack frame and a multi-STA block ack frame. If the AP uniformly sends the acknowledgment frame to one STA after receiving a plurality of frames from the STA, the AP may send the compressed block ack frame. Alternatively, if the AP uniformly sends the acknowledgment frame to a plurality of STAs after receiving a plurality of frames from the plurality of STAs (receiving a plurality of PPDUs from each STA), the AP may send the multi-STA block ack frame.

In conclusion, in this embodiment of this application, the first field is introduced into the trigger frame, and the first field may indicate that the uplink resource allocated to the STA is located on the primary 320 MHz channel or the secondary 320 MHz channel. This is equivalent to that a resource in a 640 MHz channel bandwidth can be indicated. In this way, a format of the trigger frame can be adapted to a communication scenario with a larger channel bandwidth.

The following describes a second communication method according to an embodiment of this application. FIG. 6 is a flowchart of the method.

S601: An AP sends a trigger frame. Correspondingly, a first STA receives the trigger frame from the AP. The trigger frame may be used to allocate (or schedule) an uplink resource to one or more STAs. In this case, the one or more STAs can all receive the trigger frame. The first STA is any one of the one or more STAs. In this embodiment of this application, the first STA is used as an example for description.

An uplink resource allocated to the first STA by using the trigger frame is a first uplink resource, and the first uplink resource may be located on a first channel. In this embodiment of this application, a bandwidth of the first channel is greater than 320 MHz. For example, the bandwidth of the first channel is 480 MHz. The first channel may include two channels: a primary 320 MHz channel and a first secondary 160 MHz channel. In other words, one of the two channels is a primary channel and the other is a secondary channel. A bandwidth of the primary channel is 320 MHz, and a bandwidth of the secondary channel is 160 MHz. In addition, the primary 320 MHz channel further includes two channels: a primary 160 MHz channel and a second secondary 160 MHz channel. In other words, one of the two channels is a primary channel and the other is a secondary channel, and bandwidths of the two channels are both 160 MHz. If a bandwidth of the first uplink resource is greater than 160 MHz (for example, a number of subcarriers occupied by the first uplink resource is greater than $2\times996$), the trigger frame may not need to indicate a channel on which the first uplink resource is located on the three 160 MHz channels. Alternatively, if a bandwidth of the first uplink resource is less than or equal to 160 MHz (for example, a number of subcarriers occupied by the first uplink resource is less than or equal to $2\times996$), the trigger frame may indicate a channel on which the first uplink resource is located on the three 160 MHz channels.

To indicate the channel on which the first uplink resource is located on the three 160 MHz channels, the trigger frame may include a first field and a PS160 field (for example, as shown in FIG. 4). For content such as a position of the first field in the trigger frame, refer to the related descriptions of S501 in the embodiment shown in FIG. 5.

The first field may indicate whether the first uplink resource is located on the primary 320 MHz channel or the first secondary 160 MHz channel. For example, the first field is represented as P320, or the first field may be represented in another manner. For example, the first field may occupy 1 bit. When a value of the bit is "0", it indicates that the first uplink resource is located on the primary 320 MHz channel. When a value of the bit is "1", it indicates that the first uplink resource is located on the first secondary 160 MHz channel. The PS160 field may indicate that the first uplink resource is located on the primary 160 MHz channel or the second secondary 160 MHz channel, or the first field and the PS160 field may jointly indicate that the first uplink resource is located on the primary 160 MHz channel or the second secondary 160 MHz channel. When the first field indicates that the first uplink resource is located on the first secondary 160 MHz channel, the PS160 field is meaningless (but a value of the PS160 field may be fixed to 0 or 1, and an example in which the value is fixed to 0 is used in both Table 6 and Table 7). When the first field indicates that the first uplink resource is located on the primary 320 MHz channel, the PS160 field may indicate that the first uplink resource is located on the primary 160 MHz channel or the second secondary 160 MHz channel.

Optionally, the primary 160 MHz channel further includes two channels: a primary 80 MHz channel and a secondary 80 MHz channel. In other words, one of the two channels is a primary channel and the other is a secondary channel, and bandwidths of the two channels are both 80 MHz. The second secondary 160 MHz channel further includes two channels: a first 80 MHz channel and a second 80 MHz channel. In other words, there is no primary-secondary relationship between the two channels, and bandwidths of the two channels are both 80 MHz. The first secondary 160 MHz channel further includes two channels: a third 80 MHz channel and a fourth 80 MHz channel. In other words, there is no primary-secondary relationship between the two channels, and bandwidths of the two channels are both 80 MHz. If the bandwidth of the first uplink resource is greater than 80 MHz (for example, the number of subcarriers occupied by the first uplink resource is greater than 996), the trigger frame may not need to indicate a channel on which the first uplink resource is located on the six 80 MHz channels. Alternatively, if the bandwidth of the first uplink resource is less than or equal to 80 MHz (for example, the number of subcarriers occupied by the first uplink resource is less than or equal to 996), the trigger frame may indicate a channel on which the first uplink resource is located on the six 80 MHz channels.

To indicate the channel on which the first uplink resource is located on the six 80 MHz channels, the trigger frame may include an RU allocation field shown in FIG. 4 or FIG. 3. The first field, the PS160 field, and the RU allocation field may jointly indicate that the first uplink resource is located on the primary 80 MHz channel, the secondary 80 MHz channel, the first 80 MHz channel, the second 80 MHz channel, the third 80 MHz channel, or the fourth 80 MHz channel. Optionally, a first subfield in the RU allocation field may indicate the channel on which the first uplink resource is located. For example, the first subfield occupies a $1^{st}$ bit in the RU allocation field, and is represented as B0. Refer to Table 6. For example, the first field occupies 1 bit, the PS160 field occupies 1 bit, and B0 also occupies 1 bit. When a value of the first field is "0" and a value of the PS160 field is "0", if a value of B0 is "0", it indicates that the first uplink resource is located on the primary 80 MHz channel, or if a value of B0 is "1", it indicates that the first uplink resource is located on the secondary 80 MHz channel. Alternatively, when a value of the first field is "0" and a value of the PS160 field is "1", if a value of B0 is "0", it indicates that the first uplink resource is located on the first 80 MHz channel, or if a value of B0 is "1", it indicates that the first uplink resource is located on the second 80 MHz channel. Alternatively, when a value of the first field is "1", a value of the PS160 field may be fixed to "0" (or may be fixed to "1", where the example in which the value is fixed to "0" is used in Table 6). If a value of B0 is "0", it indicates that the first uplink resource is located on the third 80 MHz channel, or if a value of B0 is "1", it indicates that the first uplink resource is located on the fourth 80 MHz channel.

Table 6

| P320 | PS160 | B0 |
|---|---|---|
| "0": primary 320 MHz channel | "0": primary 160 MHz channel | "0": primary 80 MHz channel |
| | | "1": secondary 80 MHz channel |
| | "1": secondary 160 MHz channel | "0": first 80 MHz channel |
| | | "1": second 80 MHz channel |
| "1": first secondary 160 MHz channel | "0": first secondary 160 MHz channel | "0": third 80 MHz channel |
| | | "1": fourth 80 MHz channel |
| | Reserved | Reserved |

S602: The first STA determines, based on the first field and the PS160 field that are included in the trigger frame, the first uplink resource used to send uplink data.

When the number of subcarriers occupied by the first uplink resource is less than or equal to $2\times996$, the first STA may determine the first uplink resource based on the first field and the PS160 field. For example, the first STA may determine a third parameter and a second parameter based on the first field, to determine the first uplink resource based on the third parameter and the second parameter.

Alternatively, when the number of subcarriers occupied by the first uplink resource is less than or equal to 996, the first STA may determine the first uplink resource based on the first field, the RU allocation field (for example, B0), and the PS160 field. For example, the first STA may determine a fourth parameter, a third parameter, a second parameter, and a first parameter based on the first field, the RU allocation field, and the PS160 field, to determine the first uplink resource based on the fourth parameter, the third parameter, the second parameter, and the first parameter.

The fourth parameter may be represented by N, and may indicate an 80 MHz channel on which the first uplink resource is located. For example, N indicates an index of the 80 MHz channel on which the first uplink resource is located. The third parameter may be represented by X2, the second parameter may be represented by X1, and the third parameter and the second parameter may jointly indicate that the first uplink resource is located on a first 160 MHz channel, a second 160 MHz channel, or a third 160 MHz channel. The first parameter may be represented by X0, and the third parameter, the second parameter, and the first parameter may jointly indicate that the first uplink resource is located on the first 80 MHz channel, the second 80 MHz channel, the third 80 MHz channel, the fourth 80 MHz channel, a fifth 80 MHz channel, or a sixth 80 MHz channel. The first 160 MHz channel and the primary 160 MHz channel are a same channel, the second 160 MHz channel and the second secondary 160 MHz channel are a same channel, the third 160 MHz channel and the first secondary 160 MHz channel are a same channel, the fifth 80 MHz channel and the primary 80 MHz channel are a same channel, and the sixth 80 MHz channel and the secondary 80 MHz channel are a same channel. It may be understood that, a "primary" channel and a "secondary" channel or a primary-secondary relationship between channels is a concept that can be learned by the AP. In other words, the AP can know which channel is a primary channel and which channel is a secondary channel. However, the STA may not know which channel is a primary channel and which channel is a secondary channel, but only know a specific channel position. Therefore, the parameter determined by the STA indicates a physical position of a channel rather than a primary-secondary relationship.

The first STA may determine any one or more of the first parameter, the second parameter, the third parameter, or the fourth parameter in different manners. For example, in an optional manner, the first STA may determine the foregoing one or more parameters based on the first field, the RU allocation field, the PS160 field, and a first mapping relationship. For example, the first STA determines the fourth parameter, the third parameter, the second parameter, and the first parameter based on the first field, the RU allocation field, the PS160 field, and the first mapping relationship. The first mapping relationship may include a mapping relationship between the first field, the RU allocation field, the PS160 field, the fourth parameter, the third parameter, the second parameter, and the first parameter. The first mapping relationship may be predefined in a protocol, pre-configured in the AP and the STA, or configured by the AP for the STA. For example, as shown in Table 7, the first mapping relationship may include one or more items in Table 7, where one row in Table 7 is considered as one item. P320 indicates the first field.

Table 7

| Bandwidth (bandwidth) (MHz) | Input (input) | | | | Output (output) | | | |
|---|---|---|---|---|---|---|---|---|
| | Channel configuration (configuration) | P320 | PS160 | B0 | X0 | X1 | X2 | N |
| 20/40/80 | [P80] | 0 | 0 | 0 | 0 | 0 | 0 | 0 |

(continued)

| Bandwidth (bandwidth) (MHz) | Input (input) | | | | | Output (output) | | | |
|---|---|---|---|---|---|---|---|---|---|
| | Channel configuration (configuration) | P320 | PS160 | B0 | X0 | X1 | X2 | N |
| 160 | [P80 S80] | 0 | 0 | 0 | 0 | 0 | 0 | 0 |
| | | 0 | 0 | 1 | 1 | 0 | 0 | 1 |
| | [S80 P80] | 0 | 0 | 0 | 1 | 0 | 0 | 1 |
| | | 0 | 0 | 1 | 0 | 0 | 0 | 0 |
| 320 | [P80 S80 S160] | 0 | 0 | 0 | 0 | 0 | 0 | 0 |
| | | 0 | 0 | 1 | 1 | 0 | 0 | 1 |
| | | 0 | 1 | 0 | 0 | 1 | 0 | 2 |
| | | 0 | 1 | 1 | 1 | 1 | 0 | 3 |
| | [S80 P80 S160] | 0 | 0 | 0 | 1 | 0 | 0 | 1 |
| | | 0 | 0 | 1 | 0 | 0 | 0 | 0 |
| | | 0 | 1 | 0 | 0 | 1 | 0 | 2 |
| | | 0 | 1 | 1 | 1 | 1 | 0 | 3 |
| | [S160 P80 S80] | 0 | 0 | 0 | 0 | 1 | 0 | 2 |
| | | 0 | 0 | 1 | 1 | 1 | 0 | 3 |
| | | 0 | 1 | 0 | 0 | 0 | 0 | 0 |
| | | 0 | 1 | 1 | 1 | 0 | 0 | 1 |
| | [S160 S80 P80] | 0 | 0 | 0 | 1 | 1 | 0 | 3 |
| | | 0 | 0 | 1 | 0 | 1 | 0 | 2 |
| | | 0 | 1 | 0 | 0 | 0 | 0 | 0 |
| | | 0 | 1 | 1 | 1 | 0 | 0 | 1 |
| 480 | [P80 S80 S160 T160] | 0 | 0 | 0 | 0 | 0 | 0 | 0 |
| | | 0 | 0 | 1 | 1 | 0 | 0 | 1 |
| | | 0 | 1 | 0 | 0 | 1 | 0 | 2 |
| | | 0 | 1 | 1 | 1 | 1 | 0 | 3 |
| | | 1 | 0 | 0 | 0 | 0 | 1 | 4 |
| | | 1 | 0 | 1 | 1 | 0 | 1 | 5 |
| | [S80 P80 S160 T160] | 0 | 0 | 0 | 1 | 0 | 0 | 1 |
| | | 0 | 0 | 1 | 0 | 0 | 0 | 0 |
| | | 0 | 1 | 0 | 0 | 1 | 0 | 2 |
| | | 0 | 1 | 1 | 1 | 1 | 0 | 3 |
| | | 1 | 0 | 0 | 0 | 0 | 1 | 4 |
| | | 1 | 0 | 1 | 1 | 0 | 1 | 5 |
| | [S160 P80 S80 T160] | 0 | 0 | 0 | 0 | 1 | 0 | 2 |
| | | 0 | 0 | 1 | 1 | 1 | 0 | 3 |
| | | 0 | 1 | 0 | 0 | 0 | 0 | 0 |
| | | 0 | 1 | 1 | 1 | 0 | 0 | 1 |
| | | 1 | 0 | 0 | 0 | 0 | 1 | 4 |
| | | 1 | 0 | 1 | 1 | 0 | 1 | 5 |

(continued)

| Bandwidth (bandwidth) (MHz) | Input (input) | | | | Output (output) | | | |
|---|---|---|---|---|---|---|---|---|
| | Channel configuration (configuration) | P320 | PS160 | B0 | X0 | X1 | X2 | N |
| | [S160 S80 P80 T160] | 0 | 0 | 0 | 1 | 1 | 0 | 3 |
| | | 0 | 0 | 1 | 0 | 1 | 0 | 2 |
| | | 0 | 1 | 0 | 0 | 0 | 0 | 0 |
| | | 0 | 1 | 1 | 1 | 0 | 0 | 1 |
| | | 1 | 0 | 0 | 0 | 0 | 1 | 4 |
| | | 1 | 0 | 1 | 1 | 0 | 1 | 5 |
| | [T160 S160 P80 S80] | 0 | 0 | 0 | 0 | 0 | 1 | 4 |
| | | 0 | 0 | 1 | 1 | 0 | 1 | 5 |
| | | 0 | 1 | 0 | 0 | 1 | 0 | 2 |
| | | 0 | 1 | 1 | 1 | 1 | 0 | 3 |
| | | 1 | 0 | 0 | 0 | 0 | 0 | 0 |
| | | 1 | 0 | 1 | 1 | 0 | 0 | 1 |
| | [T160 S160 S80 P80] | 0 | 0 | 0 | 1 | 0 | 1 | 5 |
| | | 0 | 0 | 1 | 0 | 0 | 1 | 4 |
| | | 0 | 1 | 0 | 0 | 1 | 0 | 2 |
| | | 0 | 1 | 1 | 1 | 1 | 0 | 3 |
| | | 1 | 0 | 0 | 0 | 0 | 0 | 0 |
| | | 1 | 0 | 1 | 1 | 0 | 0 | 1 |
| | [T160 P80 S80 S160] | 0 | 0 | 0 | 0 | 1 | 0 | 2 |
| | | 0 | 0 | 1 | 1 | 1 | 0 | 3 |
| | | 0 | 1 | 0 | 0 | 0 | 1 | 4 |
| | | 0 | 1 | 1 | 1 | 0 | 1 | 5 |
| | | 1 | 0 | 0 | 0 | 0 | 0 | 0 |
| | | 1 | 0 | 1 | 1 | 0 | 0 | 1 |
| | [T160 S80 P80 S160] | 0 | 0 | 0 | 1 | 1 | 0 | 3 |
| | | 0 | 0 | 1 | 0 | 1 | 0 | 2 |
| | | 0 | 1 | 0 | 0 | 0 | 1 | 4 |
| | | 0 | 1 | 1 | 1 | 0 | 1 | 5 |
| | | 1 | 0 | 0 | 0 | 0 | 0 | 0 |
| | | 1 | 0 | 1 | 1 | 0 | 0 | 1 |

In the channel configuration shown in Table 7, "T160" indicates the first secondary 160 MHz channel, and "S160" indicates the second secondary 160 MHz channel. The channel bandwidth of 480 MHz and the channel configuration [T160 S80 P80 S160] are used as an example. Because a bandwidth of a channel is 480 MHz, the channel includes six 80 MHz channels in total. For example, the first uplink resource is located on one of the six 80 MHz channels. The trigger frame may indicate, by using the first field, the PS160 field, and the RU allocation field (for example, BO), the 80 MHz channel on which the first uplink resource is located. There are six possible positions of the first uplink resource. Therefore, this channel configuration corresponds to six parameter combinations (the channel configuration corresponds to six rows of content), and each parameter combination indicates one 80 MHz channel. For example, P320=0 indicates that the first uplink resource is located on the primary 320 MHz channel, that is, the first uplink resource is located on a [S80 P80 S160] part in the channel configuration [S320 S80 P80 S160]; PS160=0 indicates that the first uplink resource is located on the primary 160 MHz channel in the primary 320 MHz channel, that is, the first uplink resource is located on a [P80 S80] part in [P80 S80 S160]; and B0=0 indicates that the first uplink resource is located on the primary 80 MHz channel in the primary 160 MHz channel, that is, the first uplink resource is located on a [P80] part in [P80 S80]. For the first STA, values of fields such as the first field, PS160, and B0 can be obtained from the trigger frame, and the fourth parameter, the third parameter, the second parameter, and the first parameter can be determined by substituting the values into Table 7, so that the first uplink resource is determined. A corresponding parameter is determined by using the first mapping relationship, so that a parameter determining process can be simplified.

Alternatively, another optional manner in which the first STA determines any one or more of the first parameter, the second parameter, the third parameter, or the fourth parameter includes: determining the corresponding parameters based on relationships that are respectively satisfied by the one or more parameters.

For example, the fourth parameter satisfies the following relationship:

$$N = 4 \times X2 + 2 \times X1 + X0 \text{ (Formula 4a)}$$

The third parameter satisfies the following relationship:

$$X2 = \overline{C1} \cdot P320 + C1 \cdot [\overline{C2} \cdot (\overline{P320 \& PS160}) + C2 \cdot PS160] \text{ (Formula 4b)}$$

The second parameter satisfies the following relationship:

$$X1 = \overline{C2} \cdot PS160 + C2 \cdot (\overline{P320 \& PS160}) \text{ (Formula 5)}$$

The first parameter satisfies the following relationship:

$$X0 = \overline{C80} \cdot B0 + C80 \cdot [\overline{B0} \cdot (\overline{P320 \& PS160}) + B0 \cdot (P320 || PS160)] \text{ (Formula 6)}$$

In the foregoing formulas, N indicates the fourth parameter, X2 indicates the third parameter, X1 indicates the second parameter, and X0 indicates the first parameter. C1 and C2 jointly indicate a relationship of the primary 160 MHz channel, the second secondary 160 MHz channel, and the first secondary 160 MHz channel with the first 160 MHz channel, the second 160 MHz channel, and the third 160 MHz channel. For example, if C1C2=00, it indicates that channels from a low frequency to a high frequency are sequentially [P160 S160 T160]; if C1C2=01, it indicates that channels from a low frequency to a high frequency are sequentially [S160 P160 T160]; if C1C2=10, it indicates that channels from a low frequency to a high frequency are sequentially [T160 S160 P160]; or if C1C2=11, it indicates that channels from a low frequency to a high frequency are sequentially [T160 P160 S160]. C80 indicates a relationship of the primary 80 MHz channel and the secondary 80 MHz channel with the fifth 80 MHz channel and the sixth 80 MHz channel. For example, if C80=0, it indicates that channels from a low frequency to a high frequency are sequentially [P80, S80]; or if C80=1, it indicates that channels from a low frequency to a high frequency are sequentially [S80, P80]. P320 indicates the first field, or indicates a value of the first field. B0 indicates a value of the first subfield (for example, B0) included in the RU allocation field. $\overline{Z}$ indicates performing a logical NOT operation on Z, $\oplus$ indicates an exclusive OR operation, $\odot$ indicates an exclusive NOR operation, & indicates a logical AND operation, || indicates a logical OR operation, and · indicates a multiplication operation. For example, "·" and "×" may be interchanged. It can be learned that the first STA can determine the fourth parameter, the third parameter, the second parameter, and the first parameter according to the formula 4a, the formula 4b, the formula 5, and the formula 6. In this manner, the first mapping relationship does not need to be introduced, and storage space can be saved.

The first STA can determine, based on the fourth parameter, the third parameter, the second parameter, and the first parameter, the 80 MHz channel on which the first uplink resource is located. However, the bandwidth of the first uplink resource may be less than 80 MHz, and the first STA may further need to determine a specific position of the first uplink resource on the 80 MHz channel. Therefore, regardless of the foregoing manners of determining the parameters, the first STA may further determine a specific position of the first uplink resource on the first 80 MHz channel, the second 80 MHz channel, the third 80 MHz channel, the fourth 80 MHz channel, the fifth 80 MHz channel, or the sixth 80 MHz channel based on a second mapping relationship, the fourth parameter, the third parameter, the second parameter, and the first parameter.

An optional manner in which the first STA determines the specific position of the first uplink resource based on the second mapping relationship, the fourth parameter, the third parameter, the second parameter, and the first parameter includes: The first STA determines a resource unit index corresponding to the first uplink resource based on the second mapping relationship, the fourth parameter, the third parameter, the second parameter, and the first parameter, to determine the specific position of the first uplink resource on the first 80 MHz channel, the second 80 MHz channel, the third 80 MHz channel, the fourth 80 MHz channel, the fifth 80 MHz channel, or sixth 80 MHz channel. The second mapping relationship may include a mapping relationship between the first field, the RU allocation field, the PS160 field, the fourth parameter, the third parameter, the second parameter, the first parameter, and a resource unit index. One resource unit index indicates one distribution position of the RU or the MRU on the 80 MHz channel. For example, as shown in Table 8, the second mapping relationship may include one or more items in Table 8, where one row in Table 8 is considered as one item.

Table 8

| P320 | PS160 | B0 | B7 to B1 | Bandwidth (MHz) | RU or MRU size | RU or MRU index | PHY RU or MRU index |
|---|---|---|---|---|---|---|---|
| 0 to 5: 80 MHz frequency subblock where the RU is located | | | 0 to 8 | 20, 40, 80, 160, 320, or 480 | 26 | RU1 to RU9 | 37×N+RU index |
| | | | 9 to 17 | 40, 80, 160, 320, or 480 | | RU10 to RU18 | |
| | | | 18 | 80, 160, 320, or 480 | | Reserved | |
| | | | 19 to 36 | 80, 160, 320, or 480 | | RU20 to RU37 | |
| | | | 37 to 40 | 20, 40, 80, 160, 320, or 480 | 52 | RU1 to RU4 | 16×N+RU index |
| | | | 41 to 44 | 40, 80, 160, 320, or 480 | | RU5 to RU8 | |
| | | | 45 to 52 | 80, 160, 320, or 480 | | RU9 to RU16 | |
| | | | 53 and 54 | 20, 40, 80, 160, 320, or 480 | 106 | RU1 and RU2 | 8×N+RU index |
| | | | 55 and 56 | 40, 80, 160, 320, or 480 | | RU3 and RU4 | |
| | | | 57 to 60 | 80, 160, 320, or 480 | | RU5 to RU8 | |
| | | | 61 | 20, 40, 80, 160, 320, or 480 | 242 | RU1 | 4×N+RU index |
| | | | 62 | 40, 80, 160, 320, or 480 | | RU2 | |
| | | | 63 | 80, 160, | | RU3 and | |

(continued)

| P320 | PS160 | B0 | B7 to B1 | Bandwidth (MHz) | RU or MRU size | RU or MRU index | PHY RU or MRU index |
|---|---|---|---|---|---|---|---|
| | | | and 64 | 320, or 480 | | RU4 | |
| | | | 65 | 40, 80, 160, 320, or 480 | 484 | RU1 | 2$^x$N+RU index |
| | | | 66 | 80, 160, 320, or 480 | | RU2 | |
| | | | 67 | 80, 160, 320, or 480 | 996 | RU1 | N+RU index |
| 6 and 7 | | | 0 to 67 | 20, 40, 80, 160, 320, or 480 | Reserved | Reserved | Reserved |
| 0 to 2: 160 MHz segment where the RU is located | | 0 | 68 | 20, 40, 80, 160, 320, or 480 | Reserved | Reserved | Reserved |
| | | 1 | | 160, 320, or 480 | 2×996 | RU1 | 2×2+X1+RU index |
| 3 | | Any | | 20, 40, 80, 160, 320, or 480 | Reserved | Reserved | Reserved |
| 0 to 5: 80 MHz frequency subblock where the MRU is located | | | 70 | 20 or 40 | 52+26 | MRU1 | 12×N+MRU index |
| | | | | 80, 160, 320, or 480 | Reserved | Reserved | |
| | | | 71 and 72 | 20, 40, 80, 160, 320, or 480 | 52+26 | MRU2 and MRU3 | |
| | | | 73 and 74 | 40, 80, 160, 320, or 480 | 52+26 | MRU4 and MRU5 | |
| | | | 75 | 40 | 52+26 | MRU 6 | |
| | | | | 80, 160, 320, or 480 | Reserved | Reserved | |

(continued)

| P320 | PS160 | B0 | B7 to B1 | Bandwidth (MHz) | RU or MRU size | RU or MRU index | PHY RU or MRU index |
|---|---|---|---|---|---|---|---|
| | | | 76 | 80, 160, 320, or 480 | Reserved | Reserved | |
| | | | 77 to 80 | 80, 160, 320, or 480 | 52+26 | MRU8 to MRU11 | |
| | | | 81 | 20, 40, 80, 160, 320, or 480 | Reserved | Reserved | |
| | | | 82 | 20, 40, 80, 160, 320, or 480 | 106+26 | MRU1 | |
| | | | 83 | 20 or 40 | 106+26 | MRU2 | 8×N+MRU index |
| | | | | 80, 160, 320, or 480 | Reserved | Reserved | |
| | | | 84 | 40 | 106+26 | MRU3 | |
| | | | | 80, 160, 320, or 480 | Reserved | Reserved | |
| | | | 85 | 40, 80, 160, 320, or 480 | 106+26 | MRU4 | |
| | | | 86 | 80, 160, 320, or 480 | 106+26 | MRU5 | |
| | | | 87 and 88 | 20, 40, 80, 160, 320, or 480 | Reserved | Reserved | |
| | | | 89 | 80, 160, 320, or 480 | 106+26 | MRU8 | |
| | | | 90 to 93 | 80, 160, 320, or 480 | 484+242 | MRU1 to MRU4 | 4×N+MRU index |
| 6 and 7 | | | 70 to 93 | 20, 40, 80, 160, 320, or 480 | Reserved | Reserved | Reserved |
| 0 to 2: 160 MHz segment where the MRU is located | | 0 | 94 and 95 | 160, 320, or 480 | 996+484 | MRU1 and MRU2 | 8×2+4X1+MRU index |
| | | 1 | | | | MRU3 and MRU4 | |
| 3 | | Any | | 20, 40, 80, 160, 320, or 480 | Reserved | Reserved | Reserved |

(continued)

| P320 | PS160 | B0 | B7 to B1 | Bandwidth (MHz) | RU or MRU size | RU or MRU index | PHY RU or MRU index |
|---|---|---|---|---|---|---|---|
| 0: MRU is located on the primary 320 MHz | 0: MRU is located on the primary 160 MHz | 0 | 96 to 99 | 160 | 996+484+242 | MRU1 to MRU4 | MRU index |
| | | 1 | | | | MRU5 to MRU8 | |
| | 1 | Any | | 20, 40, 80, 160, 320, or 480 | Reserved | Reserved | Reserved |
| 1 | Any | Any | | | | | |

A last column in Table 8 indicates a resource unit index. For example, the first STA may first determine the fourth parameter, the third parameter, the second parameter, and the first parameter based on the first mapping relationship and the corresponding fields in the trigger frame, and then determine, with reference to the second mapping relationship, the resource unit index corresponding to the first uplink resource. Alternatively, after receiving the trigger frame, the first STA may substitute values of the first field, the PS160 field, and B0 and B1 to B7 in the RU allocation field that are included in the trigger frame into the second mapping relationship (for example, Table 8), so that the resource unit index corresponding to the first uplink resource can be directly determined. In this way, the first uplink resource is determined, and the foregoing parameters do not need to be determined.

Optionally, if the bandwidth of the first uplink resource is equal to 80 MHz (for example, the first uplink resource occupies 996 subcarriers), the first STA may not need to consider the second mapping relationship, but can determine, based on the first parameter, the second parameter, the third parameter, and the fourth parameter, the 80 MHz channel on which the first uplink resource is located. Alternatively, because a size of an RU or an MRU corresponding to a resource unit index included in the second mapping relationship also includes 996 subcarriers, the first STA may refer to the second mapping relationship. In other words, the first STA may determine, based on the second mapping relationship, the first parameter, the second parameter, the third parameter, and the fourth parameter, the 80 MHz channel on which the first uplink resource is located.

S603: The first STA sends the uplink data on the first uplink resource. Correspondingly, the AP receives the uplink data from the first STA.

The first STA may send a PPDU by using the first uplink resource. For example, the PPDU is an EHT TB PPDU. The PPDU may include the uplink data. For names, functions, and the like of fields included in the PPDU, refer to the related descriptions of S503 in the embodiment shown in FIG. 5.

Optionally, the method further includes S604: The AP sends an acknowledgment frame, and correspondingly, the first STA receives the acknowledgment frame. For more content of this step, refer to S504 in the embodiment shown in FIG. 5.

In conclusion, in this embodiment of this application, the first field is introduced into the trigger frame, and the first field and the PS160 field may indicate that the uplink resource allocated to the STA is located on the primary 160 MHz channel, the first secondary 160 MHz channel, or the second secondary 160 MHz channel. This is equivalent to that a resource in a 480 MHz channel bandwidth can be indicated. In this way, a format of the trigger frame can be adapted to a communication scenario with a larger channel bandwidth.

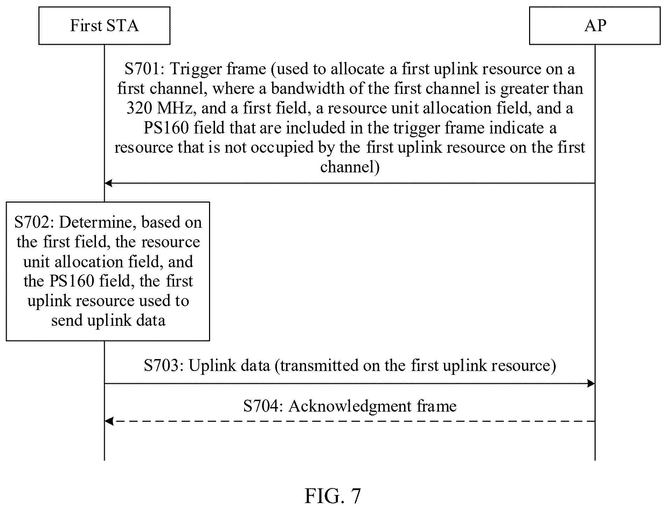

The following describes a third communication method according to an embodiment of this application. FIG. 7 is a flowchart of the method.

S701: An AP sends a trigger frame. Correspondingly, a first STA receives the trigger frame from the AP. The trigger frame may be used to allocate (or schedule) an uplink resource to one or more STAs. In this case, the one or more STAs can all receive the trigger frame. The first STA is any one of the one or more STAs. In this embodiment of this application, the first STA is used as an example for description.

An uplink resource allocated to the first STA by using the trigger frame is a first uplink resource, and the first uplink resource may be located on a first channel. In this embodiment of this application, a bandwidth of the first channel is greater than 320 MHz. For example, the bandwidth of the first channel is 480 MHz or 640 MHz, or may be a larger bandwidth. The trigger frame may include a first field, an RU allocation field, and a PS160 field. The first field, the RU allocation field, and the PS160 field may indicate a resource that is not occupied by the first uplink resource on the first channel, so that the first STA can accordingly determine a position of the first uplink resource on the first channel. For example, the first field may be represented as a PS320 field or a P320 field, or may be represented in another manner.

Optionally, the first field, the RU allocation field, and the PS160 field may indicate a first index corresponding to the first uplink resource. The first index is corresponding to a resource distribution manner, and the resource distribution manner is a distribution manner of the first uplink resource on the first channel, so that the first STA can determine the position of the first uplink resource on the first channel.

For example, a manner in which the first field, the RU allocation field, and the PS160 field may indicate the resource that is not occupied by the first uplink resource on the first channel may be a manner of "puncturing a hole" on the first channel. A position of the "hole" on the first channel is a position that is not occupied by the first uplink resource, and a position without the "hole" on the first channel is the position occupied by the first uplink resource. The first field, the RU allocation field, and the PS160 field may indicate the position of the "hole". This is equivalent to indicating the position of the first uplink resource on the first channel. The following describes cases in which the bandwidth of the first channel is 640 MHz and 480 MHz.

I. The bandwidth of the first channel is 640 MHz. For example, the first field is represented as the PS320 field.

A puncturing manner may vary with a size of the first uplink resource. The following uses examples for description.

1. The first uplink resource is an MRU occupying 4×996+484 subcarriers.

In this case, the first uplink resource may be considered as an MRU formed by puncturing three holes in a full bandwidth of 640 MHz. The three holes respectively occupy 2×996 consecutive subcarriers, 996 consecutive subcarriers, and 484 consecutive subcarriers. In other words, the first uplink resource does not occupy the 2×996 consecutive subcarriers, the 996 consecutive subcarriers, or the 484 consecutive subcarriers on the first channel. For example, the first channel is divided into two areas: an area A and an area B. For example, the area A is located at a low frequency, and the area B is located at a high frequency. Bandwidths of the two areas are both 320 MHz. Therefore, the area A may also be referred to as a low-frequency 320 MHz area, and the area B may also be referred to as a high-frequency 320 MHz area. The first field may indicate a first area, and the first area is the area A or the area B, and is also an area in which the hole occupying 2×996 subcarriers is located on the first channel. This is equivalent to puncturing the hole occupying 2×996 subcarriers. For example, the first field occupies 1 bit. When a value of the bit is "0", the area B is indicated. When a value of the bit is "1", the area A is indicated.

After the hole occupying 2×996 subcarriers is punctured, the first channel of the 640 MHz bandwidth still has 480 MHz, and the 480 MHz bandwidth may be further divided into two areas: an area C and an area D. For example, the area C is located at a low frequency, and the area D is located at a high frequency. Bandwidths of the two areas are both 240 MHz. Therefore, the area C may also be referred to as a low-frequency 240 MHz area, and the area D may also be referred to as a high-frequency 240 MHz area. The PS160 field may indicate a second area, and the second area is the area C or the area D, and is also an area in which the hole occupying 996 subcarriers is located. This is equivalent to puncturing the hole occupying 996 subcarriers. For example, the PS160 field occupies 1 bit. When a value of the bit is "0", the area D is indicated. When a value of the bit is "1", the area C is indicated.

After the hole occupying 2×996 subcarriers and the hole occupying 996 subcarriers are punctured, the first channel of the 640 MHz bandwidth still has 400 MHz, and the 400 MHz bandwidth may be further divided into two areas: an area E and an area F. For example, the area E is located at a low frequency, and the area F is located at a high frequency. Therefore, the area E may also be referred to as a low-frequency 200 MHz area, and the area F may also be referred to as a high-frequency 200 MHz area. The area E and the area F each include five subareas, and each subarea occupies 484 consecutive subcarriers. For example, a first subfield (for example, B0) included in the RU allocation field may indicate a third area, and the third area is the area E or the area F, and is also an area in which the to-be-punctured hole occupying 484 subcarriers is located. For example, when a value of B0 is "0", the area E is indicated. When a value of B0 is "1", the area F is indicated.

As described above, the first field, the RU allocation field, and the PS160 field may indicate the first index corresponding to the first uplink resource. The first STA may determine the first index corresponding to the first uplink resource based on the first field, the RU allocation field, and the PS160 field, to determine the position of the first uplink resource on the first channel based on the resource distribution manner corresponding to the first index. An optional manner in which the first STA determines the first index corresponding to the first uplink resource based on the first field, the RU allocation field, and the PS160 field includes: The first STA determines the first index corresponding to the first uplink resource based on a third mapping relationship, the first field, the RU allocation field, and the PS160 field. The third mapping relationship includes a mapping relationship between the first field, the RU allocation field, the PS160 field, and a resource distribution manner index. The third mapping relationship may be predefined in a protocol, pre-configured in the AP and the STA, or configured by the AP for the STA. For example, as shown in Table 9, the third mapping relationship may include one or more items in Table 9, where one row in Table 9 is considered as one item.

Table 9

| 10-bit RU allocation field | | | | MRU size | Position of a hole occupying 484 subcarriers | MRU index |
|---|---|---|---|---|---|---|
| PS320 | PS160 | B0 | B7 to B1 | | | |
| 0 | 0 | 0 | | | 0 to 4 | 1 to 5 |
| 0 | 0 | 1 | | | 5 to 9 | 6 to 10 |
| 0 | 1 | 0 | | | 0 to 4 | 11 to 15 |
| 0 | 1 | 1 | Y1 to Y5 | 4×996+48-4 | 5 to 9 | 16 to 20 |
| 1 | 0 | 0 | | | 0 to 4 | 21 to 25 |
| 1 | 0 | 1 | | | 5 to 9 | 26 to 30 |
| 1 | 1 | 0 | | | 0 to 4 | 31 to 35 |
| 1 | 1 | 1 | | | 5 to 9 | 36 to 40 |

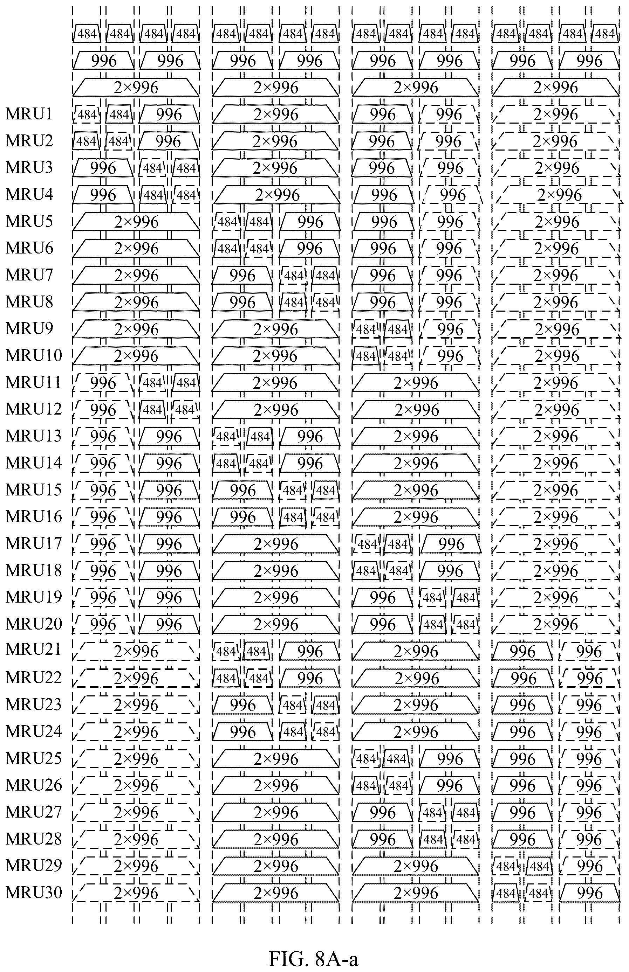

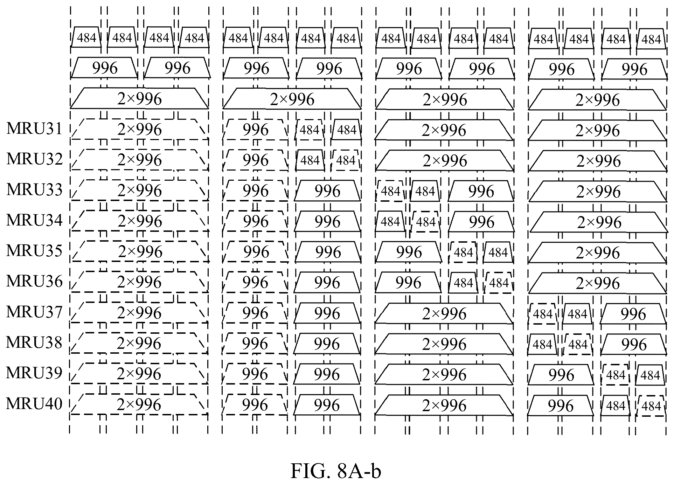

In Table 9, a hole occupying 484 subcarriers that is shown in a second to last column is one of the three to-be-punctured holes. Optionally, the third mapping relationship may not include the second to last column in Table 9, namely, the column in which the position of the hole occupying 484 subcarriers is located. After the hole occupying 2×996 subcarriers, the hole occupying 996 subcarriers, and the hole occupying 484 subcarriers are punctured on the first channel, there are 40 possible distribution manners of the first uplink resource whose size is 4×996+484 subcarriers on the first channel. Alternatively, it is understood that there are a total of 40 puncturing manners to puncture the hole occupying 2×996 subcarriers, the hole occupying 996 subcarriers, and the hole occupying 484 subcarriers on the first channel. FIG. 8A-a and FIG. 8A-b are diagrams of the 40 puncturing manners. FIG. 8A-a is a diagram of 30 puncturing manners, and FIG. 8A-b is a diagram of remaining 10 puncturing manners. In the puncturing diagrams shown in embodiments of this application, a trapezoidal box represented by a dashed line indicates a punctured part, and a trapezoidal box represented by a solid line indicates a part included in the first uplink resource or an unpunctured part. In FIG. 8A-a and FIG. 8A-b, a trapezoidal box indicates a frequency subblock (or referred to as a frequency unit, a frequency domain unit, a subblock, or the like), and a value in the trapezoidal box indicates a size of the frequency subblock, in a unit of a number of subcarriers. For example, if 484 consecutive subcarriers are considered as one frequency subblock, the first channel includes 16 frequency subblocks in total; or if 996 consecutive subcarriers are considered as one frequency subblock, the first channel includes 8 frequency subblocks in total; or if 2×996 consecutive subcarriers are considered as one frequency subblock, the first channel includes 4 frequency subblocks in total. This feature also applies to a subsequent puncturing diagram in embodiments of this application. The 40 distribution manners or the 40 puncturing manners are 40 resource distribution manners of the first channel on the first uplink resource. Each resource distribution manner may correspond to one index, so that the first STA can determine a resource distribution manner corresponding to an index provided that the first STA determines the index. In Table 9, symbols Y1 to Y5 indicate the 40 resource distribution manners. Y1 to Y5 may be five consecutive positive integers. For example, the five positive integers are all greater than 106 and less than or equal to 127. For example, in Table 9, when the value of the PS320 field is 0, the value of the PS160 field is 0, and B0 is 0, if a value of the 7 bits B7 to B1 is Y1, a corresponding index is 1, and the first STA may determine a resource distribution manner corresponding to the index 1, to determine the position of the MRU on the first channel. For another example, when the value of the PS320 field is 0, the value of the PS160 field is 0, and B0 is 0, if a value of the 7 bits B7 to B1 is Y2, a corresponding index is 2, and the first STA may determine a resource distribution manner corresponding to the index 2, to determine the position of the MRU on the first channel. Other examples are deduced by analogy. The first index is determined by using the third mapping relationship, so that an index determining process can be simplified.

FIG. 8A-a is used as an example to describe an indication manner of a field. In other accompanying drawings of embodiments of this application, an indication manner of a field is similar. For example, in the accompanying drawings of embodiments of this application, a frequency on the left is lower than a frequency on the right. In FIG. 8A-a, two groups of 2×996 subcarriers on the left are the area A, and two groups of 2×996 subcarriers on the right are the area B. For example, the index corresponding to the first uplink resource to be indicated by the AP is the index 1 (MRU1) in FIG. 8A-a. In the resource distribution manner corresponding to the index 1, a last group of 2×996 subcarriers are punctured as a hole, and the hole of the 2×996 subcarriers is located in the area B. In this case, the first field may indicate the area B. In addition to the last group of 2×996 subcarriers, the first channel still has the first three groups of 2×996 subcarriers, and the three groups of 2×996 subcarriers are evenly divided into the area C and the area D. The area C occupies the first three groups of 996 subcarriers, and the area D occupies the last three groups of 996 subcarriers. In this resource distribution manner, a hole of 996 subcarriers adjacent to the hole of the last group of 2×996 subcarriers is also punctured, and the hole of the 996 subcarriers is located in the area D. In this case, the PS160 field may indicate the area D. In addition to the hole of the 2×996 subcarriers and the hole of the 996 subcarriers that are punctured, the first channel still has the first five groups of 996 subcarriers, or has the first ten groups of 484 subcarriers. In this case, the ten groups of 484 subcarriers are evenly divided into the area E and the area F, the area E occupies the first five groups of 484 subcarriers, and the area F occupies the last five groups of 484 subcarriers. In this resource distribution manner, a 1st group of 484 subcarriers are punctured as a hole, and the hole of the 484 subcarriers is located in the area E. In this case, the first subfield in the RU allocation field may indicate the area E.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index satisfies the following relationship:

$$I=20\times PS320+10\times PS160+5\times B0+K-Y1+1 \quad \text{(Formula 7)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 7, so that the third mapping relationship is not required. This helps save storage space.

Optionally, the first STA may further determine the position of the hole occupying 484 subcarriers. For example, the position satisfies the following relationship:

$$5\times B0+K-Y1 \quad \text{(Formula 8)}$$

2. The first uplink resource is an MRU occupying 5×996 subcarriers, an MRU occupying 5×996+484 subcarriers, or an MRU occupying 6×996+484 subcarriers.

In the foregoing cases, the first uplink resource may be considered as an MRU formed by puncturing two holes in a full bandwidth of 640 MHz. The two holes are respectively a hole occupying a first number of consecutive subcarriers and a hole occupying a second number of consecutive subcarriers. In other words, the first uplink resource does not occupy the first number of consecutive subcarriers on the first channel, and does not occupy the second number of consecutive subcarriers on the first channel. For example, the first channel is divided into two areas: an area A and an area B. For example, the area A is located at a low frequency, and the area B is located at a high frequency. Bandwidths of the two areas are both 320 MHz. Therefore, the area A may also be referred to as a low-frequency 320 MHz area, and the area B may also be referred to as a high-frequency 320 MHz area. The first field may indicate a first area, and the first area is the area A or the area B, and is also an area in which the first number of subcarriers are located on the first channel. This is equivalent to puncturing the hole occupying the first number of subcarriers. For example, the first field occupies 1 bit. When a value of the bit is "0", the area B is indicated. When a value of the bit is "1", the area A is indicated.

The PS160 field and the RU allocation field (for example, a first subfield in the RU allocation field, for example, B0) may jointly indicate a frequency domain unit in which the second number of subcarriers are located on the first channel, for example, indicate frequency domain units in which the second number of subcarriers are located in the area A and the area B.

Alternatively, the PS160 field and the RU allocation field (for example, a first subfield in the RU allocation field, for example, B0) may jointly indicate a frequency domain unit in which the second number of subcarriers are located in a remaining area after the hole occupying the first number of subcarriers is punctured. For example, if the punctured first number of subcarriers occupy one frequency domain unit, the PS160 field and the RU allocation field jointly indicate a frequency domain unit in which the second number of subcarriers are located in a remaining frequency domain unit. Optionally, the frequency domain unit may occupy 2×996 consecutive subcarriers.

(1) The first uplink resource is an MRU occupying 5×996 subcarriers. In this case, the first number may be 2×996 subcarriers, and the second number may be 996 subcarriers. In other words, the two to-be-punctured holes are respectively a hole occupying 2×996 consecutive subcarriers and a hole occupying 996 consecutive subcarriers.

The PS160 field and B0 in the RU allocation field may jointly indicate a frequency domain unit in which the hole occupying 996 subcarriers is located on the first channel. For example, a first frequency domain unit occupies 2×996 consecutive subcarriers. In this case, the PS160 field and B0 in the RU allocation field may jointly indicate a group of 2×996 subcarriers in which the hole occupying 996 subcarriers is located on the first channel. The first channel includes a total of four first frequency domain units occupying 2×996 subcarriers. For example, when the value of the PS160 field is 0 and B0 is 0, the PS160 field and B0 are combined as "00", to indicate a 1st group of 2×996 subcarriers from a low frequency to a high frequency (namely, a 1st first frequency domain unit from the low frequency to the high frequency) on the first channel. When the value of the PS160 field is 0 and B0 is 1, the PS160 field and B0 are combined as "01", to indicate a 2nd group of

$2\times996$ subcarriers from the low frequency to the high frequency (namely, a $2^{nd}$ first frequency domain unit from the low frequency to the high frequency) on the first channel. When the value of the PS160 field is 1 and B0 is 0, the PS160 field and B0 are combined as "10", to indicate a $3^{rd}$ group of $2\times996$ subcarriers from the low frequency to the high frequency (namely, a $3^{rd}$ first frequency domain unit from the low frequency to the high frequency) on the first channel. When the value of the PS160 field is 1 and B0 is 1, the PS160 field and B0 are combined as "11", to indicate a $4^{th}$ group of $2\times996$ subcarriers from the low frequency to the high frequency (namely, a $4^{th}$ first frequency domain unit from the low frequency to the high frequency) on the first channel.

Alternatively, the PS160 field and B0 in the RU allocation field may jointly indicate a first frequency domain unit in which the hole occupying 996 subcarriers is located in a remaining area after the hole occupying $2\times996$ subcarriers is punctured. For example, the first frequency domain unit occupies $2\times996$ consecutive subcarriers. After the $2\times996$ subcarriers are punctured, three groups of $2\times996$ subcarriers remain in the first channel, that is, three first frequency domain units remain. In this case, the PS160 field and B0 in the RU allocation field may jointly indicate a first frequency domain unit in which the hole occupying 996 subcarriers is located in the three first frequency domain units. For example, when the value of the PS160 field is 0 and B0 is 0, the PS160 field and B0 are combined as "00", to indicate a $1^{st}$ group of $2\times996$ subcarriers from a low frequency to a high frequency in the remaining area after the hole occupying $2\times996$ subcarriers is punctured. When the value of the PS160 field is 0 and B0 is 1, the PS160 field and B0 are combined as "01", to indicate a $2^{nd}$ group of $2\times996$ subcarriers from the low frequency to the high frequency in the remaining area after the hole occupying $2\times996$ subcarriers is punctured. When the value of the PS160 field is 1 and B0 is 0, the PS160 field and B0 are combined as "10", to indicate a $3^{rd}$ group of $2\times996$ subcarriers from the low frequency to the high frequency in the remaining area after the hole occupying $2\times996$ subcarriers is punctured. When the value of the PS160 field is 1 and B0 is 1, the PS160 field and B0 are combined as "11", and this value is reserved.

The first field, the RU allocation field, and the PS160 field may indicate the first index corresponding to the first uplink resource. The first STA may determine the first index corresponding to the first uplink resource based on the first field, the RU allocation field, and the PS160 field, to determine the position of the first uplink resource on the first channel based on the resource distribution manner corresponding to the first index. An optional manner in which the first STA determines the first index corresponding to the first uplink resource based on the first field, the RU allocation field, and the PS160 field includes: The first STA determines the first index corresponding to the first uplink resource based on a third mapping relationship, the first field, the RU allocation field, and the PS160 field. The third mapping relationship includes a mapping relationship between the first field, the RU allocation field, the PS160 field, and a resource distribution manner index. The third mapping relationship may be predefined in a protocol, pre-configured in the AP and the STA, or configured by the AP for the STA. For example, as shown in Table 10, the third mapping relationship may include one or more items in Table 10, where one row in Table 10 is considered as one item. In Table 10, an example in which the PS160 field and B0 in the RU allocation field jointly indicate the frequency domain unit in which the 996 subcarriers are located on the first channel is used.

Table 10

| 10-bit RU allocation subfield | | | | MRU size | Position of a hole occupying 996 subcarriers | MRU index |
|---|---|---|---|---|---|---|
| PS320 | PS160 | B0 | B7 to B1 | | | |
| 0 | 0 | 0 | Y6 and Y7 | $5\times996$ | 0 and 1 | 1 and 2 |
| 0 | 0 | 1 | | | 2 and 3 | 3 and 4 |
| 0 | 1 | 0 | | | 4 and 5 | 5 and 6 |
| 0 | 1 | 1 | | | Reserved | Reserved |
| 1 | 0 | 0 | | | Reserved | Reserved |
| 1 | 0 | 1 | | | 2 and 3 | 7 and 8 |
| 1 | 1 | 0 | | | 4 and 5 | 9 and 10 |
| 1 | 1 | 1 | | | 6 and 7 | 11 and 12 |

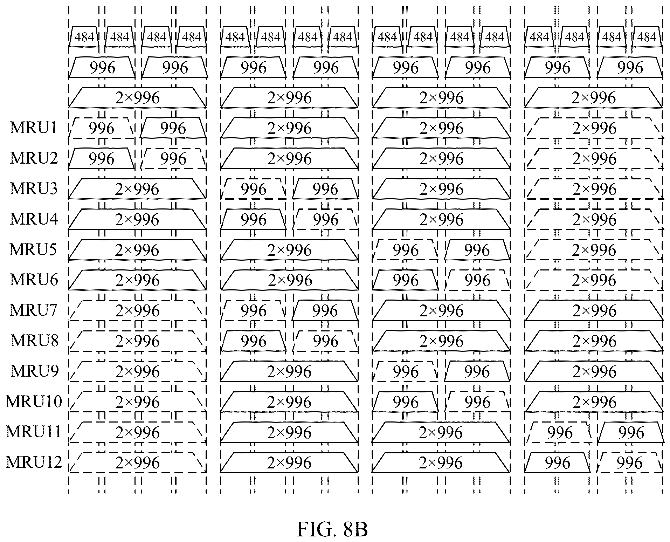

In Table 10, a hole occupying 996 subcarriers that is shown in a second to last column is one of the two to-be-punctured holes. Optionally, the third mapping relationship may not include the second to last column in Table 10, namely, the column in which the position of the hole occupying 996 subcarriers is located. After the hole occupying $2\times996$ subcarriers and the hole occupying 996 subcarriers are punctured on the first channel, there are 12 possible distribution manners of the first uplink resource whose size is $5\times996$ subcarriers on the first channel. Alternatively, it is understood that there are a total of 12 puncturing manners to puncture the hole occupying $2\times996$ subcarriers and the hole occupying 996 subcarriers on the first channel. FIG. 8B is a diagram of the 12 puncturing manners. In FIG. 8B, a trapezoidal box indicates a frequency subblock, and a value in the trapezoidal box indicates a size of the frequency subblock, in a unit of a number of subcarriers. The 12 distribution manners or the 12 puncturing manners are 12 resource distribution manners of the first channel on the first uplink resource. Each resource distribution manner may correspond to one index, so that the first STA can determine a resource distribution manner corresponding to an index provided that the first STA determines the index. In Table 10, symbols Y6 and Y7 indicate the 12 resource distribution manners. Y6 and Y7 may be two consecutive positive integers. For example, the two positive integers are both greater than 106 and less than or equal to 127. For example, in Table 10, when the value of the PS320 field is 0, the value of the PS160 field is 0, and B0 is 0, if a value of the 7 bits B7 to B1 is Y6, a corresponding index is 1, and the first STA may determine a resource distribution manner corresponding to the index 1, to determine the position of the MRU on the first channel. Other examples are deduced by analogy.

For another example, as shown in Table 11, the third mapping relationship may include one or more items in Table 11, where one row in Table 11 is considered as one item. In Table 11, an example in which the PS160 field and B0 in the RU allocation field jointly indicate the frequency domain unit in which the 996 subcarriers are located in the remaining area after the hole occupying 2×996 subcarriers is punctured is used.

Table 11

| 10-bit RU allocation subfield | | | | MRU size | Position of a hole occupying 996 subcarriers | MRU index |
|---|---|---|---|---|---|---|
| PS320 | PS160 | B0 | B7 to B1 | | | |
| 0 | 0 | 0 | Y6 and Y7 | 5×996 | 0 and 1 | 1 and 2 |
| 0 | 0 | 1 | | | 2 and 3 | 3 and 4 |
| 0 | 1 | 0 | | | 4 and 5 | 5 and 6 |
| 0 | 1 | 1 | | | Reserved | Reserved |
| 1 | 0 | 0 | | | 0 and 1 | 7 and 8 |
| 1 | 0 | 1 | | | 2 and 3 | 9 and 10 |
| 1 | 1 | 0 | | | 4 and 5 | 11 and 12 |
| 1 | 1 | 1 | | | Reserved | Reserved |

In Table 11, a hole occupying 996 subcarriers that is shown in a second to last column is one of the two to-be-punctured holes. Optionally, the third mapping relationship may not include the second to last column in Table 11, namely, the column in which the position of the hole occupying 996 subcarriers is located. For descriptions of Table 11, refer to the descriptions of Table 10. The first index is determined by using the third mapping relationship, so that an index determining process can be simplified.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, regardless of whether the PS160 field and B0 in the RU allocation field jointly indicate the first frequency domain unit in which the 996 subcarriers are located on the first channel, or jointly indicate the first frequency domain unit in which the 996 subcarriers are located in the remaining area after the 2×996 subcarriers are punctured, the first index may satisfy the following relationship:

$$I = 6 \times PS320 + 4 \times PS160 + 2 \times B0 + K - Y6 + 1 \text{ (Formula 9)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 9, so that the third mapping relationship is not required. This helps save storage space.

Optionally, the first STA may further determine the position of the hole occupying 996 subcarriers. For example, the position satisfies the following relationship:

$$4 \times PS160 + 2 \times B0 + K - Y6 \text{ (Formula 10)}$$

(2) The first uplink resource is an MRU occupying 5×996+484 subcarriers. In this case, the first number may be 2×996 subcarriers, and the second number may be 484 subcarriers. In other words, the two to-be-punctured holes are respectively a hole occupying 2×996 consecutive subcarriers and a hole occupying 484 consecutive subcarriers.

The PS160 field and B0 in the RU allocation field may jointly indicate a first frequency domain unit in which the hole occupying 484 subcarriers is located on the first channel, or the PS160 field and B0 in the RU allocation field may jointly indicate a first frequency domain unit in which the hole occupying 484 subcarriers is located in a remaining area after the hole occupying 2×996 subcarriers is punctured. For the two indication manners, refer to the descriptions of Case (1) in Case I.

The first field, the RU allocation field, and the PS160 field may indicate the first index corresponding to the first uplink resource. The first STA may determine the first index corresponding to the first uplink resource based on the first field, the RU allocation field, and the PS160 field, to determine the position of the first uplink resource on the first channel based on the resource distribution manner corresponding to the first index. An optional manner in which the first STA determines the first index corresponding to the first uplink resource based on the first field, the RU allocation field, and the PS160 field includes: The first STA determines the first index corresponding to the first uplink resource based on a third mapping relationship, the first field, the RU allocation field, and the PS160 field. The third mapping relationship includes a mapping relationship between the first field, the RU allocation field, the PS160 field, and a resource distribution manner index. The third mapping relationship may be predefined in a protocol, pre-configured in the AP and the STA, or configured by the AP for the STA. For example, as shown in Table 12, the third mapping relationship may include one or more items in Table 12, where one row in Table 12 is considered as one item. In Table 12, an example in which the PS160 field and B0 in the RU allocation field jointly indicate the first frequency domain unit in which the 484 subcarriers are located on the first channel is used.

Table 12

| 10-bit RU allocation subfield | | | | MRU size | Position of a hole occupying 484 subcarriers | MRU index |
|---|---|---|---|---|---|---|
| PS320 | PS160 | B0 | B7 to B1 | | | |
| 0 | 0 | 0 | Y8 to Y11 | 5×996+48-4 | 0, 1, 2, and 3 | 1, 2, 3, and 4 |
| 0 | 0 | 1 | | | 4, 5, 6, and 7 | 5, 6, 7, and 8 |
| 0 | 1 | 0 | | | 8, 9, 10, and 11 | 9, 10, 11, and 12 |
| 0 | 1 | 1 | | | Reserved | Reserved |
| 1 | 0 | 0 | | | Reserved | Reserved |
| 1 | 0 | 1 | | | 4, 5, 6, and 7 | 13, 14, 15, and 16 |
| 1 | 1 | 0 | | | 8, 9, 10, and 11 | 17, 18, 19, and 20 |
| 1 | 1 | 1 | | | 12, 13, 14, and 15 | 21, 22, 23, and 24 |

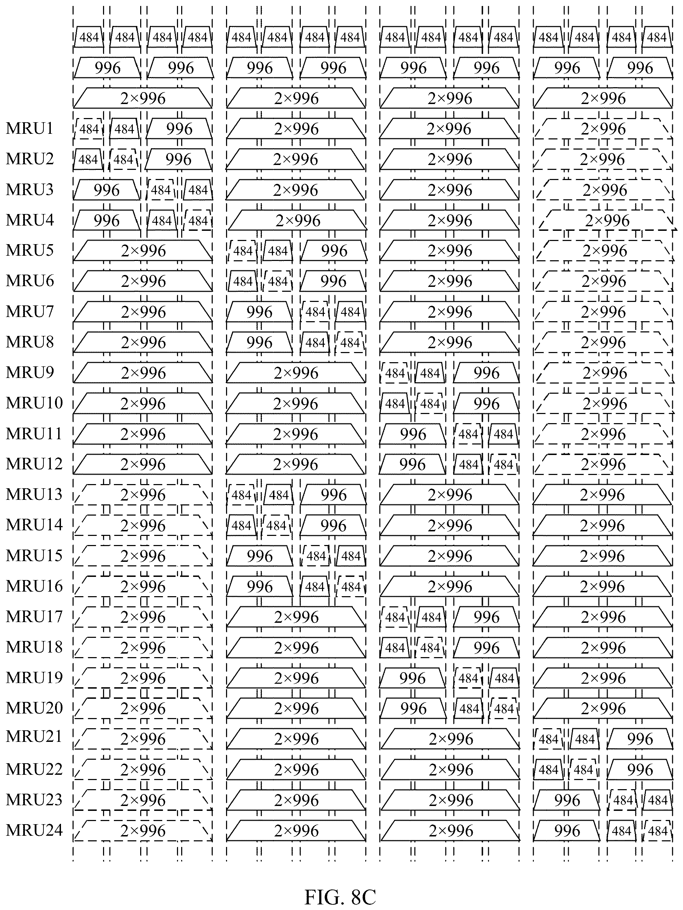

In Table 12, a hole occupying 484 subcarriers that is shown in a second to last column is one of the two to-be-punctured holes. Optionally, the third mapping relationship may not include the second to last column in Table 12, namely, the column in which the position of the hole occupying 484 subcarriers is located. After the hole occupying 2×996 subcarriers and the hole occupying 484 subcarriers are punctured on the first channel, there are 24 possible distribution manners of the first uplink resource whose size is 5×996+484 subcarriers on the first channel. Alternatively, it is understood that there are a total of 24 puncturing manners to puncture the hole occupying 2×996 subcarriers and the hole occupying 484 subcarriers on the first channel. FIG. 8C is a diagram of the 24 puncturing manners. In FIG. 8C, a trapezoidal box indicates a frequency subblock, and a value in the trapezoidal box indicates a size of the frequency subblock, in a unit of a number of subcarriers. The 24 distribution manners or the 24 puncturing manners are 24 resource distribution manners of the first channel on the first uplink resource. Each resource distribution manner may correspond to one index, so that the first STA can determine a resource distribution manner corresponding to an index provided that the first STA determines the index. In Table 12, symbols Y8 to Y11 indicate the 24 resource distribution manners. Y8 to Y11 may be four consecutive positive integers. For example, the four positive integers are all greater than 106 and less than or equal to 127. For example, in Table 12, when the value of the PS320 field is 0, the value of the PS160 field is 0, and B0 is 0, if a value of the 7 bits B7 to B1 is Y8, a corresponding index is 1, and the first STA may determine a resource distribution manner corresponding to the index 1, to determine the position of the MRU on the first channel. Other examples are deduced by analogy. The first index is determined by using the third mapping relationship, so that an index determining process can be simplified.

For another example, as shown in Table 13, the third mapping relationship may include one or more items in Table 13, where one row in Table 13 is considered as one item. In Table 13, an example in which the PS160 field and B0 in the RU allocation field jointly indicate the first frequency domain unit in which the 484 subcarriers are located in the remaining area after the hole occupying 2×996 subcarriers is punctured is used.

Table 13

| 10-bit RU allocation subfield | | | | MRU size | Position of a hole occupying 484 subcarriers | MRU index |
|---|---|---|---|---|---|---|
| PS320 | PS160 | B0 | B7 to B1 | | | |
| 0 | 0 | 0 | | | 0, 1, 2, and 3 | 1, 2, 3, and 4 |
| 0 | 0 | 1 | | | 4, 5, 6, and 7 | 5, 6, 7, and 8 |
| 0 | 1 | 0 | | | 8, 9, 10, and 11 | 9, 10, 11, and 12 |
| 0 | 1 | 1 | Y8 to Y11 | 5×996+48-4 | Reserved | Reserved |
| 1 | 0 | 0 | | | 0, 1, 2, and 3 | 13, 14, 15, and 16 |
| 1 | 0 | 1 | | | 4, 5, 6, and 7 | 17, 18, 19, and 20 |
| 1 | 1 | 0 | | | 8, 9, 10, and 11 | 21, 22, 23, and 24 |
| 1 | 1 | 1 | | | Reserved | Reserved |

In Table 13, a hole occupying 484 subcarriers that is shown in a second to last column is one of the two to-be-punctured holes. Optionally, the third mapping relationship may not include the second to last column in Table 13, namely, the column in which the position of the hole occupying 484 subcarriers is located. For descriptions of Table 13, refer to the descriptions of Table 12. The first index is determined by using the third mapping relationship, so that an index determining process can be simplified.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, regardless of whether the PS160 field and B0 in the RU allocation field jointly indicate the first frequency domain unit in which the 484 subcarriers are located on the first channel, or jointly indicate the first frequency domain unit in which the 484 subcarriers are located in the remaining area after the 2×996 subcarriers are punctured, the first index may satisfy the following relationship:

$$I=12×PS320+8×PS160+4×B0+K-Y8+1 \text{ (Formula 11)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 11, so that the third mapping relationship is not required. This helps save storage space.

Optionally, the first STA may further determine the position of the hole occupying 484 subcarriers. For example, the position satisfies the following relationship:

$$8×PS160+4×B0+K-Y8 \text{ (Formula 12)}$$

(3) The first uplink resource is an MRU occupying 6×996+484 subcarriers. In this case, the first number may be 996 subcarriers, and the second number may be 484 subcarriers. In other words, the two to-be-punctured holes are respectively a hole occupying 996 consecutive subcarriers and a hole occupying 484 consecutive subcarriers.

The PS160 field and B0 in the RU allocation field may jointly indicate a first frequency domain unit in which the hole occupying 484 subcarriers is located on the first channel. For the indication manner, refer to the descriptions of Case (1) in Case I.

The first field, the RU allocation field, and the PS160 field may indicate the first index corresponding to the first uplink resource. The first STA may determine the first index corresponding to the first uplink resource based on the first field, the RU allocation field, and the PS160 field, to determine the position of the first uplink resource on the first channel based on the resource distribution manner corresponding to the first index. An optional manner in which the first STA determines the first index corresponding to the first uplink resource based on the first field, the RU allocation field, and the PS160 field includes: The first STA determines the first index corresponding to the first uplink resource based on a third mapping relationship, the first field, the RU allocation field, and the PS160 field. The third mapping relationship includes a mapping relationship between the first field, the RU allocation field, the PS160 field, and a resource distribution manner index. The third mapping relationship may be predefined in a protocol, pre-configured in the AP and the STA, or configured by the AP for the STA. For example, as shown in Table 14, the third mapping relationship may include one or more items in Table 14, where one row in Table 14 is considered as one item. In Table 14, an example in which the PS160 field and B0 in the RU allocation field jointly indicate the first frequency domain unit in which the 484 subcarriers are located on the first channel is used.

Table 14

| 10-bit RU allocation subfield | | | | MRU size | Position of a hole occupying 484 subcarriers | MRU index |
|---|---|---|---|---|---|---|
| PS320 | PS160 | B0 | B7 to B1 | | | |
| 0 | 0 | 0 | Y13 to | 6×996+48-4 | 0, 1, 2, and 3 | 1, 2, 3, and 4 |
| 0 | 0 | 1 | Y16 | | 4, 5, 6, and 7 | 5, 6, 7, and 8 |
| 0 | 1 | 0 | | | 8, 9, 10, and 11 | 9, 10, 11, and 12 |
| 0 | 1 | 1 | Y13 and Y14 | | 12 and 13 | 13 and 14 |
| 0 | 1 | 1 | Y15 and Y16 | | Reserved | Reserved |
| 1 | 0 | 0 | Y13 and Y14 | | Reserved | Reserved |
| 1 | 0 | 0 | Y15 and Y16 | | 2 and 3 | 15 and 16 |
| 1 | 0 | 1 | Y13 to Y16 | | 4, 5, 6, and 7 | 17, 18, 19, and 20 |
| 1 | 1 | 0 | | | 8, 9, 10, and 11 | 21, 22, 23, and 24 |
| 1 | 1 | 1 | | | 12 and 13 | 25, 26, 27, and 28 |

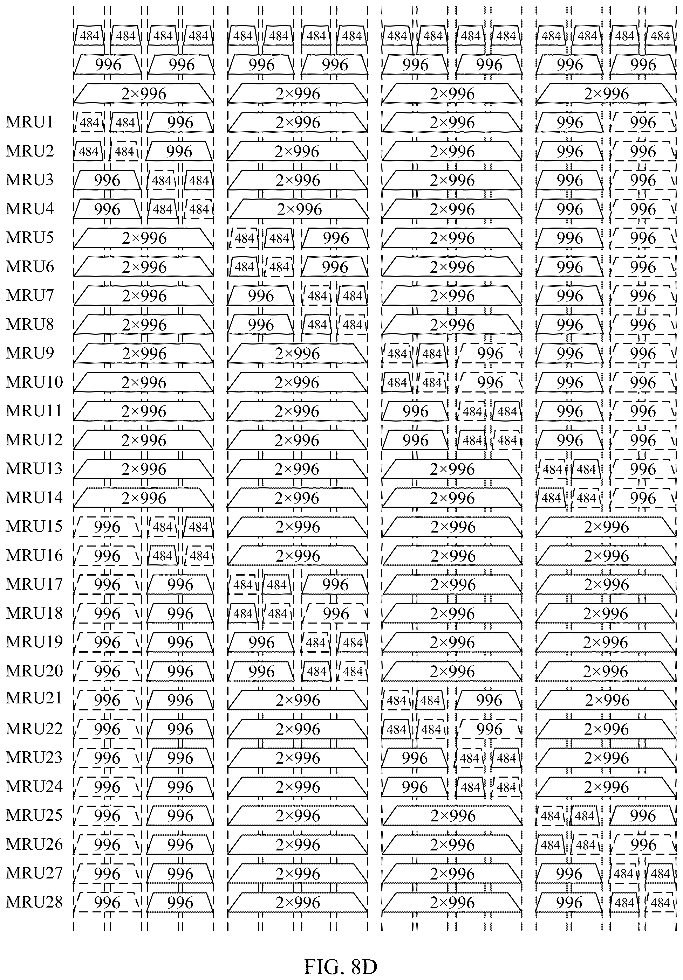

In Table 14, a hole occupying 484 subcarriers that is shown in a second to last column is one of the two to-be-punctured holes. Optionally, the third mapping relationship may not include the second to last column in Table 14, namely, the column in which the position of the hole occupying 484 subcarriers is located. After the hole occupying 996 subcarriers and the hole occupying 484 subcarriers are punctured on the first channel, there are 28 possible distribution manners of the first uplink resource whose size is 6×996+484 subcarriers on the first channel. Alternatively, it is understood that there are a total of 28 puncturing manners to puncture the hole occupying 996 subcarriers and the hole occupying 484 subcarriers on the first channel. FIG. 8D is a diagram of the 28 puncturing manners. In FIG. 8D, a trapezoidal box indicates a frequency subblock, and a value in the trapezoidal box indicates a size of the frequency subblock, in a unit of a number of subcarriers. The 28 distribution manners or the 28 puncturing manners are 28 resource distribution manners of the first channel on the first uplink resource. Each resource distribution manner may correspond to one index, so that the first STA can determine a resource distribution manner corresponding to an index provided that the first STA determines the index. In Table 14, symbols Y13 to Y16 indicate the 28 resource distribution manners. Y13 to Y16 may be four consecutive positive integers. For example, the four positive integers are all greater than 106 and less than or equal to 127. For example, in Table 14, when the value of the PS320 field is 0, the value of the PS160 field is 0, and B0 is 0, if a value of the 7 bits B7 to B1 is Y13, a corresponding index is 1, and the first STA may determine a resource distribution manner corresponding to the index 1, to determine the position of the MRU on the first channel. Other examples are deduced by analogy. The first index is determined by using the third mapping relationship, so that an index determining process can be simplified.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I = 14 \times PS320 + 8 \times PS160 + 4 \times B0 + K - Y13 + 1 \quad \text{(Formula 13)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 13, so that the third mapping relationship is not required. This helps save storage space.

Optionally, the first STA may further determine the position of the hole occupying 484 subcarriers. For example, the position satisfies the following relationship:

$$8 \times PS160 + 4 \times B0 + K - Y13 \quad \text{(Formula 14)}$$

3. The first uplink resource is an MRU occupying $6 \times 996$ subcarriers, an MRU occupying $7 \times 996$ subcarriers, or an MRU occupying $7 \times 996 + 484$ subcarriers.

In this case, the first uplink resource may be considered as an MRU formed by puncturing one hole in a full bandwidth of 640 MHz. For example, a size of the hole is a third number of subcarriers. In other words, the first uplink resource does not occupy the third number of consecutive subcarriers on the first channel. For example, the first channel may include a plurality of first frequency domain units. In this case, at least two fields in the first field, the first subfield in the RU allocation field, or the PS160 field may jointly indicate a first frequency domain unit in which the third number of subcarriers are located on the first channel. How to select the at least two fields may be predefined in a protocol, pre-configured in the AP and the STA, or configured by the AP for the STA. Optionally, in the first field, the first subfield, and the PS160 field, if there is a remaining field in addition to the at least two fields, the remaining field may be invalid or meaningless. Optionally, the first frequency domain unit may occupy $2 \times 996$ consecutive subcarriers, or occupy 996 consecutive subcarriers. Alternatively, a frequency domain unit occupying 996 consecutive subcarriers may be referred to as a second frequency domain unit.

  (1) The first uplink resource is an MRU occupying $6 \times 996$ subcarriers. In this case, the third number may be $2 \times 996$ subcarriers. In other words, a to-be-punctured hole is a hole occupying $2 \times 996$ consecutive subcarriers.

For example, the PS160 field and B0 in the RU allocation field jointly indicate a first frequency domain unit in which the hole occupying $2 \times 996$ subcarriers is located on the first channel. In this case, the PS160 field and B0 in the RU allocation field may jointly indicate a group of $2 \times 996$ subcarriers in which the hole occupying $2 \times 996$ subcarriers is located on the first channel. For example, if B0 is invalid, it may be set that B0 is a reserved bit when a value of B0 is "1", or it may be set that B0 is a reserved bit when a value of B0 is "0". The first channel includes a total of four $2 \times 996$-subcarrier subblocks. For example, when the value of the PS160 field is 0 and B0 is 0, the PS160 field and B0 are combined as "00", to indicate a $1^{st}$ group of $2 \times 996$ subcarriers from a low frequency to a high frequency on the first channel. When the value of the PS160 field is 0 and B0 is 1, the PS160 field and B0 are combined as "01", to indicate a $2^{nd}$ group of $2 \times 996$ subcarriers from the low frequency to the high frequency on the first channel. When the value of the PS160 field is 1 and B0 is 0, the PS160 field and B0 are combined as "10", to indicate a $3^{rd}$ group of $2 \times 996$ subcarriers from the low frequency to the high frequency on the first channel. When the value of the PS160 field is 1 and B0 is 1, the PS160 field and B0 are combined as "11", to indicate a $4^{th}$ group of $2 \times 996$ subcarriers from the low frequency to the high frequency on the first channel.

At least two fields in the first field, the first subfield, and the PS160 field may indicate the first index corresponding to the first uplink resource. The first STA may determine the first index corresponding to the first uplink resource based on the at least two fields, to determine the position of the first uplink resource on the first channel based on the resource distribution manner corresponding to the first index. An optional manner in which the first STA determines the first index corresponding to the first uplink resource based on the at least two fields includes: The first STA determines the first index corresponding to the first uplink resource based on a third mapping relationship and the at least two fields. The third mapping relationship includes a mapping relationship between the at least two fields and a resource distribution manner index. The third mapping relationship may be predefined in a protocol, pre-configured in the AP and the STA, or configured by the AP for the STA. For example, as shown in Table 15, the third mapping relationship may include one or more items in Table 15, where one row in Table 15 is considered as one item. In Table 15, an example in which the at least two fields are the PS160 field and the first field and it is set that B0 is a reserved bit when the value of B0 is "1" is used.

Table 15

| 10-bit RU allocation subfield | | | | MRU size | Position of a hole occupying $2 \times 996$ subcarriers | MRU index | MRU index |
|---|---|---|---|---|---|---|---|
| PS320 | PS160 | B0 | B7 to B1 | | | | |
| 0 | 0 | 0 | | | 0 | 1 | MRU1 |
| 0 | 0 | 1 | | | Reserved | Reserved | Reserved |
| 0 | 1 | 0 | | | 1 | 2 | MRU2 |
| 0 | 1 | 1 | Y12 | $6 \times 99$-6 | Reserved | Reserved | Reserved |
| 1 | 0 | 0 | | | 2 | 3 | MRU3 |
| 1 | 0 | 1 | | | Reserved | Reserved | Reserved |
| 1 | 1 | 0 | | | 3 | 4 | MRU4 |

(continued)

| 10-bit RU allocation subfield | | | | MRU size | Position of a hole occupying 2×996 subcarriers | MRU index | MRU index |
|---|---|---|---|---|---|---|---|
| PS320 | PS160 | B0 | B7 to B1 | | | | |
| 1 | 1 | 1 | | | Reserved | Reserved | Reserved |

In Table 15, a hole occupying 2×996 subcarriers that is shown in a third to last column is one of the two to-be-punctured holes. Optionally, the third mapping relationship may not include the second to last column in Table 15, namely, the column in which the position of the hole occupying 2×996 subcarriers is located. After the hole occupying 2×996 subcarriers is punctured on the first channel, there are four possible distribution manners of the first uplink resource whose size is 6×996 subcarriers on the first channel. Alternatively, it is understood that there are a total of four puncturing manners to puncture the hole occupying 2×996 subcarriers on the first channel. FIG. 8E is a diagram of the four puncturing manners. In FIG. 8E, a trapezoidal box indicates a frequency subblock, and a value in the trapezoidal box indicates a size of the frequency subblock, in a unit of a number of subcarriers. The four distribution manners or the four puncturing manners are four resource distribution manners of the first channel on the first uplink resource. Each resource distribution manner may correspond to one index, so that the first STA can determine a resource distribution manner corresponding to an index provided that the first STA determines the index. In Table 15, a symbol Y12 indicates the four resource distribution manners. Y12 may be a positive integer. For example, the positive integer is greater than 106 and less than or equal to 127. For example, in Table 15, when the value of the PS320 field is 0, the value of the PS160 field is 0, and B0 is 0, if a value of the 7 bits B7 to B1 is Y12, a corresponding index is 1, and the first STA may determine a resource distribution manner corresponding to the index 1, to determine the position of the MRU on the first channel. Other examples are deduced by analogy.

For another example, as shown in Table 16, the third mapping relationship may include one or more items in Table 16, where one row in Table 16 is considered as one item. In Table 16, an example in which the at least two fields are the PS160 field and the first field and it is set that B0 is a reserved bit when the value of B0 is "0" is used.

Table 16

| 10-bit RU allocation subfield | | | | MRU size | Position of a hole occupying 2×996 subcarriers | MRU index | MRU index |
|---|---|---|---|---|---|---|---|
| PS320 | PS160 | B0 | B7 to B1 | | | | |
| 0 | 0 | 0 | Y12 | 6×99-6 | Reserved | Reserved | Reserved |
| 0 | 0 | 1 | | | 0 | 1 | MRU1 |
| 0 | 1 | 0 | | | Reserved | Reserved | Reserved |
| 0 | 1 | 1 | | | 1 | 2 | MRU2 |
| 1 | 0 | 0 | | | Reserved | Reserved | Reserved |
| 1 | 0 | 1 | | | 2 | 3 | MRU3 |
| 1 | 1 | 0 | | | Reserved | Reserved | Reserved |
| 1 | 1 | 1 | | | 3 | 4 | MRU4 |

In Table 16, a hole occupying 2×996 subcarriers that is shown in a third to last column is the to-be-punctured hole. Optionally, the third mapping relationship may not include the third to last column in Table 16, namely, the column in which the position of the hole occupying 2×996 subcarriers is located. For descriptions of Table 16, refer to the descriptions of Table 15. The first index is determined by using the third mapping relationship, so that an index determining process can be simplified.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I=2\times PS320+PS160+K-Y12+1 \text{ (Formula 15)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 15, so that the third mapping relationship is not required. This helps save storage space.

Optionally, the first STA may further determine the position of the hole occupying 996 subcarriers. For example, the position satisfies the following relationship:

$$2 \times PS320 + PS160 + K - Y12 \quad \text{(Formula 16)}$$

(2) The first uplink resource is an MRU occupying $7 \times 996$ subcarriers. In this case, the third number may be 996 subcarriers. In other words, a to-be-punctured hole is a hole occupying 996 consecutive subcarriers.

For example, a frequency domain unit occupies 996 consecutive subcarriers. For example, the first field, the PS160 field, and B0 in the RU allocation field jointly indicate a first frequency domain unit (or a second frequency domain unit) in which a hole occupying $2 \times 996$ subcarriers is located on the first channel. In this case, the first field, the PS160 field, and B0 in the RU allocation field may jointly indicate a group of 996 subcarriers in which the hole occupying 996 subcarriers is located on the first channel. For example, when the value of the first field is 0, the value of the PS160 field is 0, and B0 is 0, the PS160 field and B0 are combined as "000", to indicate a $1^{st}$ group of 996 subcarriers from a low frequency to a high frequency on the first channel. When the value of the first field is 0, the value of the PS160 field is 0, and B0 is 1, the PS160 field and B0 are combined as "001", to indicate a $2^{nd}$ group of 996 subcarriers from the low frequency to the high frequency on the first channel. When the value of the first field is 0, the value of the PS160 field is 1, and B0 is 0, the PS160 field and B0 are combined as "010", to indicate a $3^{rd}$ group of 996 subcarriers from the low frequency to the high frequency on the first channel. When the value of the first field is 0, the value of the PS160 field is 1, and B0 is 1, the PS160 field and B0 are combined as "011", to indicate a $4^{th}$ group of 996 subcarriers from the low frequency to the high frequency on the first channel. When the value of the first field is 1, the value of the PS160 field is 0, and B0 is 0, the PS160 field and B0 are combined as "100", to indicate a $5^{th}$ group of 996 subcarriers from the low frequency to the high frequency on the first channel. When the value of the first field is 1, the value of the PS160 field is 0, and B0 is 1, the PS160 field and B0 are combined as "101", to indicate a $6^{th}$ group of 996 subcarriers from the low frequency to the high frequency on the first channel. When the value of the first field is 1, the value of the PS160 field is 1, and B0 is 0, the PS160 field and B0 are combined as "110", to indicate a $7^{th}$ group of 996 subcarriers from the low frequency to the high frequency on the first channel. When the value of the first field is 1, the value of the PS160 field is 1, and B0 is 1, the PS160 field and B0 are combined as "111", to indicate an $8^{th}$ group of 996 subcarriers from the low frequency to the high frequency on the first channel.

The first field, the first subfield, and the PS160 field may indicate the first index corresponding to the first uplink resource. The first STA may determine the first index corresponding to the first uplink resource based on the three fields, to determine the position of the first uplink resource on the first channel based on the resource distribution manner corresponding to the first index. An optional manner in which the first STA determines the first index corresponding to the first uplink resource based on the three fields includes: The first STA determines the first index corresponding to the first uplink resource based on a third mapping relationship and the three fields. The third mapping relationship includes a mapping relationship between the three fields and a resource distribution manner index. The third mapping relationship may be predefined in a protocol, pre-configured in the AP and the STA, or configured by the AP for the STA. For example, as shown in Table 17, the third mapping relationship may include one or more items in Table 17, where one row in Table 17 is considered as one item.

Table 17

| 10-bit RU allocation subfield | | | | MRU size | Position of a hole occupying 996 subcarriers | MRU index | MRU index |
|---|---|---|---|---|---|---|---|
| PS320 | PS160 | B0 | B7 to B1 | | | | |
| 0 | 0 | 0 | | | 0 | 1 | MRU1 |
| 0 | 0 | 1 | | | 1 | 2 | MRU2 |
| 0 | 1 | 0 | | | 2 | 3 | MRU3 |
| 0 | 1 | 1 | Y17 | $7 \times 996$ | 3 | 4 | MRU4 |
| 1 | 0 | 0 | | | 4 | 5 | MRU5 |
| 1 | 0 | 1 | | | 5 | 6 | MRU6 |
| 1 | 1 | 0 | | | 6 | 7 | MRU7 |

(continued)

| 10-bit RU allocation subfield | | | | MRU size | Position of a hole occupying 996 subcarriers | MRU index | MRU index |
|---|---|---|---|---|---|---|---|
| PS320 | PS160 | B0 | B7 to B1 | | | | |
| 1 | 1 | 1 | | | 7 | 8 | MRU8 |

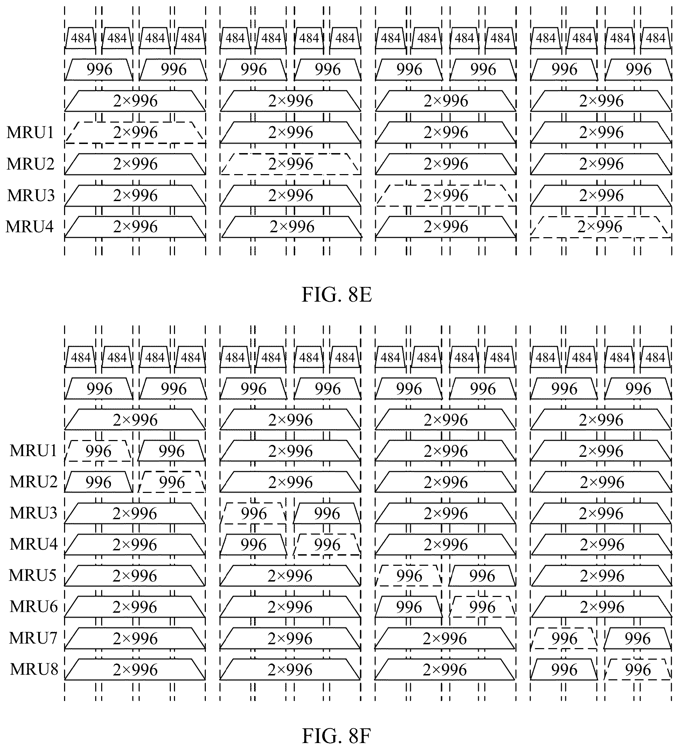

In Table 17, a hole occupying 996 subcarriers that is shown in a third to last column is the to-be-punctured hole. Optionally, the third mapping relationship may not include the third to last column in Table 17, namely, the column in which the position of the hole occupying 996 subcarriers is located. After the hole occupying 996 subcarriers is punctured on the first channel, there are eight possible distribution manners of the first uplink resource whose size is $7\times996$ subcarriers on the first channel. Alternatively, it is understood that there are a total of eight puncturing manners to puncture the hole occupying 996 subcarriers on the first channel. FIG. 8F is a diagram of the eight puncturing manners. In FIG. 8F, a trapezoidal box indicates a frequency subblock, and a value in the trapezoidal box indicates a size of the frequency subblock, in a unit of a number of subcarriers. The eight distribution manners or the eight puncturing manners are eight resource distribution manners of the first channel on the first uplink resource. Each resource distribution manner may correspond to one index, so that the first STA can determine a resource distribution manner corresponding to an index provided that the first STA determines the index. In Table 17, a symbol Y17 indicates the eight resource distribution manners. Y17 may be a positive integer. For example, the positive integer is greater than 106 and less than or equal to 127. For example, in Table 17, when the value of the PS320 field is 0, the value of the PS160 field is 0, and B0 is 0, if a value of the 7 bits B7 to B1 is Y12, a corresponding index is 1, and the first STA may determine a resource distribution manner corresponding to the index 1, to determine the position of the MRU on the first channel. Other examples are deduced by analogy.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I=4\times PS320+2\times PS160+B0+K-Y17+1 \text{ (Formula 17)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 17, so that the third mapping relationship is not required. This helps save storage space.

Optionally, the first STA may further determine the position of the hole occupying 996 subcarriers. For example, the position satisfies the following relationship:

$$4\times PS320+2\times PS160+B0+K-Y17 \text{ (Formula 18)}$$

(3) The first uplink resource is an MRU occupying $7\times996+484$ subcarriers. In this case, the third number may be 484 subcarriers. In other words, a to-be-punctured hole is a hole occupying 484 consecutive subcarriers.

For example, a frequency domain unit occupies $2\times996$ consecutive subcarriers, and the PS160 field and B0 in the RU allocation field may jointly indicate a first frequency domain unit in which the hole occupying 484 subcarriers is located on the first channel. In this case, the PS160 field and B0 in the RU allocation field may jointly indicate a group of $2\times996$ subcarriers in which the hole occupying 484 subcarriers is located on the first channel. For the indication manner, refer to the descriptions of Case 1 in Case II. Because a size of the punctured hole is less than half of a size of one first frequency domain unit, B0 may indicate a position of the hole occupying 484 subcarriers in one first frequency domain unit. For example, B0 may indicate that the hole occupying 484 subcarriers is located on 996 low-frequency subcarriers or 996 high-frequency subcarriers in the first frequency domain unit. For example, when a value of B0 is "0", it indicates that the hole occupying 484 subcarriers is located on the 996 low-frequency subcarriers in the first frequency domain unit in which the hole is located; or when a value of B0 is "1", it indicates that the hole occupying 484 subcarriers is located on the 996 high-frequency subcarriers in the first frequency domain unit in which the hole is located.

The first field, the first subfield, and the PS160 field may indicate the first index corresponding to the first uplink resource. The first STA may determine the first index corresponding to the first uplink resource based on the three fields, to determine the position of the first uplink resource on the first channel based on the resource distribution manner corresponding to the first index. An optional manner in which the first STA determines the first index corresponding to the first uplink resource based on the three fields includes: The first STA determines the first index corresponding to the first uplink resource based on a third mapping relationship and the three fields. The third mapping relationship includes a mapping relationship between the three fields and a resource distribution manner index. The third mapping relationship may be predefined in a protocol, pre-configured in the AP and the STA, or configured by the AP for the STA. For example, as shown in Table 18, the third mapping relationship may include one or more items in Table 18, where one row in Table 18 is considered as one item.

Table 18

| 10-bit RU allocation subfield | | | | MRU size | Position of a hole occupying 484 subcarriers | MRU index |
|---|---|---|---|---|---|---|
| PS320 | PS160 | B0 | B7 to B1 | | | |
| 0 | 0 | 0 | Y18 and Y19 | 7×996+48-4 | 0 and 1 | 1 and 2 |
| 0 | 0 | 1 | | | 2 and 3 | 3 and 4 |
| 0 | 1 | 0 | | | 4 and 5 | 5 and 6 |
| 0 | 1 | 1 | | | 6 and 7 | 7 and 8 |
| 1 | 0 | 0 | | | 8 and 9 | 9 and 10 |
| 1 | 0 | 1 | | | 10 and 11 | 11 and 12 |
| 1 | 1 | 0 | | | 12 and 13 | 13 and 14 |
| 1 | 1 | 1 | | | 14 and 15 | 15 and 16 |

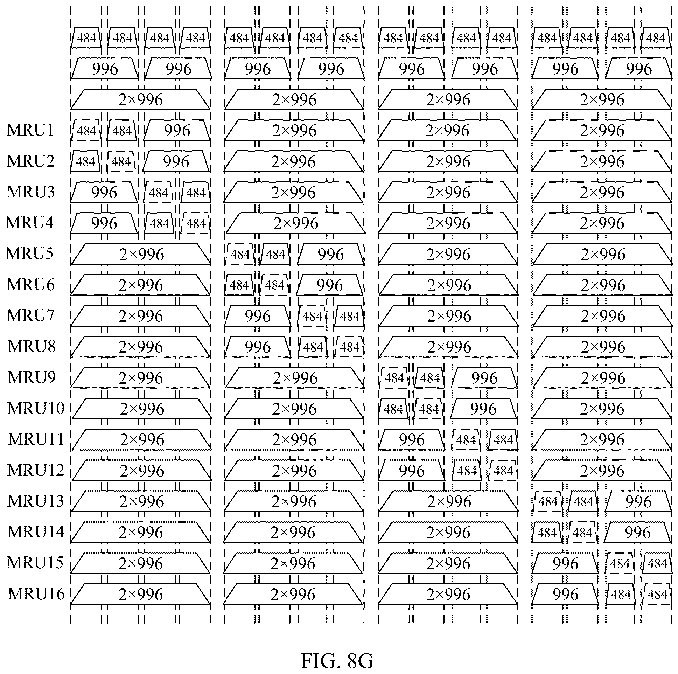

In Table 18, a hole occupying 484 subcarriers that is shown in a second to last column is the to-be-punctured hole. Optionally, the third mapping relationship may not include the second to last column in Table 18, namely, the column in which the position of the hole occupying 484 subcarriers is located. After the hole occupying 484 subcarriers is punctured on the first channel, there are 16 possible distribution manners of the first uplink resource whose size is 7×996+484 subcarriers on the first channel. Alternatively, it is understood that there are a total of 16 puncturing manners to puncture the hole occupying 484 subcarriers on the first channel. FIG. 8G is a diagram of the 16 puncturing manners. In FIG. 8G, a trapezoidal box indicates a frequency subblock, and a value in the trapezoidal box indicates a size of the frequency subblock, in a unit of a number of subcarriers. The 16 distribution manners or the 16 puncturing manners are 16 resource distribution manners of the first channel on the first uplink resource. Each resource distribution manner may correspond to one index, so that the first STA can determine a resource distribution manner corresponding to an index provided that the first STA determines the index. In Table 18, symbols Y18 and Y19 indicate the 16 resource distribution manners. Y18 and Y19 may be two consecutive positive integers. For example, the two positive integers are both greater than 106 and less than or equal to 127. For example, in Table 18, when the value of the PS320 field is 0, the value of the PS160 field is 0, and B0 is 0, if a value of the 7 bits B7 to B1 is Y18, a corresponding index is 1, and the first STA may determine a resource distribution manner corresponding to the index 1, to determine the position of the MRU on the first channel. Other examples are deduced by analogy.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I=8\times PS320+4\times PS160+2\times B0+K-Y18+1 \text{ (Formula 19)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 19, so that the third mapping relationship is not required. This helps save storage space.

Optionally, the first STA may further determine the position of the hole occupying 484 subcarriers. For example, the position satisfies the following relationship:

$$8\times PS320+2\times B0+K-Y18 \text{ (Formula 20)}$$

4. The first uplink resource is an MRU occupying 8×996 subcarriers.
In this case, the first uplink resource fully occupies the first channel, and no hole needs to be punctured on the first channel.

The first field, the first subfield, and the PS160 field may indicate the first index corresponding to the first uplink resource. The first STA may determine the first index corresponding to the first uplink resource based on the three fields, to determine the position of the first uplink resource on the first channel based on the resource distribution manner corresponding to the first index. An optional manner in which the first STA determines the first index corresponding to the first uplink resource based on the three fields includes: The first STA determines the first index corresponding to the first uplink resource based on a third mapping relationship and the three fields. The third mapping relationship includes a mapping relationship between the three fields and a resource distribution manner index. The third mapping relationship may be predefined in a protocol, pre-configured in the AP and the STA, or configured by the AP for the STA. For example, as shown in Table 19, the third mapping relationship may include one or more items in Table 19, where one row in Table 19 is considered as one item.

Table 19

| 10-bit RU allocation subfield | | | | MRU size | MRU index | MRU index |
|---|---|---|---|---|---|---|
| PS320 | PS160 | B0 | B7 to B1 | | | |
| 0 | 0 | 0 | | | 1 | RU1 |
| 0 | 0 | 1 | | | | |
| 0 | 1 | 0 | | | | |
| 0 | 1 | 1 | Y20 | 8×996 | | |
| 1 | 0 | 0 | | | Reserved | Reserved |
| 1 | 0 | 1 | | | | |
| 1 | 1 | 0 | | | | |
| 1 | 1 | 1 | | | | |

No hole is punctured on the first channel, and there is one possible distribution manner of the first uplink resource whose size is 8×996 subcarriers on the first channel. The distribution manner is one resource distribution manner of the first channel on the first uplink resource. The resource distribution manner may correspond to one index, and an example in which the index is 1 is used in Table 19. Therefore, the first STA can determine the resource distribution manner corresponding to the index provided that the first STA determines the index. In Table 19, a symbol Y120 indicates the resource distribution manner. Y20 may be a positive integer. For example, the positive integer is greater than 106 and less than or equal to 127. For example, in Table 19, when the value of the PS320 field is 0, the value of the PS160 field is 0, and B0 is 0, if a value of the 7 bits B7 to B1 is Y20, a corresponding index is 1, and the first STA may determine a resource distribution manner corresponding to the index 1, to determine the position of the MRU on the first channel. Other examples are deduced by analogy.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I=K-Y20+1 \quad \text{(Formula 21)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 21, so that the third mapping relationship is not required. This helps save storage space.

II. The bandwidth of the first channel is 480 MHz. For example, the first field is represented as the P320 field.

A puncturing manner may vary with a size of the first uplink resource. The following uses examples for description.

1. The first uplink resource is an MRU occupying 2×996+484 subcarriers.

In this case, the first uplink resource may be considered as an MRU formed by puncturing three holes in a full bandwidth of 480 MHz. The three holes respectively occupy 2×996 consecutive subcarriers, 996 consecutive subcarriers, and 484 consecutive subcarriers. In other words, the first uplink resource does not occupy the 2×996 consecutive subcarriers, the 996 consecutive subcarriers, or the 484 consecutive subcarriers on the first channel. For example, the first channel is divided into two areas: an area P and an area Q. For example, the area P is located at a low frequency, and the area Q is located at a high frequency. Bandwidths of the two areas are both 240 MHz. Therefore, the area P may also be referred to as a low-frequency 240 MHz area, and the area Q may also be referred to as a high-frequency 240 MHz area. The first field may indicate a fourth area, and the fourth area is the area P or the area Q, and is also an area in which the hole occupying 2×996 subcarriers is located on the first channel. This is equivalent to puncturing the hole occupying 2×996 subcarriers. For example, the first field occupies 1 bit. When a value of the bit is "0", the area Q is indicated. When a value of the bit is "1", the area P is indicated.

After the hole occupying 2×996 subcarriers is punctured, the first channel of the 480 MHz bandwidth still has 320 MHz, and the 320 MHz bandwidth may be further divided into two areas: an area R and an area S. For example, the area R is located at a low frequency, and the area S is located at a high frequency. Bandwidths of the two areas are both 160 MHz. Therefore, the area R may also be referred to as a low-frequency 160 MHz area, and the area S may also be referred to as a high-frequency 160 MHz area. The PS160 field may indicate a fifth area, and the fifth area is the area R or the area S, and is also an area in which the hole occupying 996 subcarriers is located. This is equivalent to puncturing the hole occupying 996 subcarriers. For example, the PS160 field occupies 1 bit. When a value of the bit is "0", the area S is indicated. When a value of the bit is "1", the area R is indicated.

After the hole occupying 2×996 subcarriers and the hole occupying 996 subcarriers are punctured, the first channel of the 480 MHz bandwidth still has 400 MHz, and the 400 MHz bandwidth may be further divided into two areas: an area T and an area U. For example, the area T is located at a low frequency, and the area U is located at a high frequency. Therefore, the area T may also be referred to as a low-frequency 120 MHz area, and the area U may also be referred to as a high-frequency 120 MHz area. The area T and the area U each include four subareas, and each subarea occupies 484 consecutive subcarriers. For example, a first subfield (for example, B0) included in the RU allocation field may indicate a sixth area, and the sixth area is the area T or the area U, and is also an area in which the to-be-punctured hole occupying 484 subcarriers is located. For example, when a value of B0 is "0", the area T is indicated. When a value of B0 is "1", the area U is indicated.

As described above, the first field, the RU allocation field, and the PS160 field may indicate the first index corresponding to the first uplink resource. The first STA may determine the first index corresponding to the first uplink resource based on the first field, the RU allocation field, and the PS160 field, to determine the position of the first uplink resource on the first channel based on the resource distribution manner corresponding to the first index. An optional manner in which the first STA determines the first index corresponding to the first uplink resource based on the first field, the RU allocation field, and the PS160 field includes: The first STA determines the first index corresponding to the first uplink resource based on a third mapping relationship, the first field, the RU allocation field, and the PS160 field. The third mapping relationship includes a mapping relationship between the first field, the RU allocation field, the PS160 field, and a resource distribution manner index. The third mapping relationship may be predefined in a protocol, pre-configured in the AP and the STA, or configured by the AP for the STA. For example, as shown in Table 20, the third mapping relationship may include one or more items in Table 20, where one row in Table 20 is considered as one item.

Table 20

| 10-bit RU allocation subfield | | | | MRU size | Position of a hole occupying 484 subcarriers | MRU index |
|---|---|---|---|---|---|---|
| P320 | PS160 | B0 | B7 to B1 | | | |
| 0 | 0 | 0 | 100 to 103 | 2×996-+ 484 | 0, 1, 2, and 3 | 1, 2, 3, and 4 |
| | 0 | 1 | 100 and 101 | | 4 and 5 | 5 and 6 |
| | 0 | 1 | 102 and 103 | | Reserved | Reserved |
| | 1 | 0 | 100 and 101 | | Reserved | Reserved |
| | 1 | 0 | 102 and 103 | | 2 and 3 | 7 and 8 |
| | 1 | 1 | 100 to 103 | | 4, 5, 6, and 7 | 9, 10, 11, and 12 |
| 1 | 0 | 0 | 100 to 103 | | 0, 1, 2, and 3 | 13, 14, 15, and 16 |
| | 0 | 1 | 100 and 101 | | 4 and 5 | 17 and 18 |
| | 0 | 1 | 102 and 103 | | Reserved | Reserved |
| | 1 | 0 | 100 and 101 | | Reserved | Reserved |
| | 1 | 0 | 102 and 103 | | 2 and 3 | 19 and 20 |
| | 1 | 1 | 100 to 103 | | 4, 5, 6, and 7 | 21, 22, 23, and 24 |

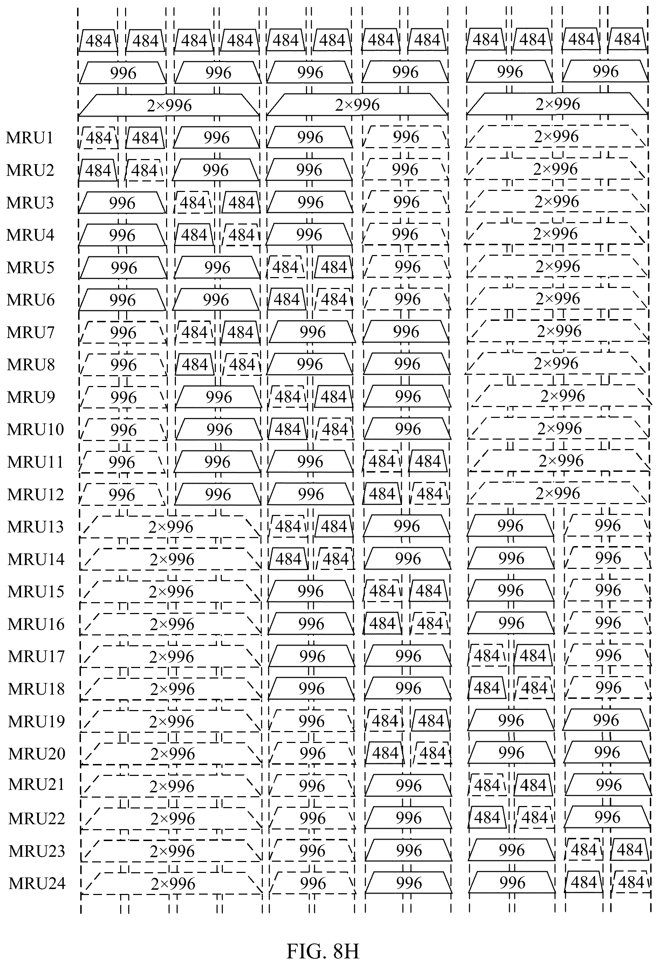

In Table 20, a hole occupying 484 subcarriers that is shown in a second to last column is one of the three to-be-punctured holes. Optionally, the third mapping relationship may not include the second to last column in Table 20, namely, the column in which the position of the hole occupying 484 subcarriers is located. After the hole occupying 2×996 subcarriers, the hole occupying 996 subcarriers, and the hole occupying 484 subcarriers are punctured on the first channel, there are 24 possible distribution manners of the first uplink resource whose size is 2×996+484 subcarriers on the first channel. Alternatively, it is understood that there are a total of 24 puncturing manners to puncture the hole occupying 2×996 subcarriers, the hole occupying 996 subcarriers, and the hole occupying 484 subcarriers on the first channel. FIG. 8H is a diagram of the 24 puncturing manners. In FIG. 8H, a trapezoidal box indicates a frequency subblock, and a value in the trapezoidal box indicates a size of the frequency subblock, in a unit of a number of subcarriers. The 24 distribution manners or the 24 puncturing manners are 24 resource distribution manners of the first channel on the first uplink resource. Each resource distribution manner may correspond to one index, so that the first STA can determine a resource distribution manner corresponding to an index provided that the first STA determines the index. In Table 20, 100 to 103 indicate the 24 resource distribution manners. For example, in Table 20, when the value of the PS320 field is 0, the value of the PS160 field is 0, and B0 is 0, if a value of the 7 bits B7 to B1 is 100, a corresponding index is 1, and the first STA may determine a resource distribution manner corresponding to the index 1, to determine the position of the MRU on the first channel. Other examples are deduced by analogy. The first index is determined by using the third mapping relationship, so that an index determining process can be simplified.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index satisfies the following relationship:

$$I=12\times P320+4\times PS160+4\times B0+K-100+1 \text{ (Formula 22)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 22, so that the third mapping relationship is not required. This helps save storage space.

Optionally, the first STA may further determine the position of the hole occupying 484 subcarriers. For example, the position satisfies the following relationship:

$$4\times B0+K-100 \text{ (Formula 23)}$$

2. The first uplink resource is an MRU occupying 3×996 subcarriers or an MRU occupying 3×996+484 subcarriers.

In the foregoing cases, the first uplink resource may be considered as an MRU formed by puncturing two holes in a full bandwidth of 480 MHz. The two holes are respectively a hole occupying a fourth number of consecutive subcarriers and a hole occupying a fifth number of consecutive subcarriers. In other words, the first uplink resource does not occupy the fourth number of consecutive subcarriers on the first channel, and does not occupy the fifth number of consecutive subcarriers on the first channel. For example, the first channel is divided into two areas: an area P and an area Q. For example, the area P is located at a low frequency, and the area Q is located at a high frequency. Bandwidths of the two areas are both 240 MHz. Therefore, the area P may also be referred to as a low-frequency 240 MHz area, and the area Q may also be referred to as a high-frequency 240 MHz area. The first field may indicate a first area, and the first area is the area P or the area Q, and is also an area in which the fourth number of subcarriers are located on the first channel. This is equivalent to puncturing the hole occupying the fourth number of subcarriers. For example, the first field occupies 1 bit. When a value of the bit is "0", the area P is indicated. When a value of the bit is "1", the area Q is indicated.

The PS160 field and the RU allocation field (for example, a first subfield in the RU allocation field, for example, B0) may jointly indicate a second frequency domain unit in which the fifth number of subcarriers are located in a remaining area after the hole occupying the fourth number of subcarriers is punctured. For example, if the punctured fourth number of subcarriers occupy one second frequency domain unit, the PS160 field and the RU allocation field jointly indicate a second frequency domain unit in which the fifth number of subcarriers are located in a remaining second frequency domain unit. Optionally, one second frequency domain unit may occupy 996 consecutive subcarriers, and the first channel may include six second frequency domain units.

(1) The first uplink resource is an MRU occupying 3×996 subcarriers. In this case, the fourth number may be 2×996 subcarriers, and the fifth number may be 996 subcarriers. In other words, the two to-be-punctured holes are respectively a hole occupying 2×996 consecutive subcarriers and a hole occupying 996 consecutive subcarriers.

The PS160 field and B0 in the RU allocation field may jointly indicate a second frequency domain unit in which the hole occupying 996 subcarriers is located in a remaining area after the hole occupying 2×996 subcarriers is punctured. For example, the second frequency domain unit occupies 996 consecutive subcarriers. After the hole occupying 2×996 subcarriers is punctured, four consecutive 996-subcarrier second frequency domain units remain on the first channel. In this case, the PS160 field and B0 in the RU allocation field may jointly indicate a second frequency domain unit in which the hole occupying 996 subcarriers is located in the four second frequency domain units. For example, when the value of the PS160 field is 0 and B0 is 0, the PS160 field and B0 are combined as "00", to indicate a 1st group of 996 subcarriers from a low frequency to a high frequency in the remaining area after the hole occupying 2×996 subcarriers is punctured. When the value of the PS160 field is 0 and B0 is 1, the PS160 field and B0 are combined as "01", to indicate a 2nd group of 996 subcarriers from the low frequency to the high frequency in the remaining area after the hole occupying 2×996 subcarriers is punctured. When the value of the PS160 field is 1 and B0 is 0, the PS160 field and B0 are combined as "10", to indicate a 3rd group of 996 subcarriers from the low frequency to the high frequency in the remaining area after the hole occupying 2×996 subcarriers is punctured. When the value of the PS160 field is 1 and B0 is 1, the PS160 field and B0 are combined as "11", and this value is reserved.

The first field, the RU allocation field, and the PS160 field may indicate the first index corresponding to the first uplink resource. The first STA may determine the first index corresponding to the first uplink resource based on the first field, the RU allocation field, and the PS160 field, to determine the position of the first uplink resource on the first channel based on the resource distribution manner corresponding to the first index. An optional manner in which the first STA determines the first index corresponding to the first uplink resource based on the first field, the RU allocation field, and the PS160 field includes: The first STA determines the first index corresponding to the first uplink resource based on a third mapping relationship, the first field, the RU allocation field, and the PS160 field. The third mapping relationship includes a mapping relationship between the first field, the RU allocation field, the PS160 field, and a resource distribution manner index. The third mapping relationship may be predefined in a protocol, pre-configured in the AP and the STA, or configured by the AP for the STA. For example, as shown in Table 21, the third mapping relationship may include one or more items in Table 21, where one row in Table 21 is considered as one item.

Table 21

| 10-bit RU allocation subfield | | | | MRU size | Position of a hole occupying 996 subcarriers | MRU index |
|---|---|---|---|---|---|---|
| P320 | PS160 | B0 | B7 to B1 | | | |
| 0 | 0 | 0 | 104 | 3×996 | 0 | 1 |
| | 0 | 1 | | | 1 | 2 |
| | 1 | 0 | | | 2 | 3 |
| | 1 | 1 | | | 3 | 4 |
| 1 | 0 | 0 | | | 0 | 5 |
| | 0 | 1 | | | 1 | 6 |
| | 1 | 0 | | | 2 | 7 |
| | 1 | 1 | | | 3 | 8 |

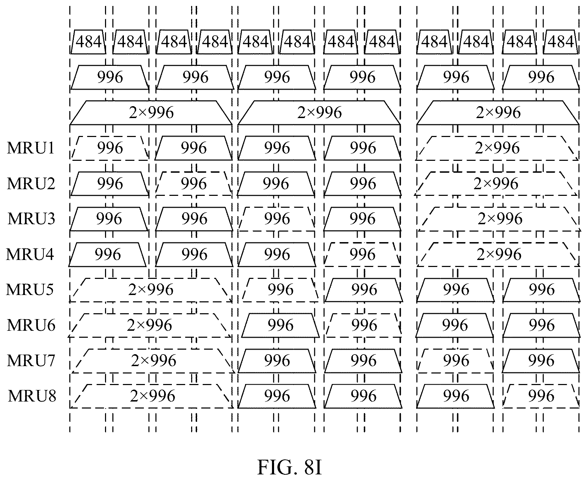

In Table 21, a hole occupying 996 subcarriers that is shown in a second to last column is one of the two to-be-punctured holes. Optionally, the third mapping relationship may not include the second to last column in Table 21, namely, the column in which the position of the hole occupying 996 subcarriers is located. After the hole occupying 2×996 subcarriers and the hole occupying 996 subcarriers are punctured on the first channel, there are eight possible distribution manners of the first uplink resource whose size is 3×996 subcarriers on the first channel. Alternatively, it is understood that there are a total of eight puncturing manners to puncture the hole occupying 2×996 subcarriers and the hole occupying 996 subcarriers on the first channel. FIG. 8I is a diagram of the eight puncturing manners. In FIG. 8I, a trapezoidal box indicates a frequency subblock, and a value in the trapezoidal box indicates a size of the frequency subblock, in a unit of a number of subcarriers. The eight distribution manners or the eight puncturing manners are eight resource distribution manners of the first channel on the first uplink resource. Each resource distribution manner may correspond to one index, so that the first STA can determine a resource distribution manner corresponding to an index provided that the first STA determines the index. In Table 21, 104 indicates the eight resource distribution manners. For example, in Table 21, when the value of the PS320 field is 0, the value of the PS160 field is 0, and B0 is 0, if a value of the 7 bits B7 to B1 is 104, a corresponding index is 1, and the first STA may determine a resource distribution manner corresponding to the index 1, to determine the position of the MRU on the first channel. Other examples are deduced by analogy.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I=4\times P320+2\times PS160+B0+K-104+1 \text{ (Formula 24)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 24, so that the third mapping relationship is not required. This helps save storage space.
Optionally, the first STA may further determine the position of the hole occupying 996 subcarriers. For example, the position satisfies the following relationship:

$$2\times PS160+B0+K-104 \text{ (Formula 25)}$$

(2) The first uplink resource is an MRU occupying $3\times996+484$ subcarriers. In this case, the fourth number may be $2\times996$ subcarriers, and the fifth number may be 484 subcarriers. In other words, the two to-be-punctured holes are respectively a hole occupying $2\times996$ consecutive subcarriers and a hole occupying 484 consecutive subcarriers.
The PS160 field and B0 in the RU allocation field may jointly indicate a second frequency domain unit in which the hole occupying 484 subcarriers is located in a remaining area after the hole occupying $2\times996$ subcarriers is punctured. For example, the second frequency domain unit occupies 996 consecutive subcarriers. After the hole occupying $2\times996$ subcarriers is punctured, four consecutive 996-subcarrier second frequency domain units remain on the first channel. In this case, the PS160 field and B0 in the RU allocation field may jointly indicate a frequency domain unit in which the hole occupying 996 subcarriers is located in the four frequency domain units. For the indication manner, refer to Case (1) in Case 2 in Case II.
The first field, the RU allocation field, and the PS160 field may indicate the first index corresponding to the first uplink resource. The first STA may determine the first index corresponding to the first uplink resource based on the first field, the RU allocation field, and the PS160 field, to determine the position of the first uplink resource on the first channel based on the resource distribution manner corresponding to the first index. An optional manner in which the first STA determines the first index corresponding to the first uplink resource based on the first field, the RU allocation field, and the PS160 field includes: The first STA determines the first index corresponding to the first uplink resource based on a third mapping relationship, the first field, the RU allocation field, and the PS160 field. The third mapping relationship includes a mapping relationship between the first field, the RU allocation field, the PS160 field, and a resource distribution manner index. The third mapping relationship may be predefined in a protocol, pre-configured in the AP and the STA, or configured by the AP for the STA. For example, as shown in Table 22, the third mapping relationship may include one or more items in Table 22, where one row in Table 22 is considered as one item.

Table 22

| 10-bit RU allocation subfield | | | | MRU size | Position of a hole occupying 484 subcarriers | MRU index |
|---|---|---|---|---|---|---|
| P320 | PS160 | B0 | B7 to B1 | | | |
| 0 | 0 | 0 | 105 and 106 | $3\times996+48\text{-}4$ | 0 and 1 | 1 and 2 |
| | 0 | 1 | | | 2 and 3 | 3 and 4 |
| | 1 | 0 | | | 0 and 1 | 5 and 6 |
| | 1 | 1 | | | 2 and 3 | 7 and 8 |
| 1 | 0 | 0 | | | 0 and 1 | 9 and 10 |
| | 0 | 1 | | | 2 and 3 | 11 and 12 |
| | 1 | 0 | | | 0 and 1 | 13 and 14 |
| | 1 | 1 | | | 2 and 3 | 15 and 16 |

In Table 22, a hole occupying 484 subcarriers that is shown in a second to last column is one of the two to-be-punctured holes. Optionally, the third mapping relationship may not include the second to last column in Table 22, namely, the column in which the position of the hole occupying 484 subcarriers is located. After the hole occupying $2\times996$

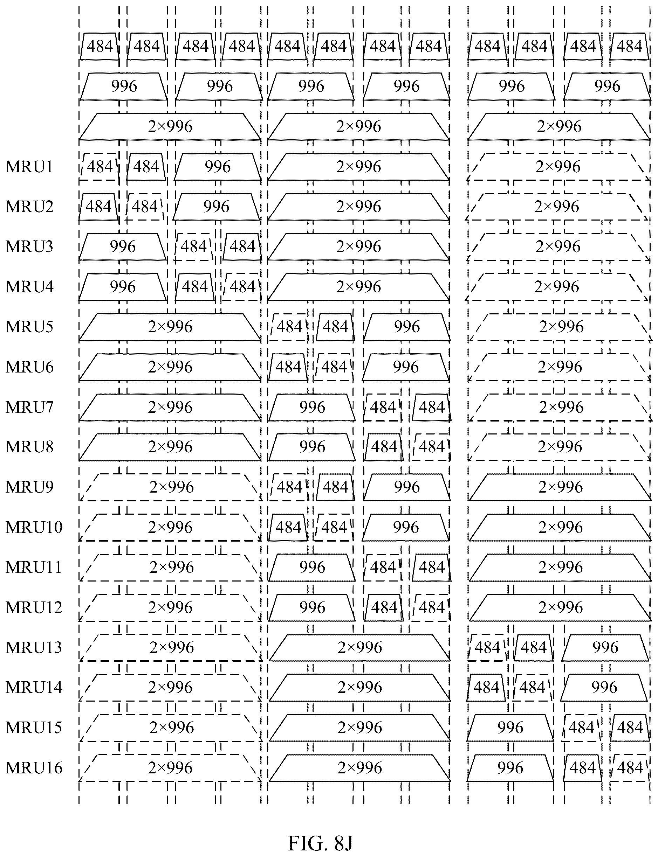

subcarriers and the hole occupying 484 subcarriers are punctured on the first channel, there are 16 possible distribution manners of the first uplink resource whose size is 3×996+484 subcarriers on the first channel. Alternatively, it is understood that there are a total of 16 puncturing manners to puncture the hole occupying 2×996 subcarriers and the hole occupying 484 subcarriers on the first channel. FIG. 8J is a diagram of the 16 puncturing manners. In FIG. 8J, a trapezoidal box indicates a frequency subblock, and a value in the trapezoidal box indicates a size of the frequency subblock, in a unit of a number of subcarriers. The 16 distribution manners or the 16 puncturing manners are 16 resource distribution manners of the first channel on the first uplink resource. Each resource distribution manner may correspond to one index, so that the first STA can determine a resource distribution manner corresponding to an index provided that the first STA determines the index. In Table 22, 105 and 106 indicate the 16 resource distribution manners. For example, in Table 22, when the value of the PS320 field is 0, the value of the PS160 field is 0, and B0 is 0, if a value of the 7 bits B7 to B1 is 105, a corresponding index is 1, and the first STA may determine a resource distribution manner corresponding to the index 1, to determine the position of the MRU on the first channel. Other examples are deduced by analogy. The first index is determined by using the third mapping relationship, so that an index determining process can be simplified.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I=8\times P320+4\times PS160+2\times B0+K-105+1 \text{ (Formula 26)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 26, so that the third mapping relationship is not required. This helps save storage space.

Optionally, the first STA may further determine the position of the hole occupying 484 subcarriers. For example, the position satisfies the following relationship:

$$2\times B0+K-105 \text{ (Formula 27)}$$

3. The first uplink resource is an MRU occupying 4×996+484 subcarriers.

In this case, the first uplink resource may be considered as an MRU formed by puncturing two holes in a full bandwidth of 640 MHz. The two holes are respectively a hole occupying 996 consecutive subcarriers and a hole occupying 484 consecutive subcarriers. In other words, the first uplink resource does not occupy 996 consecutive subcarriers on the first channel, and does not occupy 484 consecutive subcarriers on the first channel. For example, the first channel is divided into two areas: an area P and an area Q. For example, the area P is located at a low frequency, and the area Q is located at a high frequency. Bandwidths of the two areas are both 240 MHz. Therefore, the area P may also be referred to as a low-frequency 240 MHz area, and the area Q may also be referred to as a high-frequency 240 MHz area. The first field may indicate a seventh area, and the seventh area is the area P or the area Q, and is also an area in which the 996 subcarriers are located on the first channel. This is equivalent to puncturing the hole occupying 996 subcarriers. For example, the first field occupies 1 bit. When a value of the bit is "0", the area Q is indicated. When a value of the bit is "1", the area P is indicated.

The PS160 field and B0 in the RU allocation field may jointly indicate a third frequency domain unit in which the hole occupying 484 subcarriers is located in a remaining area after the hole occupying 996 subcarriers is punctured. For example, after the hole occupying 996 subcarriers is punctured, the remaining area in the first channel further includes 10 subblocks, and each subblock occupies 484 consecutive subcarriers. The 10 subblocks may be sequentially divided into four frequency domain groups (which may also be referred to as third frequency domain units) in an order from a low frequency to a high frequency. Each of the first three frequency domain groups includes three subblocks, and the last frequency domain group includes one subblock. For example, when the value of the PS160 field is 0 and B0 is 0, the PS160 field and B0 are combined as "00", to indicate a 1st frequency domain group from a low frequency to a high frequency on the first channel. When the value of the PS160 field is 0 and B0 is 1, the PS160 field and B0 are combined as "01", to indicate a 2nd frequency domain group from the low frequency to the high frequency on the first channel. When the value of the PS160 field is 1 and B0 is 0, the PS160 field and B0 are combined as "10", to indicate a 3rd frequency domain group from the low frequency to the high frequency on the first channel. When the value of the PS160 field is 1 and B0 is 1, the PS160 field and B0 are combined as "11", to indicate a 4th frequency domain group from the low frequency to the high frequency on the first channel.

Alternatively, the PS160 field and B0 in the RU allocation field may jointly indicate a first frequency domain unit in which the hole occupying 484 subcarriers is located on the first channel. For example, the first frequency domain unit occupies 2×996 consecutive subcarriers, and the first channel includes three frequency domain units in total. After the hole occupying 996 subcarriers is punctured, the frequency domain unit in which the hole occupying 996 subcarriers is located still exists, but 996 subcarriers remain in the frequency domain unit. In this case, the PS160 field and B0 in the RU allocation field may jointly indicate the frequency domain unit in which the hole occupying 996 subcarriers is located in the three frequency domain units. For example, when the value of the PS160 field is 0 and B0 is 0, the PS160 field and B0 are combined as "00", to indicate a 1st group of 2×996 subcarriers from a low frequency to a high frequency in the remaining area after the hole occupying 2×996 subcarriers is punctured. When the value of the PS160 field is 0 and B0 is 1, the PS160 field and B0 are combined as "01", to indicate a 2nd group of 2×996 subcarriers from the low frequency to the high frequency in the remaining area after the hole occupying 2×996 subcarriers is punctured. When the value of the PS160 field is 1 and B0 is 0, the PS160 field and B0 are combined as "10", to indicate a 3rd group of 2×996 subcarriers from the low frequency to the high frequency in the remaining area after the hole occupying 2×996 subcarriers is punctured. When the value of the PS160 field is 1 and B0 is 1, the PS160 field and B0 are combined as "11", and this value is reserved. In the foregoing, the value "11"of the PS160 field and B0 is reserved. Alternatively, another value of the PS160 field and B0 may be reserved.

The first field, the RU allocation field, and the PS160 field may indicate the first index corresponding to the first uplink resource. The first STA may determine the first index corresponding to the first uplink resource based on the first field, the RU allocation field, and the PS160 field, to determine the position of the first uplink resource on the first channel based on the resource distribution manner corresponding to the first index. An optional manner in which the first STA determines the first index corresponding to the first uplink resource based on the first field, the RU allocation field, and the PS160 field includes: The first STA determines the first index corresponding to the first uplink resource based on a third mapping relationship, the first field, the RU allocation field, and the PS160 field. The third mapping relationship includes a mapping relationship between the first field, the RU allocation field, the PS160 field, and a resource distribution manner index. The third mapping relationship may be predefined in a protocol, pre-configured in the AP and the STA, or configured by the AP for the STA. For example, as shown in Table 23, the third mapping relationship may include one or more items in Table 23, where one row in Table 23 is considered as one item. In Table 23, an example in which the PS160 field and B0 in the RU allocation field jointly indicate the frequency domain group in which the hole occupying 484 subcarriers is located in the remaining area after the hole occupying 996 subcarriers is punctured.

Table 23

| 10-bit RU allocation subfield | | | | MRU size | Position of a hole occupying 484 subcarriers | MRU index |
|---|---|---|---|---|---|---|
| P320 | PS160 | B0 | B7 to B1 | | | |
| 0 | 0 | 0 | Y1 to Y3 | | 0, 1, and 2 | 1, 2, and 3 |
| 0 | 0 | 1 | Y1 to Y3 | | 3, 4, and 5 | 4, 5, and 6 |
| 0 | 1 | 0 | Y1 to Y3 | | 6, 7, and 8 | 7, 8, and 9 |
| 0 | 1 | 1 | Y1 | | 9 | 10 |
| 0 | 1 | 1 | Y2 and Y3 | 4×996+48-4 | Reserved | Reserved |
| 1 | 0 | 0 | Y1 to Y3 | | 0, 1, and 2 | 11, 12, and 13 |
| 1 | 0 | 1 | Y1 to Y3 | | 3, 4, and 5 | 14, 15, and 16 |
| 1 | 1 | 0 | Y1 to Y3 | | 6, 7, and 8 | 17, 18, and 19 |
| 1 | 1 | 1 | Y1 | | 9 | 20 |
| 1 | 1 | 1 | Y2 and Y3 | | Reserved | Reserved |

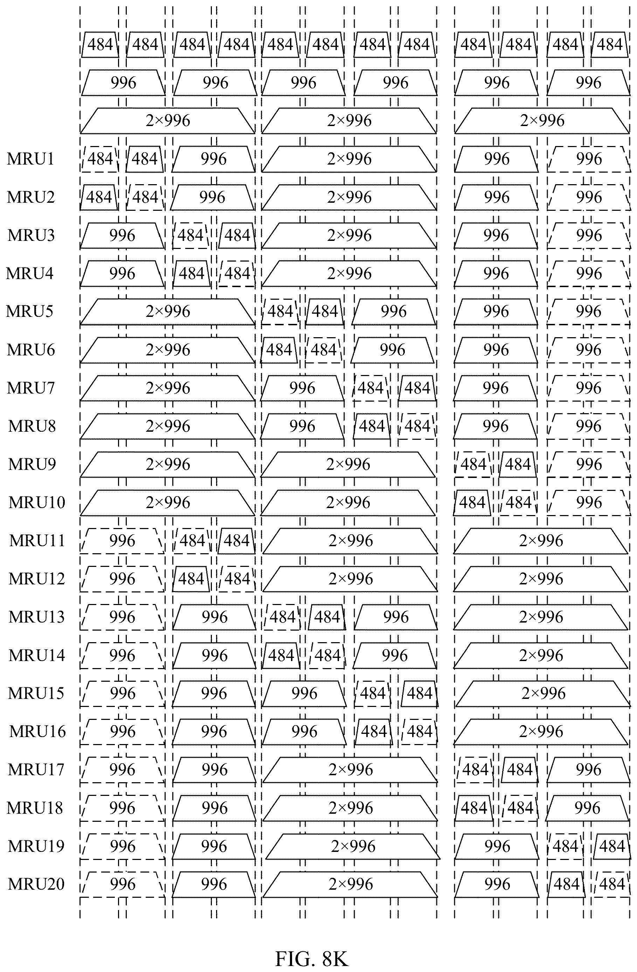

In Table 23, a hole occupying 484 subcarriers that is shown in a second to last column is one of the two to-be-punctured holes. Optionally, the third mapping relationship may not include the second to last column in Table 23, namely, the column in which the position of the hole occupying 484 subcarriers is located. After the hole occupying 996 consecutive subcarriers and the hole occupying 484 consecutive subcarriers are punctured on the first channel, there are 20 possible distribution manners of the first uplink resource whose size is 4×996+484 subcarriers on the first channel. Alternatively, it is understood that there are a total of 20 puncturing manners to puncture the hole occupying 996 consecutive subcarriers and the hole occupying 484 consecutive subcarriers on the first channel. FIG. 8K is a diagram of the 20 puncturing manners. In FIG. 8K, a trapezoidal box indicates a frequency subblock, and a value in the trapezoidal box indicates a size of the frequency subblock, in a unit of a number of subcarriers. The 20 distribution manners or the 20 puncturing manners are 20 resource distribution manners of the first channel on the first uplink resource. Each resource distribution manner may correspond to one index, so that the first STA can determine a resource distribution manner corresponding to an index provided that the first STA determines the index. In Table 23, symbols Y1 to Y3 indicate the 20 resource distribution manners. Y1 to Y3 may be three consecutive positive integers. For example, the three positive integers are all greater than 106 and less than or equal to 127. For example, in Table 23, when the value of the PS320 field is 0, the value of the PS160 field is 0, and B0 is 0, if a value of the 7 bits B7 to B1 is Y6, a corresponding index is 1, and the first STA may determine a resource distribution manner corresponding to the index 1, to determine the position of the MRU on the first channel. Other examples are deduced by analogy.

For another example, as shown in Table 24, the third mapping relationship may include one or more items in Table 24, where one row in Table 24 is considered as one item. In Table 24, an example in which the PS160 field and B0 in the RU allocation field may jointly indicate the first frequency domain unit in which the hole occupying 484 subcarriers is located in the remaining area after the hole occupying 996 subcarriers is punctured.

Table 24

| 10-bit RU allocation subfield | | | | MRU size | Position of a hole occupying 484 subcarriers | MRU index |
|---|---|---|---|---|---|---|
| P320 | PS160 | B0 | B7 to B1 | | | |
| 0 | 0 | 0 | Y0 to Y3 | 4×996+48-4 | 0, 1, 2, and 3 | 1, 2, 3, and 4 |
| 0 | 0 | 1 | | | 4, 5, 6, and 7 | 5, 6, 7, and 8 |
| 0 | 1 | 0 | Y0 and Y1 | | 8 and 9 | 9 and 10 |
| 0 | 1 | 0 | Y2 and Y3 | | Reserved | Reserved |
| 0 | 1 | 1 | Y0 to Y3 | | Reserved | Reserved |
| 1 | 0 | 0 | Y0 to Y3 | | 0, 1, 2, and 3 | 11, 12, 13, and 14 |
| 1 | 0 | 1 | | | 4, 5, 6, and 7 | 15, 16, 17, and 18 |
| 1 | 1 | 0 | Y0 and Y1 | | 8 and 9 | 19 and 20 |
| 1 | 1 | 0 | Y2 and Y3 | | Reserved | Reserved |
| 1 | 1 | 1 | Y0 to Y3 | | Reserved | Reserved |

In Table 24, a hole occupying 484 subcarriers that is shown in a second to last column is one of the two to-be-punctured holes. Optionally, the third mapping relationship may not include the second to last column in Table 24, namely, the column in which the position of the hole occupying 484 subcarriers is located. For descriptions of Table 24, refer to the descriptions of Table 23.

For another example, as shown in Table 25, the third mapping relationship may include one or more items in Table 25, where one row in Table 25 is considered as one item. In Table 25, an example in which the PS160 field and B0 in the RU allocation field may jointly indicate the frequency domain unit in which the hole occupying 484 subcarriers is located in the remaining area after the hole occupying 996 subcarriers is punctured. A difference between Table 24 and Table 25 lies in that different values of the PS160 field and B0 are separately set as reserved bits.

Table 25

| 10-bit RU allocation subfield | | | | MRU size | Position of a hole occupying 484 subcarriers | MRU index |
|---|---|---|---|---|---|---|
| P320 | PS160 | B0 | B7 to B1 | | | |
| 0 | 0 | 0 | Y0 to Y3 | 4×996+48-4 | 0, 1, 2, and 3 | 1, 2, 3, and 4 |
| 0 | 0 | 1 | | | 4, 5, 6, and 7 | 5, 6, 7, and 8 |
| 0 | 1 | 0 | Y0 and Y1 | | 8 and 9 | 9 and 10 |
| 0 | 1 | 0 | Y2 and Y3 | | Reserved | Reserved |
| 0 | 1 | 1 | Y0 to Y3 | | Reserved | Reserved |
| 1 | 0 | 0 | Y0 and Y1 | | Reserved | Reserved |
| 1 | 0 | 0 | Y2 and Y3 | | 2 and 3 | 11 and 12 |
| 1 | 0 | 1 | Y0 to Y3 | | 4, 5, 6, and 7 | 13, 14, 15, and 16 |
| 1 | 1 | 0 | | | 8, 9, 10, and 11 | 17, 18, 19, and 20 |

(continued)

| 10-bit RU allocation subfield | | | | MRU size | Position of a hole occupying 484 subcarriers | MRU index |
|---|---|---|---|---|---|---|
| P320 | PS160 | B0 | B7 to B1 | | | |
| 1 | 1 | 1 | Y0 to Y3 | | Reserved | Reserved |

In Table 25, a hole occupying 484 subcarriers that is shown in a second to last column is one of the two to-be-punctured holes. Optionally, the third mapping relationship may not include the second to last column in Table 25, namely, the column in which the position of the hole occupying 484 subcarriers is located. For descriptions of Table 25, refer to the descriptions of Table 23. The first index is determined by using the third mapping relationship, so that an index determining process can be simplified.

4. The first uplink resource is an MRU occupying $4\times996$ subcarriers, an RU occupying $4\times996+484$ subcarriers, an MRU occupying $5\times996$ subcarriers, or an MRU occupying $5\times996+484$ subcarriers.

In this case, the first uplink resource may be considered as an MRU or an RU formed by puncturing one hole in a full bandwidth of 480 MHz. For example, the hole occupies a sixth number of consecutive subcarriers. In other words, the first uplink resource does not occupy the sixth number of consecutive subcarriers on the first channel. For example, the first field, the first subfield in the RU allocation field, and the PS160 field may jointly indicate a position of the sixth number of subcarriers on the first channel.

(1) The first uplink resource is an RU occupying $4\times996$ subcarriers. In this case, the sixth number may be $2\times996$ subcarriers. In other words, a to-be-punctured hole is a hole occupying $2\times996$ consecutive subcarriers.

The value of the PS160 field and the value of B0 may be fixed (for example, both are fixed to "1"), and the first field indicates a position of the hole occupying $2\times996$ subcarriers on the first channel.

The first field, the first subfield, and the PS160 field may indicate the first index corresponding to the first uplink resource. The first STA may determine the first index corresponding to the first uplink resource based on the at least two fields, to determine the position of the first uplink resource on the first channel based on the resource distribution manner corresponding to the first index. An optional manner in which the first STA determines the first index corresponding to the first uplink resource based on the at least two fields includes: The first STA determines the first index corresponding to the first uplink resource based on a third mapping relationship and the at least two fields. The third mapping relationship includes a mapping relationship between the at least two fields and a resource distribution manner index. The third mapping relationship may be predefined in a protocol, pre-configured in the AP and the STA, or configured by the AP for the STA.

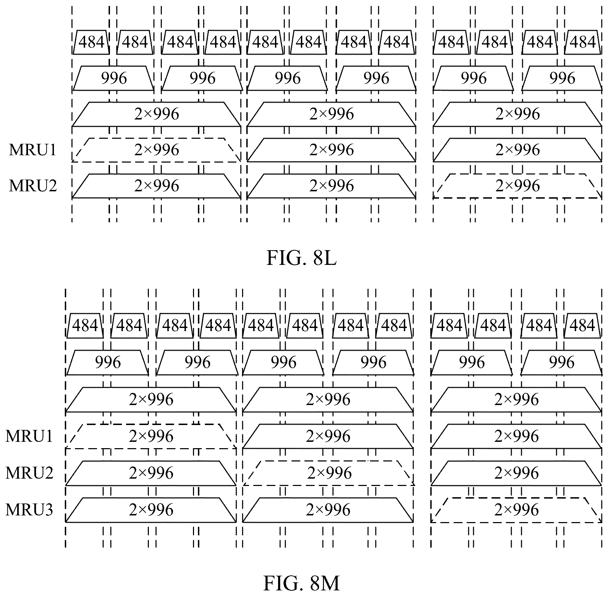

For example, after the hole occupying $2\times996$ subcarriers is punctured, there are two possible distribution manners of the first uplink resource whose size is $4\times996$ subcarriers on the first channel. Alternatively, it is understood that there are a total of two puncturing manners to puncture the hole occupying $2\times996$ subcarriers on the first channel. FIG. 8L is a diagram of the two puncturing manners. In FIG. 8L, a trapezoidal box indicates a frequency subblock, and a value in the trapezoidal box indicates a size of the frequency subblock, in a unit of a number of subcarriers. The two distribution manners or the two puncturing manners are two resource distribution manners of the first channel on the first uplink resource. Each resource distribution manner may correspond to one index, so that the first STA can determine a resource distribution manner corresponding to an index provided that the first STA determines the index. For example, in the third mapping relationship, when P320=0, PS160=1, and B0=1, an index 1 is corresponded to; or when P320=1, PS160=1, and B0=1, an RU2 is corresponded to. Another value combination of P320, PS160, and B0 is a reserved bit.

(2) The first uplink resource is an MRU occupying $4\times996$ subcarriers. In this case, the sixth number may be $2\times996$ subcarriers. In other words, a to-be-punctured hole is a hole occupying $2\times996$ consecutive subcarriers.

The value of B0 may be fixed (for example, fixed to "1"), and the first field and the PS160 field jointly indicate a position of the hole of $2\times996$ subcarriers on the first channel. For example, the first channel includes three first frequency domain units in total, each first frequency domain unit occupies $2\times996$ consecutive subcarriers, and the first field and the PS160 field may jointly indicate a first frequency domain unit in which the hole occupying $2\times996$ subcarriers is located on the first channel. For example, the value of B0 is fixed to "1". When the value of the first field is 0 and the value of the PS160 field is 1, the first field and the PS160 field are combined as "01", to indicate a 1st first frequency domain unit from a low frequency to a high frequency on the first channel. When the value of the first field is 1 and the value of the PS160 field is 0, the first field and the PS160 field are combined as "10", to indicate a 2nd first frequency domain unit from the low frequency to the high frequency on the first channel. When the value of the first field is 1 and the value of the PS160 field is 1, the first field and the PS160 field are combined as "11", to indicate a 3rd first frequency domain unit from the low frequency to the high frequency on the first channel.

The first field, the first subfield, and the PS160 field may jointly indicate the first index corresponding to the first uplink resource. The first STA may determine the first index corresponding to the first uplink resource based on the three fields, to determine the position of the first uplink resource on the first channel based on the resource distribution manner corresponding to the first index. An optional manner in which the first STA determines the first index corresponding to the first uplink resource based on the three fields includes: The first STA determines the first index corresponding to the first uplink resource based on a third mapping relationship and the three fields. The third mapping relationship includes a mapping relationship between the three fields and a resource distribution manner index. The third mapping relationship may be predefined in a protocol, pre-configured in the AP and the STA, or configured by the AP for the STA. For example, as shown in Table 26, the third mapping relationship may include one or more items in Table 26, where one row in Table 26 is considered as one item. In Table 26, an example in which the value of B0 is fixed to 1 and the value of B0 being 0 corresponds to a reserved bit is used.

Table 26

| 10-bit RU allocation subfield | | | | MRU size | Position of a hole occupying $2\times996$ subcarriers | MRU index | MRU index |
|---|---|---|---|---|---|---|---|
| P320 | PS160 | B0 | B7 to B1 | | | | |
| 0 | 0 | 0 | 69 | $4\times99$-6 | Reserved | Reserved | Reserved |
| 0 | 0 | 1 | | | | | |
| 0 | 1 | 0 | | | | | |
| 0 | 1 | 1 | | | 0 | 1 | MRU1 |
| 1 | 0 | 0 | | | Reserved | Reserved | Reserved |
| 1 | 0 | 1 | | | 1 | 2 | MRU2 |
| 1 | 1 | 0 | | | Reserved | Reserved | Reserved |
| 1 | 1 | 1 | | | 2 | 3 | MRU3 |

In Table 26, a hole occupying $2\times996$ subcarriers that is shown in a third to last column is the to-be-punctured hole. Optionally, the third mapping relationship may not include the second to last column in Table 26, namely, the column in which the position of the hole occupying $2\times996$ subcarriers is located. After the hole occupying $2\times996$ subcarriers is punctured on the first channel, there are three possible distribution manners of the first uplink resource whose size is $6\times996$ subcarriers on the first channel. Alternatively, it is understood that there are a total of three puncturing manners to puncture the hole occupying $2\times996$ subcarriers on the first channel. FIG. 8M is a diagram of the three puncturing manners. In FIG. 8M, a trapezoidal box indicates a frequency subblock, and a value in the trapezoidal box indicates a size of the frequency subblock, in a unit of a number of subcarriers. The three distribution manners or the three puncturing manners are three resource distribution manners of the first channel on the first uplink resource. Each resource distribution manner may correspond to one index, so that the first STA can determine a resource distribution manner corresponding to an index provided that the first STA determines the index. In Table 26, 69 indicates the three resource distribution manners. For example, in Table 26, when the value of the PS320 field is 0, the value of the PS160 field is 1, and B0 is 1, if a value of the 7 bits B7 to B1 is 69, a corresponding index is 1, and the first STA may determine a resource distribution manner corresponding to the index 1, to determine the position of the MRU on the first channel. Other examples are deduced by analogy.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I=2\times P320+PS160+K-69 \text{ (Formula 28)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 28, so that the third mapping relationship is not required. This helps save storage space.

Optionally, the first STA may further determine the position of the hole occupying $2\times996$ subcarriers. For example, the position satisfies the following relationship:

$$2{\times}P320+PS160-1+(B7-B1)-69 \text{ (Formula 29)}$$

(3) The first uplink resource is an MRU occupying 5×996 subcarriers. In this case, the sixth number may be 996 subcarriers. In other words, a to-be-punctured hole is a hole occupying 996 consecutive subcarriers.

The first field, the PS160 field, and B0 in the RU allocation field may jointly indicate a position of the hole of 996 subcarriers on the first channel.

The first field, the first subfield, and the PS160 field may indicate the first index corresponding to the first uplink resource. The first STA may determine the first index corresponding to the first uplink resource based on the three fields, to determine the position of the first uplink resource on the first channel based on the resource distribution manner corresponding to the first index. An optional manner in which the first STA determines the first index corresponding to the first uplink resource based on the three fields includes: The first STA determines the first index corresponding to the first uplink resource based on a third mapping relationship and the three fields. The third mapping relationship includes a mapping relationship between the three fields and a resource distribution manner index. The third mapping relationship may be predefined in a protocol, pre-configured in the AP and the STA, or configured by the AP for the STA. For example, as shown in Table 27, the third mapping relationship may include one or more items in Table 27, where one row in Table 27 is considered as one item.

Table 27

| 10-bit RU allocation subfield | | | | MRU size | Position of a hole occupying 996 subcarriers | MRU index |
|---|---|---|---|---|---|---|
| P320 | PS160 | B0 | B7 to B1 | | | |
| 0 | 0 | 0 | | | 0 | 1 |
| 0 | 0 | 1 | | | 1 | 2 |
| 0 | 1 | 0 | Y4 | 5×996 | 2 | 3 |
| 0 | 1 | 1 | | | 3 | 4 |
| 1 | 0 | 0 | | | 4 | 5 |
| 1 | 0 | 1 | | | 5 | 6 |
| 1 | 1 | 0 | | | Reserved | Reserved |
| 1 | 1 | 1 | | | Reserved | Reserved |

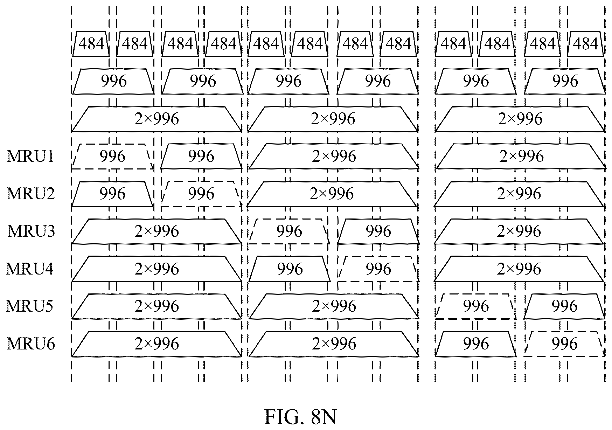

In Table 27, a hole occupying 996 subcarriers that is shown in a second to last column is the to-be-punctured hole. Optionally, the third mapping relationship may not include the third to last column in Table 27, namely, the column in which the position of the hole occupying 996 subcarriers is located. After the hole occupying 996 subcarriers is punctured on the first channel, there are six possible distribution manners of the first uplink resource whose size is 7×996 subcarriers on the first channel. Alternatively, it is understood that there are a total of six puncturing manners to puncture the hole occupying 996 subcarriers on the first channel. FIG. 8N is a diagram of the six puncturing manners. In FIG. 8N, a trapezoidal box indicates a frequency subblock, and a value in the trapezoidal box indicates a size of the frequency subblock, in a unit of a number of subcarriers. The six distribution manners or the six puncturing manners are six resource distribution manners of the first channel on the first uplink resource. Each resource distribution manner may correspond to one index, so that the first STA can determine a resource distribution manner corresponding to an index provided that the first STA determines the index. In Table 27, a symbol Y4 indicates the six resource distribution manners. Y4 may be a positive integer. For example, the positive integer is greater than 106 and less than or equal to 127. For example, in Table 27, when the value of the PS320 field is 0, the value of the PS160 field is 0, and B0 is 0, if a value of the 7 bits B7 to B1 is Y4, a corresponding index is 1, and the first STA may determine a resource distribution manner corresponding to the index 1, to determine the position of the MRU on the first channel. Other examples are deduced by analogy.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, for the third mapping relationship shown in Table 27, the first index may satisfy the following relationship:

$$I=4{\times}P320+2{\times}PS160+B0+K-Y4+1 \text{ (Formula 30)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 30, so that the third mapping relationship is not required. This helps save storage space.

Optionally, for the third mapping relationship shown in Table 27, the first STA may further determine the position of the hole occupying 996 subcarriers. For example, the position satisfies the following relationship:

$$4{\times}P320+2{\times}PS160+B0+K\text{-}Y4 \quad \text{(Formula 31)}$$

(4) The first uplink resource is an MRU occupying $5{\times}996+484$ subcarriers. In this case, the sixth number may be 484 subcarriers. In other words, a to-be-punctured hole is a hole occupying 484 consecutive subcarriers.

The first field, the PS160 field, and B0 in the RU allocation field may jointly indicate a position of the hole occupying 484 subcarriers on the first channel.

The first field, the first subfield, and the PS160 field may indicate the first index corresponding to the first uplink resource. The first STA may determine the first index corresponding to the first uplink resource based on the three fields, to determine the position of the first uplink resource on the first channel based on the resource distribution manner corresponding to the first index. An optional manner in which the first STA determines the first index corresponding to the first uplink resource based on the three fields includes: The first STA determines the first index corresponding to the first uplink resource based on a third mapping relationship and the three fields. The third mapping relationship includes a mapping relationship between the three fields and a resource distribution manner index. The third mapping relationship may be predefined in a protocol, pre-configured in the AP and the STA, or configured by the AP for the STA. For example, as shown in Table 28, the third mapping relationship may include one or more items in Table 28, where one row in Table 28 is considered as one item.

Table 28

| 10-bit RU allocation subfield | | | | MRU size | Position of a hole occupying 484 subcarriers | MRU index | MRU index |
|---|---|---|---|---|---|---|---|
| P320 | PS160 | B0 | B7 to B1 | | | | |
| 0 | 0 | 0 | Y5 and Y6 | $5{\times}996+48\text{-}4$ | 0 and 1 | 1 and 2 | MRU1 and MRU2 |
| 0 | 0 | 1 | | | 2 and 3 | 3 and 4 | MRU3 and MRU4 |
| 0 | 1 | 0 | | | 4 and 5 | 5 and 6 | MRU5 |
| | | | | | | | and MRU6 |
| 0 | 1 | 1 | | | 6 and 7 | 7 and 8 | MRU7 and MRU8 |
| 1 | 0 | 0 | | | 8 and 9 | 9 and 10 | MRU9 and MRU10 |
| 1 | 0 | 1 | | | 10 and 11 | 11 and 12 | MRU11 and MRU12 |
| 1 | 1 | 0 | | | Reserved | Reserved | Reserved |
| 1 | 1 | 1 | | | Reserved | Reserved | Reserved |

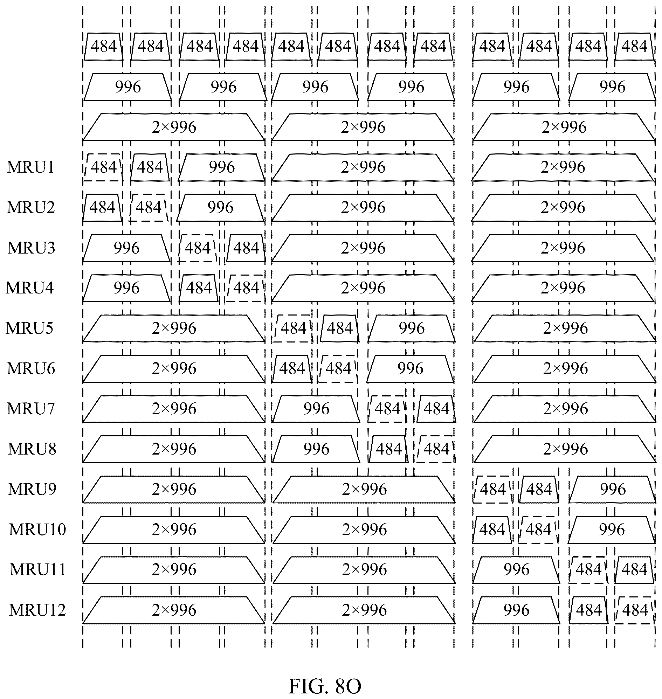

In Table 28, a hole occupying 484 subcarriers that is shown in a third to last column is the to-be-punctured hole. Optionally, the third mapping relationship may not include the third to last column in Table 28, namely, the column in which the position of the hole occupying 484 subcarriers is located. After the hole occupying 484 subcarriers is punctured on the first channel, there are 12 possible distribution manners of the first uplink resource whose size is $5{\times}996+484$ subcarriers on the first channel. Alternatively, it is understood that there are a total of eight puncturing manners to puncture the hole occupying 484 subcarriers on the first channel. FIG. 8O is a diagram of the 12 puncturing manners. In FIG. 8O, a trapezoidal box indicates a frequency subblock, and a value in the trapezoidal box indicates a size of the frequency subblock, in a unit of a number of subcarriers. The 12 distribution manners or the 12 puncturing manners are 12 resource distribution manners of the first channel on the first uplink resource. Each resource distribution manner may correspond to one index, so that the first STA can determine a resource distribution manner corresponding to an index provided that the first STA determines the index. In Table 28, symbols Y5 and Y6 indicate the eight resource distribution manners. Y5 and Y6 may be two consecutive positive integers. For example, the two positive integers are both greater than 106 and less than or equal to 127. For example, in Table 28, when the value of the PS320 field is 0, the value of the PS160 field is 0, and B0 is 0, if a value of the 7 bits B7 to B1 is Y5, a corresponding index is 1, and the first STA may determine a resource distribution manner corresponding to the index 1, to determine the position of the MRU on the first channel. Other examples are deduced by analogy.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I=8\times P320+4\times PS160+2\times B0+K-Y5+1 \text{ (Formula 32)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 32, so that the third mapping relationship is not required. This helps save storage space.

Optionally, the first STA may further determine the position of the hole occupying 484 subcarriers. For example, the position satisfies the following relationship:

$$8\times P320+4\times PS160+2\times B0+K-Y5 \text{ (Formula 33)}$$

4. The first uplink resource is an MRU occupying $5\times996$ subcarriers or an MRU occupying $5\times996+484$ subcarriers. An indication manner of the two MRUs has been described in Example 3. In addition to the indication manner in Example 3, the two MRUs may alternatively be indicated in another indication manner. Therefore, Example 4 is used for description.

In this case, the first uplink resource may be considered as an MRU formed by puncturing one hole in a full bandwidth of 480 MHz. For example, the hole occupies a sixth number of consecutive subcarriers. In other words, the first uplink resource does not occupy the sixth number of consecutive subcarriers on the first channel. For example, the first channel is divided into two areas: an area V and an area W from a low frequency to a high frequency. The area V and the area W each include six frequency domain units (for example, referred to as fourth frequency domain units), and each fourth frequency domain unit occupies 484 consecutive subcarriers. The area V may also be referred to as a low-frequency 240 MHz area, and the area W may also be referred to as a high-frequency 240 MHz area. The first field may indicate an eighth area, and the eighth area is the area V or the area W, and is also an area in which the sixth number of subcarriers are located on the first channel. In addition, B0 and the PS160 field may jointly indicate a fourth frequency domain unit in which the sixth number of subcarriers are located in the eighth area, or jointly indicate a frequency domain unit group in which the sixth number of subcarriers are located in the eighth area.

B0 and the PS160 field may jointly indicate the fourth frequency domain unit in which the sixth number of subcarriers are located in the eighth area. For example, when the value of the PS160 field is 0 and the value of B0 is 0, the PS160 field and B0 are combined as "00", to indicate the first two fourth frequency domain units from the low frequency to the high frequency in the area V or the area W. When the value of the PS160 field is 0 and the value of B0 is 1, the PS160 field and B0 are combined as "01", to indicate the middle two fourth frequency domain units from the low frequency to the high frequency in the area V or the area W. When the value of the PS160 field is 1 and the value of B0 is 0, the PS160 field and B0 are combined as "10", to indicate the last two fourth frequency domain units from the low frequency to the high frequency in the area V or the area W. When the value of the PS160 field is 1 and the value of B0 is 1, the PS160 field and B0 are combined as "11", and the value is reserved.

Alternatively, it may be considered that B0 and the PS160 field may jointly indicate the frequency domain unit group in which the sixth number of subcarriers are located in the eighth area, and one frequency domain unit group includes two consecutive fourth frequency domain units. For example, when the value of the PS160 field is 0 and the value of B0 is 0, the PS160 field and B0 are combined as "00", to indicate a frequency domain unit group formed by the first two fourth frequency domain units from the low frequency to the high frequency in the area V or the area W. When the value of the PS160 field is 0 and the value of B0 is 1, the PS160 field and B0 are combined as "01", to indicate a frequency domain unit group formed by the middle two fourth frequency domain units from the low frequency to the high frequency in the area V or the area W. When the value of the PS160 field is 1 and the value of B0 is 0, the PS160 field and B0 are combined as "10", to indicate a frequency domain unit group formed by the last two fourth frequency domain units from the low frequency to the high frequency in the area V or the area W. When the value of the PS160 field is 1 and the value of B0 is 1, the PS160 field and B0 are combined as "11", and the value is reserved.

(1) The first uplink resource is an MRU occupying $5\times996$ subcarriers. In this case, the sixth number may be 996 subcarriers. In other words, a to-be-punctured hole is a hole occupying 996 consecutive subcarriers.

The first field, the first subfield, and the PS160 field may indicate the first index corresponding to the first uplink resource. The first STA may determine the first index corresponding to the first uplink resource based on the three fields, to determine the position of the first uplink resource on the first channel based on the resource distribution manner corresponding to the first index. An optional manner in which the first STA determines the first index corresponding to the first uplink resource based on the three fields includes: The first STA determines the first index corresponding to the first uplink resource based on a third mapping relationship and the three fields. The third mapping relationship includes a mapping relationship between the three fields and a resource distribution manner index. The third mapping relationship may be predefined in a protocol, pre-configured in the AP and the STA, or configured by the AP for the STA. For example, as shown in Table 29, the third mapping relationship may include one or more items in Table 29, where one row in Table 29 is considered as one item.

Table 29

| 10-bit RU allocation subfield | | | | MRU size | Position of a hole occupying 996 subcarriers | MRU index |
|---|---|---|---|---|---|---|
| P320 | PS160 | B0 | B7 to B1 | | | |
| 0 | 0 | 0 | Y4 | 5×996 | 0 | 1 |
| 0 | 0 | 1 | | | 1 | 2 |
| 0 | 1 | 0 | | | 2 | 3 |
| 0 | 1 | 1 | | | Reserved | Reserved |
| 1 | 0 | 0 | | | 0 | 4 |
| 1 | 0 | 1 | | | 1 | 5 |
| 1 | 1 | 0 | | | 2 | 6 |
| 1 | 1 | 1 | | | Reserved | Reserved |

In Table 29, a hole occupying 996 subcarriers that is shown in a second to last column is the to-be-punctured hole. Optionally, the third mapping relationship may not include the second to last column in Table 28, namely, the column in which the position of the hole occupying 996 subcarriers is located. For descriptions of Table 29, refer to the descriptions of Table 27. The first index is determined by using the third mapping relationship, so that an index determining process can be simplified.

For another example, for the third mapping relationship shown in Table 29, the first index may satisfy the following relationship:

$$I=3\times P320+2\times PS160+B0+K-Y4+1 \text{ (Formula 34)}$$

For details about the parameters, refer to the foregoing descriptions. The first index is determined according to Formula 34, so that the third mapping relationship is not required. This helps save storage space.

Optionally, for the third mapping relationship shown in Table 29, the first STA may further determine the position of the hole occupying 996 subcarriers. For example, the position satisfies the following relationship:

$$2\times PS160+B0+K-Y4 \text{ (Formula 35)}$$

(2) The first uplink resource is an MRU occupying 5×996+484 subcarriers. In this case, the sixth number may be 484 subcarriers. In other words, a to-be-punctured hole is a hole occupying 484 consecutive subcarriers.

The first field, the first subfield, and the PS160 field may indicate the first index corresponding to the first uplink resource. The first STA may determine the first index corresponding to the first uplink resource based on the three fields, to determine the position of the first uplink resource on the first channel based on the resource distribution manner corresponding to the first index. An optional manner in which the first STA determines the first index corresponding to the first uplink resource based on the three fields includes: The first STA determines the first index corresponding to the first uplink resource based on a third mapping relationship and the three fields. The third mapping relationship includes a mapping relationship between the three fields and a resource distribution manner index. The third mapping relationship may be predefined in a protocol, pre-configured in the AP and the STA, or configured by the AP for the STA. For example, as shown in Table 30, the third mapping relationship may include one or more items in Table 30, where one row in Table 30 is considered as one item.

Table 30

| 10-bit RU allocation subfield | | | | MRU size | Position of a hole occupying 484 subcarriers | MRU index | MRU index |
|---|---|---|---|---|---|---|---|
| P320 | PS160 | B0 | B7 to B1 | | | | |
| 0 | 0 | 0 | Y5 and Y6 | 5×996+48-4 | 0 and 1 | 1 and 2 | MRU1 and MRU2 |
| 0 | 0 | 1 | | | 2 and 3 | 3 and 4 | MRU3 and MRU4 |
| 0 | 1 | 0 | | | 4 and 5 | 5 and 6 | MRU5 and MRU6 |
| 0 | 1 | 1 | | | Reserved | Reserved | Reserved |
| 1 | 0 | 0 | | | 0 and 1 | 7 and 8 | MRU7 and MRU8 |
| 1 | 0 | 1 | | | 2 and 3 | 9 and 10 | MRU9 and MRU10 |
| 1 | 1 | 0 | | | 4 and 5 | 11 and 12 | MRU11 and MRU12 |
| 1 | 1 | 1 | | | Reserved | Reserved | Reserved |

In Table 30, a hole occupying 484 subcarriers that is shown in a third to last column is the to-be-punctured hole. Optionally, the third mapping relationship may not include the third to last column in Table 30, namely, the column in which the position of the hole occupying 484 subcarriers is located. For more details about Table 30, refer to the descriptions of Table 31.

Alternatively, another optional manner in which the first STA determines the first index corresponding to the first uplink resource based on the first field, the RU allocation field, and the PS160 field includes: The first STA determines the first index corresponding to the first uplink resource based on a relationship that the index satisfies. For example, the first index may satisfy the following relationship:

$$I=6\times P320+4\times PS160+2\times B0+K-Y5+1 \text{ (Formula 36)}$$

Herein, I indicates the first index, PS320 indicates the value of the first field, PS160 indicates the value of the PS160 field, B0 indicates the value of the B0 field, and K indicates the value of the 7 bits B7 to B1. The first index is determined according to Formula 36, so that the third mapping relationship is not required. This helps save storage space.

Optionally, the first STA may further determine the position of the hole occupying 484 subcarriers. For example, the position satisfies the following relationship:

$$4\times PS160+2\times B0+K-Y5 \text{ (Formula 37)}$$

Optionally, Y1 to Y8 and Y11 to Y20 may be different values, so that the first STA can uniquely determine a corresponding index after determining corresponding Y.

5. The first uplink resource is an MRU occupying 6×996 subcarriers.

In this case, the first uplink resource fully occupies the first channel, and no hole needs to be punctured on the first channel.

The first field, the first subfield, and the PS160 field may indicate the first index corresponding to the first uplink resource. The first STA may determine the first index corresponding to the first uplink resource based on the three fields, to determine the position of the first uplink resource on the first channel based on the resource distribution manner corresponding to the first index. An optional manner in which the first STA determines the first index corresponding to the first uplink resource based on the three fields includes: The first STA determines the first index corresponding to the first uplink resource based on a third mapping relationship and the three fields. The third mapping relationship includes a mapping relationship between the three fields and a resource distribution manner index. The third mapping relationship may be predefined in a protocol, pre-configured in the AP and the STA, or configured by the AP for the STA. For example, in the third mapping relationship, when the value of the first field is 0, the value of the PS160 field is 0, and the value of B0 is 0, a corresponding index is 1, the index indicates the resource distribution manner of the MRU on the first channel, and other value combinations of the first field, the PS160 field, and B0 are all reserved bits.

S702: The first STA determines, based on the first field, the RU allocation field, and the PS160 field that are included in the trigger frame, the first uplink resource used to send the uplink data. This step has been described when S701 is described. For details, refer to the related content of S701.

S703: The first STA sends the uplink data on the first uplink resource. Correspondingly, the AP receives the uplink data on the first uplink resource.

The first STA may send a PPDU by using the first uplink resource. For example, the PPDU is an EHT TB PPDU. The PPDU may include the uplink data. For names, functions, and the like of fields included in the PPDU, refer to the related descriptions of S503 in the embodiment shown in FIG. 5.

Optionally, the method further includes S704: The AP sends an acknowledgment frame, and correspondingly, the first STA receives the acknowledgment frame. For more content of this step, refer to S504 in the embodiment shown in FIG. 5.

In conclusion, in this embodiment of this application, the first field is introduced into the trigger frame. The first field, the RU allocation field, and the PS160 field may indicate a position of the uplink resource allocated to the STA. This is equivalent to that a resource in a channel bandwidth greater than 320 MHz can be indicated. In this way, a format of the trigger frame can be adapted to the communication scenario with a larger channel bandwidth.

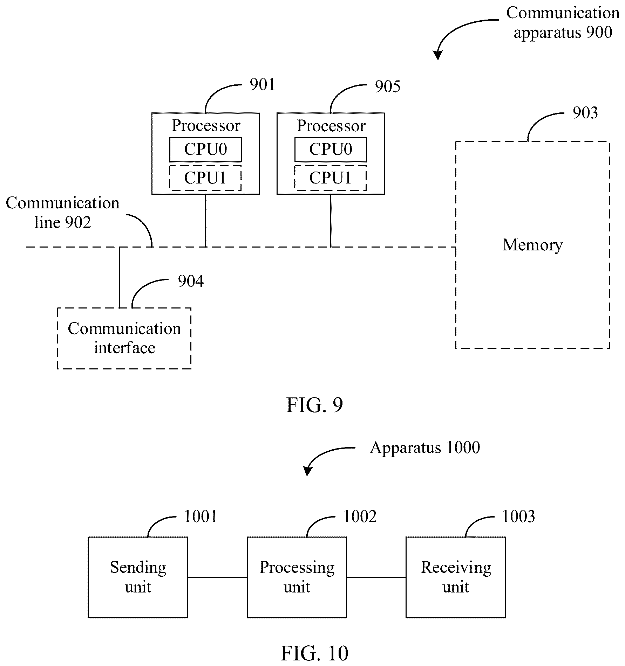

FIG. 9 is a diagram of a structure of a communication apparatus according to an embodiment of this application. The communication apparatus 900 may be the first STA in the embodiment shown in any one of FIG. 5 to FIG. 7 or a circuit system of the first STA, and is configured to implement the method corresponding to the first STA in the foregoing method embodiments. Alternatively, the communication apparatus 900 may be the AP in the embodiment shown in any one of FIG. 5 to FIG. 7 or a circuit system of the AP, and is configured to implement the method corresponding to the AP in the foregoing method embodiments. For example, a circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located at different physical positions, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. The memory 903, the communication line 902, and the communication interface 904 are all optional, and therefore are all represented by dashed lines in FIG. 9.

Optionally, the communication apparatus 900 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 900 through an antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 902 may include a path for transmitting information between the foregoing components.

The communication interface 904 uses any transceiver-type apparatus, to communicate with another device or a communication network like the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in an instruction or data structure form and that can be accessed by a computer. However, this is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls execution. The processor 901 is configured to execute the computer-executable instructions stored in the memory 903, to implement the steps performed by the first STA or the AP in the embodiment shown in any one of FIG. 5 to FIG. 7.

Optionally, the computer-executable instructions in this embodiment of this application may also be referred to as application program code. This is not specifically limited in embodiments of this application.

During specific implementation, in an embodiment, the processor 901 may include one or more CPUs, for example, a CPU0 and a CPU1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may refer to one or more devices, circuits, and/or processing cores configured to process data (for example, computer program instructions).

When the apparatus shown in FIG. 9 is a chip, for example, a chip of the first STA or a chip of the AP, the chip includes the processor 901 (and may further include the processor 905), the communication line 902, and the communication interface 904. Optionally, the chip may include the memory 903. Specifically, the communications interface 904 may be an input interface, a pin, a circuit, or the like. The memory 903 may be a register, a cache, or the like. The processor 901 and the processor 905 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used. For example, when each functional module is obtained through division based on each corresponding function, FIG. 10 is a diagram of an apparatus. The apparatus 1000 may be the first STA or the AP in the foregoing method embodiments, or a chip in the first STA or a chip in the AP. The apparatus 1000 includes a sending unit 1001, a processing unit 1002, and a receiving unit 1003.

It should be understood that the apparatus 1000 may be configured to implement the steps performed by the first STA or the AP in the communication method in embodiments of this application. For related features, refer to the embodiment shown in any one of FIG. 5 to FIG. 7. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is a chip or a circuit, functions/implementation processes of the sending unit 1001 and the receiving unit 1003 may alternatively be implemented by using a pin, a circuit, or the like.

This application further provides a computer-readable storage medium. The computer-readable storage medium stores a computer program or instructions. When the computer program or the instructions are run, the method performed by the first STA or the AP in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first STA or the AP in any one of the foregoing method embodiments.

An embodiment of this application further provides a processing apparatus, including a processor and an interface. The processor is configured to perform the method performed by the first STA or the AP in any one of the foregoing method embodiments.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk, (solid state disk, SSD)), or the like.

Various illustrative logic units and circuits described in embodiments of this application may implement or operate the described functions by a general-purpose processor, a digital signal processor (digital signal processor, DSP), an ASIC, a field programmable gate array (field programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

The steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor can read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the first STA and/or the AP may perform some or all of the steps in embodiments of this application. The steps or operations are merely examples. In embodiments of this application, other operations or variations of various operations may be further performed. In addition, the steps may be performed in a sequence different from a sequence presented in embodiments of this application, and not all the operations in embodiments of this application may be performed.

**Claims**

1. A communication method, applied to an access point device, wherein the method comprises:

   sending a trigger frame, wherein the trigger frame is used to allocate an uplink resource to at least one station device, a first uplink resource allocated to a first station device in the at least one station device is located on a first channel, a bandwidth of the first channel is 640 MHz, the first channel comprises a primary 320 MHz channel and a secondary 320 MHz channel, the trigger frame comprises a first field, and when a number of subcarriers occupied by the first uplink resource is less than or equal to $4\times996$, the first field indicates that the first uplink resource is located on the primary 320 MHz channel or the secondary 320 MHz channel; and
   receiving uplink data from the first station device on the first uplink resource.

2. The method according to claim 1, wherein the trigger frame further comprises a PS160 field, the primary 320 MHz channel comprises a primary 160 MHz channel and a secondary 160 MHz channel, and the secondary 320 MHz channel comprises a first 160 MHz channel and a second 160 MHz channel; and
   when the number of subcarriers occupied by the first uplink resource is less than or equal to $2\times996$, the first field and the PS160 field jointly indicate that the first uplink resource is located on one of the following channels: the primary 160 MHz channel, the secondary 160 MHz channel, the first 160 MHz channel, or the second 160 MHz channel.

3. The method according to claim 2, wherein the trigger frame further comprises a resource unit allocation field, the primary 160 MHz channel comprises a primary 80 MHz channel and a secondary 80 MHz channel, the secondary 160 MHz channel comprises a first 80 MHz channel and a second 80 MHz channel, the first 160 MHz channel comprises a third 80 MHz channel and a fourth 80 MHz channel, and the second 160 MHz channel comprises a fifth 80 MHz channel and a sixth 80 MHz channel; and
when the number of subcarriers occupied by the first uplink resource is less than or equal to 996, the first field, the PS160 field, and the resource unit allocation field jointly indicate that the first uplink resource is located on one of the following channels: the primary 80 MHz channel, the secondary 80 MHz channel, the first 80 MHz channel, the second 80 MHz channel, the third 80 MHz channel, the fourth 80 MHz channel, the fifth 80 MHz channel, or the sixth 80 MHz channel.

4. A communication method, applied to a first station device, wherein the method comprises:

receiving a trigger frame from an access point device;
determining, based on a first field comprised in the trigger frame, a first uplink resource used to send uplink data, wherein the first uplink resource is located on a first channel, a bandwidth of the first channel is 640 MHz, the first channel comprises a primary 320 MHz channel and a secondary 320 MHz channel, the trigger frame comprises the first field, and when a number of subcarriers occupied by the first uplink resource is less than or equal to $4\times996$, the first field indicates that the first uplink resource is located on the primary 320 MHz channel or the secondary 320 MHz channel; and
sending the uplink data on the first uplink resource.

5. The method according to claim 4, wherein the trigger frame further comprises a PS160 field, the primary 320 MHz channel comprises a primary 160 MHz channel and a secondary 160 MHz channel, and the secondary 320 MHz channel comprises a first 160 MHz channel and a second 160 MHz channel; and
determining, based on the first field comprised in the trigger frame, the first uplink resource used to send the uplink data comprises:

determining the first uplink resource based on the first field and the PS160 field, wherein
when the number of subcarriers occupied by the first uplink resource is less than or equal to $2\times996$, the first field and the PS160 field jointly indicate that the first uplink resource is located on one of the following channels: the primary 160 MHz channel, the secondary 160 MHz channel, the first 160 MHz channel, or the second 160 MHz channel.

6. The method according to claim 5, wherein the trigger frame further comprises a resource unit allocation field, the primary 160 MHz channel comprises a primary 80 MHz channel and a secondary 80 MHz channel, the secondary 160 MHz channel comprises a first 80 MHz channel and a second 80 MHz channel, the first 160 MHz channel comprises a third 80 MHz channel and a fourth 80 MHz channel, and the second 160 MHz channel comprises a fifth 80 MHz channel and a sixth 80 MHz channel; and
determining the first uplink resource based on the first field and the PS160 field comprises:

determining the first uplink resource based on the first field, the PS160 field, and the resource unit allocation field, wherein
when the number of subcarriers occupied by the first uplink resource is less than or equal to 996, the first field, the PS160 field, and the resource unit allocation field jointly indicate that the first uplink resource is located on one of the following channels: the primary 80 MHz channel, the secondary 80 MHz channel, the first 80 MHz channel, the second 80 MHz channel, the third 80 MHz channel, the fourth 80 MHz channel, the fifth 80 MHz channel, or the sixth 80 MHz channel.

7. The method according to claim 6, wherein determining the first uplink resource based on the first field, the resource unit allocation field, and the PS160 field comprises:

determining a fourth parameter, a third parameter, a second parameter, and a first parameter based on the first field, the resource unit allocation field, and the PS160 field, wherein the fourth parameter indicates an index of an 80 MHz channel on which the first uplink resource is located, the third parameter indicates that the first uplink resource is located on a first 320 MHz channel or a second 320 MHz channel, the third parameter and the second parameter jointly indicate that the first uplink resource is located on one of the following channels: the first 160 MHz channel, the second 160 MHz channel, a third 160 MHz channel, or a fourth 160 MHz channel, and the third parameter, the second parameter, and the first parameter jointly indicate that the first uplink resource is located on one of the following channels: the first 80 MHz channel, the second 80 MHz channel, the third 80 MHz channel, the fourth 80 MHz channel, the fifth 80 MHz channel, the sixth 80 MHz channel, a seventh 80 MHz channel, or an eighth 80 MHz channel, wherein

the first 320 MHz channel and the primary 320 MHz channel are a same channel, the second 320 MHz channel and the secondary 320 MHz channel are a same channel, the third 160 MHz channel and the primary 160 MHz channel are a same channel, the fourth 160 MHz channel and the secondary 160 MHz channel are a same channel, the seventh 80 MHz channel and the primary 80 MHz channel are a same channel, and the eighth 80 MHz channel and the secondary 80 MHz channel are a same channel; and

determining the first uplink resource based on the fourth parameter, the third parameter, the second parameter, and the first parameter.

8. The method according to claim 7, wherein determining the fourth parameter, the third parameter, the second parameter, and the first parameter based on the first field, the resource unit allocation field, and the PS160 field comprises:

the third parameter satisfies the following relationship: $X2 = C320 \oplus PS320$;
the second parameter satisfies the following relationship: $X1 = \overline{C160} \cdot PS160 + C160 \cdot (C160 \odot PS320)$;
the first parameter satisfies the following relationship: $X0 = \overline{C80} \cdot B0 + C80 \cdot [\overline{B0} \cdot (\overline{PS20\&PS160}) + B0 \cdot (PS320 \|\ PS160)]$; and
the fourth parameter satisfies the following relationship: $N = 4 \times X2 + 2 \times X1 + X0$, wherein
N indicates the fourth parameter, X2 indicates the third parameter, X1 indicates the second parameter, X0 indicates the first parameter, C320 indicates a relationship of the primary 320 MHz channel and the secondary 320 MHz channel with the first 320 MHz channel and the second 320 MHz channel, C160 indicates a relationship of the primary 160 MHz channel and the secondary 160 MHz channel with the third 160 MHz channel and the fourth 160 MHz channel, C80 indicates a relationship of the primary 80 MHz channel and the secondary 80 MHz channel with the seventh 80 MHz channel and the eighth 80 MHz channel, PS320 indicates a value of the first field, B0 indicates a value of a first subfield comprised in the resource unit allocation field, $\overline{Z}$ indicates performing a logical NOT operation on Z, $\oplus$ indicates an exclusive OR operation, $\odot$ indicates an exclusive NOR operation, & indicates a logical AND operation, and || indicates a logical OR operation.

9. The method according to claim 7, wherein determining the fourth parameter, the third parameter, the second parameter, and the first parameter based on the first field, the resource unit allocation field, and the PS160 field comprises:
determining the fourth parameter, the third parameter, the second parameter, and the first parameter based on a first mapping relationship, the first field, the resource unit allocation field, and the PS160 field, wherein the first mapping relationship comprises a mapping relationship between the first field, the resource unit allocation field, the PS160 field, the fourth parameter, the third parameter, the second parameter, and the first parameter.

10. The method according to claim 8 or 9, wherein the method further comprises:
determining, based on a second mapping relationship, the fourth parameter, the third parameter, the second parameter, and the first parameter, a resource unit index corresponding to the first uplink resource.

11. A communication method, applied to an access point device, wherein the method comprises:

sending a trigger frame, wherein the trigger frame is used to allocate an uplink resource to at least one station device, a first uplink resource allocated to a first station device in the at least one station device is located on a first channel, a bandwidth of the first channel is 480 MHz, the first channel comprises a primary 320 MHz channel and a first secondary 160 MHz channel, the primary 320 MHz channel comprises a primary 160 MHz channel and a second secondary 160 MHz channel, the trigger frame comprises a first field and a PS160 field, and when a number of subcarriers occupied by the first uplink resource is less than or equal to $2 \times 996$, the first field indicates that the first uplink resource is located on the primary 320 MHz channel or the first secondary 160 MHz channel, and the first field and the PS160 field jointly indicate that the first uplink resource is located on the primary 160 MHz channel or the second secondary 160 MHz channel; and
receiving uplink data from the first station device on the first uplink resource.

12. The method according to claim 11, wherein the trigger frame further comprises a resource unit allocation field, the primary 160 MHz channel comprises a primary 80 MHz channel and a secondary 80 MHz channel, the second secondary 160 MHz channel comprises a first 80 MHz channel and a second 80 MHz channel, and the first secondary 160 MHz channel comprises a third 80 MHz channel and a fourth 80 MHz channel; and
when the number of subcarriers occupied by the first uplink resource is less than or equal to 996, the first field, the PS160 field, and the resource unit allocation field jointly indicate that the first uplink resource is located on one of the following channels: the primary 80 MHz channel, the secondary 80 MHz channel, the first 80 MHz channel, the second 80 MHz channel, the third 80 MHz channel, or the fourth 80 MHz channel.

13. A communication method, applied to a first station device, wherein the method comprises:

receiving a trigger frame from an access point device;
determining, based on a first field and a PS160 field that are comprised in the trigger frame, a first uplink resource used to send uplink data, wherein the first uplink resource is located on a first channel, a bandwidth of the first channel is 480 MHz, the first channel comprises a primary 320 MHz channel and a first secondary 160 MHz channel, the primary 320 MHz channel comprises a primary 160 MHz channel and a second secondary 160 MHz channel, the trigger frame comprises the first field and the PS160 field, and when a number of subcarriers occupied by the first uplink resource is less than or equal to $2\times996$, the first field indicates that the first uplink resource is located on the primary 320 MHz channel or the first secondary 160 MHz channel, and the first field and the PS160 field jointly indicate that the first uplink resource is located on the primary 160 MHz channel or the second secondary 160 MHz channel; and
sending the uplink data on the first uplink resource.

14. The method according to claim 13, wherein the trigger frame further comprises a resource unit allocation field, the primary 160 MHz channel comprises a primary 80 MHz channel and a secondary 80 MHz channel, the second secondary 160 MHz channel comprises a first 80 MHz channel and a second 80 MHz channel, and the first secondary 160 MHz channel comprises a third 80 MHz channel and a fourth 80 MHz channel; and
determining, based on the first field and the PS160 field that are comprised in the trigger frame, the first uplink resource used to send the uplink data comprises:

determining the first uplink resource based on the first field, the PS160 field, and the resource unit allocation field, wherein
when the number of subcarriers occupied by the first uplink resource is less than or equal to 996, the first field, the PS160 field, and the resource unit allocation field jointly indicate that the first uplink resource is located on one of the following channels: the primary 80 MHz channel, the secondary 80 MHz channel, the first 80 MHz channel, the second 80 MHz channel, the third 80 MHz channel, or the fourth 80 MHz channel.

15. The method according to claim 14, wherein determining the first uplink resource based on the first field, the resource unit allocation field, and the PS160 field comprises:

determining a fourth parameter, a third parameter, a second parameter, and a first parameter based on the first field, the resource unit allocation field, and the PS160 field, wherein the fourth parameter indicates an index of an 80 MHz channel on which the first uplink resource is located, the third parameter and the second parameter jointly indicate that the first uplink resource is located on one of the following channels: a first 160 MHz channel, a second 160 MHz channel, or a third 160 MHz channel, and the third parameter, the second parameter, and the first parameter jointly indicate that the first uplink resource is located on one of the following channels: the first 80 MHz channel, the second 80 MHz channel, the third 80 MHz channel, the fourth 80 MHz channel, a fifth 80 MHz channel, or a sixth 80 MHz channel, wherein
the first 160 MHz channel and the primary 160 MHz channel are a same channel, the second 160 MHz channel and the second secondary 160 MHz channel are a same channel, the third 160 MHz channel and the first secondary 160 MHz channel are a same channel, the fifth 80 MHz channel and the primary 80 MHz channel are a same channel, and the sixth 80 MHz channel and the secondary 80 MHz channel are a same channel; and
determining the first uplink resource based on the fourth parameter, the third parameter, the second parameter, and the first parameter.

16. The method according to claim 15, wherein determining the fourth parameter, the third parameter, the second parameter, and the first parameter based on the first field, the resource unit allocation field, and the PS160 field comprises:

the third parameter satisfies the following relationship: $X2 = \overline{C1} \cdot P320 + C1 \cdot [\overline{C2} \cdot (\overline{P320}\&\overline{PS160}) + C2 \cdot PS160]$;

the second parameter satisfies the following relationship: X1= $\overline{C2}$ · PS160 + C2 · ($\overline{P320\&PS160}$);

the first parameter satisfies the following relationship: X0= $\overline{C80}$ · B0 + C80 · [$\overline{B0}$ · ($\overline{P320\&PS160}$) + B0 · (P320|| PS160)]; and

the fourth parameter satisfies the following relationship: N=4×X2+2×X1+X0, wherein

N indicates the fourth parameter, X2 indicates the third parameter, X1 indicates the second parameter, X0 indicates the first parameter, C1 and C2 jointly indicate a relationship of the primary 160 MHz channel, the second secondary 160 MHz channel, and the first secondary 160 MHz channel with the first 160 MHz channel, the second 160 MHz channel, and the third 160 MHz channel, C80 indicates a relationship of the primary 80 MHz channel and the secondary 80 MHz channel with the fifth 80 MHz channel and the sixth 80 MHz channel, P320 indicates a value of the first field, B0 indicates a value of a first subfield comprised in the resource unit allocation field, $\overline{Z}$ indicates performing a logical NOT operation on $Z$, ⊕ indicates an exclusive OR operation, ⊙ indicates an exclusive NOR operation, & indicates a logical AND operation, and || indicates a logical OR operation.

17. The method according to claim 15, wherein determining the fourth parameter, the third parameter, the second parameter, and the first parameter based on the first field, the resource unit allocation field, and the PS160 field comprises:

determining the fourth parameter, the third parameter, the second parameter, and the first parameter based on a first mapping relationship, the first field, the resource unit allocation field, and the PS160 field, wherein the first mapping relationship comprises a mapping relationship between the first field, the resource unit allocation field, the PS160 field, the fourth parameter, the third parameter, the second parameter, and the first parameter.

18. The method according to claim 17, wherein the method further comprises:

determining, based on a second mapping relationship, the fourth parameter, the third parameter, the second parameter, and the first parameter, a resource unit index corresponding to the first uplink resource.

19. The method according to any one of claims 13 to 18, wherein the first field is comprised in a first user information field in the trigger frame, and the first user information field further comprises an association identifier of the first station device.

20. The method according to claim 19, wherein

the first field occupies a reserved bit in the first user information field; or
the first field is located in a spatial stream allocation/random access resource unit information field comprised in the first user information field.

21. The method according to claim 20, wherein the reserved bit comprises a 26th bit in the first user information field.

22. A communication method, applied to an access point device, wherein the method comprises:

sending a trigger frame, wherein the trigger frame is used to allocate an uplink resource to at least one station device, a first uplink resource allocated to a first station device in the at least one station device is located on a first channel, and a bandwidth of the first channel is greater than 320 MHz, wherein
the trigger frame comprises a first field, a resource unit allocation field, and a PS160 field, and the first field, the resource unit allocation field, and the PS160 field indicate a resource that is not occupied by the first uplink resource on the first channel, to determine a position of the first uplink resource on the first channel.

23. The method according to claim 22, wherein

the first field, the resource unit allocation field, and the PS160 field indicate a first index corresponding to the first uplink resource, and a resource distribution manner corresponding to the first index is used to determine the position of the first uplink resource on the first channel.

24. The method according to claim 22 or 23, wherein the bandwidth of the first channel is 640 MHz.

25. The method according to claim 24, wherein the first uplink resource is a multiple resource unit MRU occupying 4×996+484 subcarriers, and the first uplink resource does not occupy 2×996 consecutive subcarriers, 996 consecutive subcarriers, and 484 consecutive subcarriers on the first channel; and

the first field indicates that the 2×996 subcarriers are located in a low-frequency 320 MHz area or a high-frequency 320 MHz area of the first channel, the PS160 field indicates that the 996 subcarriers are located in a low-frequency 240 MHz area or a high-frequency 240 MHz area of the first channel excluding a position in which the 2×996 subcarriers are located, and a first subfield comprised in the resource unit allocation field indicates that the 484 subcarriers are located in a low-frequency 200 MHz area or a high-frequency 200 MHz area of the first channel excluding positions in which the 2×996 subcarriers and the 996 subcarriers are located.

26. The method according to claim 24, wherein the first uplink resource is an MRU occupying 5×996 subcarriers, an MRU occupying 5×996+484 subcarriers, or an MRU occupying 6×996+484 subcarriers, and the first uplink resource does not occupy a first number of consecutive subcarriers and a second number of consecutive subcarriers on the first channel; and

the first field indicates that the first number of subcarriers are located in a low-frequency 320 MHz area or a high-frequency 320 MHz area of the first channel, and the PS160 field and a first subfield comprised in the resource unit allocation field jointly indicate a first frequency domain unit in which the second number of subcarriers are located on the first channel, or the PS160 field and a first subfield comprised in the resource unit allocation field jointly indicate a first frequency domain unit in which the second number of subcarriers are located in a remaining area other than a position in which the first number of subcarriers are located on the first channel, wherein the first channel comprises four first frequency domain units, and the first frequency domain unit occupies 2×996 consecutive subcarriers.

27. The method according to claim 26, wherein

the first uplink resource is the MRU occupying 5×996 subcarriers, the first number is 2×996, and the second number is 996;
the first uplink resource is the MRU occupying 5×996+484 subcarriers, the first number is 2×996, and the second number is 484; or
the first uplink resource is the MRU occupying 6×996+484 subcarriers, the first number is 996, and the second number is 484.

28. The method according to claim 24, wherein the first uplink resource is an MRU occupying 6×996 subcarriers, an MRU occupying 7×996 subcarriers, or an MRU occupying 7×996+484 subcarriers, and the first uplink resource does not occupy a third number of consecutive subcarriers on the first channel; and

at least two of the first field, a first subfield in the resource allocation resource, or the PS160 field jointly indicate a first frequency domain unit in which the third number of subcarriers are located, wherein the first channel comprises four first frequency domain units, and the first frequency domain unit occupies 2×996 consecutive subcarriers.

29. The method according to claim 28, wherein

the first uplink resource is the MRU occupying 6×996 subcarriers, and the third number is 2×996;
the first uplink resource is the MRU occupying 7×996 subcarriers, and the third number is 996; or
the first uplink resource is the MRU occupying 7×996+484 subcarriers, and the third number is 484.

30. The method according to claim 24, wherein the first uplink resource is an MRU occupying 8×996 subcarriers; and the first field, a first subfield in the resource allocation resource, and the PS160 field jointly indicate the position of the first uplink resource on the first channel.

31. The method according to claim 22 or 23, wherein the bandwidth of the first channel is 480 MHz.

32. The method according to claim 31, wherein the first uplink resource is an MRU occupying 2×996+484 subcarriers, and the first uplink resource does not occupy 2×996 consecutive subcarriers, 996 consecutive subcarriers, and 484 consecutive subcarriers on the first channel; and

the first field indicates that the 2×996 subcarriers are located in a low-frequency 240 MHz area or a high-frequency 240 MHz area of the first channel, the PS160 field indicates that the 996 subcarriers are located in a low-frequency 160 MHz area or a high-frequency 160 MHz area of the first channel excluding a position in which the 2×996 subcarriers are located, and a first subfield comprised in the resource unit allocation field indicates that the 484 subcarriers are located in a low-frequency 120 MHz area or a high-frequency 120 MHz area of the first channel excluding positions in which the 2×996 subcarriers and the 996 subcarriers are located.

33. The method according to claim 31, wherein the first uplink resource is an MRU occupying 3×996 subcarriers or an MRU occupying 3×996+484 subcarriers, and the first uplink resource does not occupy a fourth number of consecutive subcarriers and a fifth number of consecutive subcarriers on the first channel; and

the first field indicates that the fourth number of subcarriers are located in a low-frequency 240 MHz area or a high-frequency 240 MHz area of the first channel, and the PS160 field and a first subfield comprised in the resource unit allocation field jointly indicate a second frequency domain unit in which the fifth number of subcarriers are located in a remaining area other than a position in which the fourth number of subcarriers are located on the first channel, wherein the first channel comprises six second frequency domain units, and the second frequency domain unit occupies 996 consecutive subcarriers.

34. The method according to claim 31, wherein

the first uplink resource is the MRU occupying $3\times996$ subcarriers, the fourth number is $2\times996$, and the fifth number is 996; or
the first uplink resource is the MRU occupying $3\times996+484$ subcarriers, the fourth number is $2\times996$, and the fifth number is 484.

35. The method according to claim 31, wherein the first uplink resource is an MRU occupying $4\times996+484$ subcarriers, and the first uplink resource does not occupy 996 consecutive subcarriers and 484 consecutive subcarriers on the first channel;

the first field indicates that the 996 subcarriers are located in a low-frequency 240 MHz area or a high-frequency 240 MHz area of the first channel, and the PS160 field and a first subfield comprised in the resource unit allocation field jointly indicate a first frequency domain unit in which the 484 subcarriers are located on the first channel, or the PS160 field and a first subfield comprised in the resource unit allocation field jointly indicate a third frequency domain unit in which the 484 subcarriers are located in a remaining area other than a position of the 996 subcarriers on the first channel; and
the first frequency domain unit occupies $2\times996$ consecutive subcarriers; and/or the third frequency domain unit occupies $3\times484$ consecutive subcarriers, and the first channel comprises four third frequency domain units.

36. The method according to claim 31, wherein the first uplink resource is an MRU occupying $4\times996$ subcarriers, a resource unit RU occupying $4\times996$ subcarriers, an MRU occupying $5\times996$ subcarriers, or an MRU occupying $5\times996+484$ subcarriers, and the first uplink resource does not occupy a sixth number of consecutive subcarriers on the first channel; and
the first field, a first subfield in the resource allocation resource, and the PS160 field jointly indicate a position of the sixth number of subcarriers on the first channel.

37. The method according to claim 31, wherein the first uplink resource is an MRU occupying $5\times996$ subcarriers or an MRU occupying $5\times996+484$ subcarriers, and the first uplink resource does not occupy a sixth number of consecutive subcarriers on the first channel; and
the first field indicates that the 996 subcarriers are located in a low-frequency 240 MHz area or a high-frequency 240 MHz area of the first channel, and a first subfield in the resource allocation resource and the PS160 field jointly indicate a second frequency domain unit in which the sixth number of subcarriers are located in the eighth area, wherein the first channel comprises six second frequency domain units, and the second frequency domain unit occupies 996 consecutive subcarriers.

38. The method according to claim 36 or 37, wherein

the first uplink resource is the MRU occupying $4\times996$ subcarriers or the RU occupying $4\times996$ subcarriers, and the sixth number is $2\times996$;
the first uplink resource is the MRU occupying $5\times996$ subcarriers, and the sixth number is 996; or
the first uplink resource is the MRU occupying $5\times996+484$ subcarriers, and the sixth number is 484.

39. The method according to claim 31, wherein the first uplink resource is an MRU occupying $6\times996$ subcarriers; and the first field, a first subfield in the resource allocation resource, and the PS160 field jointly indicate the position of the first uplink resource on the first channel.

40. A communication method, applied to a first station device, wherein the method comprises:

receiving a trigger frame from an access point device;
determining, based on a first field, a resource unit allocation field, and a PS160 field that are comprised in the trigger frame, a first uplink resource used to send uplink data, wherein the first field, the resource unit allocation field, and the PS160 field indicate a resource that is not occupied by the first uplink resource on a first channel, and a bandwidth of the first channel is greater than 320 MHz; and

sending the uplink data on the first uplink resource.

41. The method according to claim 40, wherein determining, based on the first field, the resource unit allocation field, and the PS160 field that are comprised in the trigger frame, the first uplink resource used to send the uplink data comprises:

determining a first index corresponding to the first uplink resource based on the first field, the resource unit allocation field, and the PS160 field; and

determining a position of the first uplink resource on the first channel based on a resource distribution manner corresponding to the first index.

42. The method according to claim 41, wherein determining the first index corresponding to the first uplink resource based on the first field, the resource unit allocation field, and the PS160 field comprises:
determining the first index corresponding to the first uplink resource based on a third mapping relationship, the first field, the resource unit allocation field, and the PS160 field, wherein the third mapping relationship comprises a mapping relationship between the first field, the resource unit allocation field, the PS160 field, and a resource distribution manner index.

43. The method according to claim 40 or 41, wherein the bandwidth of the first channel is 640 MHz.

44. The method according to claim 43, wherein determining the first index corresponding to the first uplink resource based on the first field, the resource unit allocation field, and the PS160 field comprises:

the first index satisfies the following relationship:

$$20 \times PS320 + 10 \times PS160 + 5 \times B0 + K - Y1 + 1;$$

$$6 \times PS320 + 4 \times PS160 + 2 \times B0 + K - Y6 + 1;$$

$$12 \times PS320 + 8 \times PS160 + 4 \times B0 + K - Y8 + 1;$$

$$14 \times PS320 + 8 \times PS160 + 4 \times B0 + K - Y13 + 1;$$

$$2 \times PS320 + PS160 + K - Y12 + 1;$$

$$4 \times PS320 + 2 \times PS160 + B0 + K - Y17 + 1;$$

$$8 \times PS320 + 4 \times PS160 + 2 \times B0 + K - Y18 + 1;$$

or

$$K - Y20 + 1,$$

wherein
PS320 indicates a value of the first field, B0 indicates a value of a first subfield comprised in the resource unit allocation field, K indicates a value of a second subfield comprised in the resource unit allocation unit, Y1, Y6, Y8, Y13, Y12, Y17, Y18, and Y20 all indicate preset values of the second subfield, and the values indicated by Y1, Y6, Y8, Y13, Y12, Y17, Y18 and Y20 are all integers greater than 106 and less than or equal to 127.

45. The method according to claim 43, wherein the bandwidth of the first channel is 480 MHz.

46. The method according to claim 45, wherein determining the first index corresponding to the first uplink resource based on the first field, the resource unit allocation field, and the PS160 field comprises:

the first index satisfies the following relationship:

$$12\times P320+4\times PS160+4\times B0+K-100+1;$$

$$4\times P320+2\times PS160+B0+K-104+1;$$

$$8\times P320+4\times PS160+2\times B0+K-105+1;$$

$$10\times P320+6\times PS160+3\times B0+K-Y1+1;$$

$$10\times P320+8\times PS160+4\times B0+K-Y0+1;$$

$$2\times P320+PS160+K-69;$$

$$4\times P320+2\times PS160+B0+K-Y4+1;$$

$$3\times P320+2\times PS160+B0+K-Y4+1;$$

$$8\times P320+4\times PS160+2\times B0+K-Y5+1;$$

or

$$6\times P320+4\times PS160+2\times B0+K-Y5+1,$$

wherein
P320 indicates a value of the first field, B0 indicates a value of a first subfield comprised in the resource unit allocation field, K indicates a value of a second subfield comprised in the resource unit allocation unit, Y1, Y0, Y4, and Y5 all indicate preset values of the second subfield, and the values indicated by Y1, Y0, Y4 and Y5 are all integers greater than 106 and less than or equal to 127.

47. A communication apparatus, wherein the communication apparatus comprises a processing unit and a transceiver unit, and the processing unit is coupled to the transceiver unit, to perform the method according to any one of claims 1 to 3, or perform the method according to any one of claims 4 to 10, or perform the method according to claim 11 or 12, or perform the method according to any one of claims 13 to 21, or perform the method according to any one of claims 22 to 39, or perform the method according to any one of claims 40 to 46.

48. A communication apparatus, wherein the communication apparatus comprises a processor and a memory, the memory is configured to store a computer program, and the processor is configured to execute the computer program stored in the memory, so that the communication apparatus performs the method according to any one of claims 1 to 3, or the communication apparatus performs the method according to any one of claims 4 to 10, or the communication apparatus performs the method according to claim 11 or 12, or the communication apparatus performs the method according to any one of claims 13 to 21, or the communication apparatus performs the method according to any one of claims 22 to 39, or the communication apparatus performs the method according to any one of claims 40 to 46.

49. A computer-readable storage medium, wherein the computer-readable storage medium is configured to store a computer program, and when the computer program is run on a computer, the computer is enabled to perform the method according to any one of claims 1 to 3, or the computer is enabled to perform the method according to any one of claims 4 to 10, or the computer is enabled to perform the method according to claim 11 or 12, or the computer is enabled to perform the method according to any one of claims 13 to 21, or the computer is enabled to perform the method according to any one of claims 22 to 39, or the computer is enabled to perform the method according to any one of claims 40 to 46.

50. A computer program product, wherein the computer program product comprises a computer program, and when the computer program is run on a computer, the computer is enabled to perform the method according to any one of claims 1 to 3, or the computer is enabled to perform the method according to any one of claims 4 to 10, or the computer is enabled to perform the method according to claim 11 or 12, or the computer is enabled to perform the method according to any one of claims 13 to 21, or the computer is enabled to perform the method according to any one of claims 22 to 39, or the computer is enabled to perform the method according to any one of claims 40 to 46.

51. A chip system, wherein the chip system comprises:
a processor and an interface, wherein the processor is configured to invoke instructions from the interface and run the instructions, and when the processor executes the instructions, the method according to any one of claims 1 to 3 is implemented, or the method according to any one of claims 4 to 10 is implemented, or the method according to claim 11 or 12 is implemented, or the method according to any one of claims 13 to 21 is implemented, or the method according to any one of claims 22 to 39 is implemented, or the method according to any one of claims 40 to 46 is implemented.

52. A communication system, wherein the communication system comprises a first station device and an access point device, wherein the access point device is configured to perform the method according to any one of claims 1 to 3, and the first station device is configured to perform the method according to any one of claims 4 to 10; or the access point device is configured to perform the method according to claim 11 or 12, and the first station device is configured to perform the method according to any one of claims 13 to 21; or the access point device is configured to perform the method according to any one of claims 22 to 39, and the first station device is configured to perform the method according to any one of claims 40 to 46.

Access point (AP)

Station 1
(STA1)

Station 2
(STA2)

FIG. 1

User information list field

| Frame control | Duration | Receive address | Transmit address | Common information | User information | ... | User information | Padding | Frame check sequence |
|---|---|---|---|---|---|---|---|---|---|

FIG. 2

FIG. 3

| B0      B11 | B12      B19 | B20 | B21      B24 | B25 | B26      B31 | B32      B38 | B39 | |
|---|---|---|---|---|---|---|---|---|
| Association identifier | Resource unit allocation | Uplink FEC coding type | Uplink EHT-MCS | Reserved | Spatial stream allocation/ Random access RU information | Uplink target received power | PS160 | Trigger dependent user information |

Number of bits

| 12 | 8 | 1 | 4 | 1 | 6 | 7 | 1 | Variable |
|---|---|---|---|---|---|---|---|---|

FIG. 4

EP 4 709 003 A1

```
┌─────────────┐                                              ┌─────────────┐
│  First STA  │                                              │     AP      │
└──────┬──────┘                                              └──────┬──────┘
       │                                                            │
       │        S501: Trigger frame (used to allocate a first       │
       │     uplink resource on a first channel, where a bandwidth  │
       │     of the first channel is 640 MHz, and the trigger frame │
       │     includes a first field to indicate that the first      │
       │     uplink resource is located on a primary 320 MHz        │
       │     channel or a secondary 320 MHz channel of the first    │
       │◄────────────────────── channel) ──────────────────────────│
       │                                                            │
┌──────┴──────────┐                                                 │
│ S502: Determine,│                                                 │
│ based on the    │                                                 │
│ first field, the│                                                 │
│ first uplink    │                                                 │
│ resource used to│                                                 │
│ send uplink data│                                                 │
└──────┬──────────┘                                                 │
       │   S503: Uplink data (transmitted on the first uplink       │
       │────────────────────── resource) ─────────────────────────►│
       │           S504: Acknowledgment frame                       │
       │◄╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌│
       │                                                            │
```

FIG. 5

```
┌─────────────┐                                              ┌─────────────┐
│  First STA  │                                              │     AP      │
└──────┬──────┘                                              └──────┬──────┘
       │                                                            │
       │      S601: Trigger frame (used to allocate a first uplink  │
       │    resource on a first channel, where a bandwidth of the   │
       │    first channel is 480 MHz, the trigger frame includes a  │
       │    first field to indicate that the first uplink resource  │
       │    is located on a primary 320 MHz channel or a first      │
       │    secondary 160 MHz channel of the first channel, and the │
       │    first field and a PS160 field that are included in the  │
       │    trigger frame jointly indicate that the first uplink    │
       │    resource is located on a primary 160 MHz channel or a   │
       │    second secondary 160 MHz channel of the primary 320 MHz │
       │◄────────────────────── channel) ──────────────────────────│
       │                                                            │
┌──────┴──────────┐                                                 │
│ S602: Determine,│                                                 │
│ based on the    │                                                 │
│ first field and │                                                 │
│ the PS160 field,│                                                 │
│ the first uplink│                                                 │
│ resource used to│                                                 │
│ send uplink data│                                                 │
└──────┬──────────┘                                                 │
       │   S603: Uplink data (transmitted on the first uplink       │
       │────────────────────── resource) ─────────────────────────►│
       │           S604: Acknowledgment frame                       │
       │◄╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌╌│
       │                                                            │
```

FIG. 6

| First STA | | AP |
|---|---|---|

S701: Trigger frame (used to allocate a first uplink resource on a first channel, where a bandwidth of the first channel is greater than 320 MHz, and a first field, a resource unit allocation field, and a PS160 field that are included in the trigger frame indicate a resource that is not occupied by the first uplink resource on the first channel)

S702: Determine, based on the first field, the resource unit allocation field, and the PS160 field, the first uplink resource used to send uplink data

S703: Uplink data (transmitted on the first uplink resource)

S704: Acknowledgment frame

FIG. 7

FIG. 8A-a

FIG. 8A-b

FIG. 8B

EP 4 709 003 A1

FIG. 8C

FIG. 8D

FIG. 8E

FIG. 8F

MRU1
MRU2
MRU3
MRU4
MRU5
MRU6
MRU7
MRU8
MRU9
MRU10
MRU11
MRU12
MRU13
MRU14
MRU15
MRU16

FIG. 8G

This is a figure (FIG. 8H) showing a resource unit allocation table.

|        | Column 1 | Column 2 | Column 3 | Column 4 | Column 5 | Column 6 |
|--------|----------|----------|----------|----------|----------|----------|
|        | 484  484 | 484  484 | 484  484 | 484  484 | 484  484 | 484  484 |
|        | 996      | 996      | 996      | 996      | 996      | 996      |
|        | 2×996    |          | 2×996    |          | 2×996    |          |
| MRU1   | 484  484 | 996      | 996      | 996      | 2×996    |          |
| MRU2   | 484  484 | 996      | 996      | 996      | 2×996    |          |
| MRU3   | 996      | 484  484 | 996      | 996      | 2×996    |          |
| MRU4   | 996      | 484  484 | 996      | 996      | 2×996    |          |
| MRU5   | 996      | 996      | 484  484 | 996      | 2×996    |          |
| MRU6   | 996      | 996      | 484  484 | 996      | 2×996    |          |
| MRU7   | 996      | 484  484 | 996      | 996      | 2×996    |          |
| MRU8   | 996      | 484  484 | 996      | 996      | 2×996    |          |
| MRU9   | 996      | 996      | 484  484 | 996      | 2×996    |          |
| MRU10  | 996      | 996      | 484  484 | 996      | 2×996    |          |
| MRU11  | 996      | 996      | 996      | 484  484 | 2×996    |          |
| MRU12  | 996      | 996      | 996      | 484  484 | 2×996    |          |
| MRU13  | 2×996    |          | 484  484 | 996      | 996      | 996      |
| MRU14  | 2×996    |          | 484  484 | 996      | 996      | 996      |
| MRU15  | 2×996    |          | 996      | 484  484 | 996      | 996      |
| MRU16  | 2×996    |          | 996      | 484  484 | 996      | 996      |
| MRU17  | 2×996    |          | 996      | 996      | 484  484 | 996      |
| MRU18  | 2×996    |          | 996      | 996      | 484  484 | 996      |
| MRU19  | 2×996    |          | 996      | 484  484 | 996      | 996      |
| MRU20  | 2×996    |          | 996      | 484  484 | 996      | 996      |
| MRU21  | 2×996    |          | 996      | 996      | 484  484 | 996      |
| MRU22  | 2×996    |          | 996      | 996      | 484  484 | 996      |
| MRU23  | 2×996    |          | 996      | 996      | 996      | 484  484 |
| MRU24  | 2×996    |          | 996      | 996      | 996      | 484  484 |

FIG. 8H

FIG. 8I

FIG. 8J

FIG. 8K

FIG. 8L

FIG. 8M

FIG. 8N

FIG. 8O

Communication
apparatus 900

901          905          903

| Processor | Processor |
| CPU0 | CPU0 |
| CPU1 | CPU1 |

Communication
line 902

Memory

904

Communication
interface

FIG. 9

Apparatus 1000

1001          1002          1003

| Sending unit | Processing unit | Receiving unit |

FIG. 10

## INTERNATIONAL SEARCH REPORT

| International application No. |
|---|
| **PCT/CN2024/072122** |

| **A.** | **CLASSIFICATION OF SUBJECT MATTER** |
|---|---|

H04W 72/0453(2023.01)i

According to International Patent Classification (IPC) or to both national classification and IPC

| **B.** | **FIELDS SEARCHED** |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

IEEE, 3GPP, CNTXT, USTXT, EPTXT, WOTXT, ENTXTC: 488, 996, 时, 触发帧, 从, 辅, 接入点, 上行, 信道, 站, 主, 资源, 字段, 160, 320, MHZ, 480, 640, *996, AP, channel, MRU, primary, PS160, resource, RU, secondary, STA, TF, trigger, frame, UL, uplink, up-link, ×996

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | WO 2022183845 A1 (GUANGDONG OPPO MOBILE TELECOMMUNICATIONS CORP., LTD.) 09 September 2022 (2022-09-09) description, paragraphs [34]-[121] | 1-52 |
| A | CN 113055894 A (INTEL CORP.) 29 June 2021 (2021-06-29) entire document | 1-52 |
| A | CN 114223310 A (LG ELECTRONICS, INC.) 22 March 2022 (2022-03-22) entire document | 1-52 |
| A | WO 2022122006 A1 (HUAWEI TECHNOLOGIES CO., LTD.) 16 June 2022 (2022-06-16) entire document | 1-52 |
| A | WO 2023287350 A2 (PANASONIC INTELLECTUAL PROPERTY CORPORATION OF AMERICA) 19 January 2023 (2023-01-19) entire document | 1-52 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 March 2024** | **01 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | International application No. |
|---|---|---|
| Information on patent family members | | PCT/CN2024/072122 |

| Patent document cited in search report | | | Publication date (day/month/year) | Patent family member(s) | | | Publication date (day/month/year) |
|---|---|---|---|---|---|---|---|
| WO | 2022183845 | A1 | 09 September 2022 | EP | 4298846 | A1 | 03 January 2024 |
| | | | | US | 2023413367 | A1 | 21 December 2023 |
| | | | | CN | 116918427 | A | 20 October 2023 |
| CN | 113055894 | A | 29 June 2021 | US | 2020137727 | A1 | 30 April 2020 |
| CN | 114223310 | A | 22 March 2022 | KR | 20220024498 | A | 03 March 2022 |
| | | | | WO | 2021010606 | A1 | 21 January 2021 |
| | | | | US | 2022240333 | A1 | 28 July 2022 |
| | | | | JP | 2022540876 | A | 20 September 2022 |
| | | | | EP | 3986023 | A1 | 20 April 2022 |
| WO | 2022122006 | A1 | 16 June 2022 | US | 2023328773 | A1 | 12 October 2023 |
| | | | | EP | 4247085 | A1 | 20 September 2023 |
| | | | | CN | 114629607 | A | 14 June 2022 |
| WO | 2023287350 | A2 | 19 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310608839